(19)

Europäisches
Patentamt
European
Patent Office
Office européen
des brevets

(11)  **EP 4 521 774 A1**

(12)  **EUROPEAN PATENT APPLICATION**
published in accordance with Art. 153(4) EPC

(43) Date of publication:
**12.03.2025 Bulletin 2025/11**

(21) Application number: **23826373.5**

(22) Date of filing: **20.06.2023**

(51) International Patent Classification (IPC):
**H04R 1/10** (2006.01)

(52) Cooperative Patent Classification (CPC):
**H04R 1/10; H04R 3/00; Y02E 60/10**

(86) International application number:
**PCT/CN2023/101199**

(87) International publication number:
**WO 2023/246725 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.06.2022 CN 202210705712
19.08.2022 CN 202211000419**

(71) Applicant: **Huawei Technologies Co., Ltd.
Shenzhen, Guangdong 518129 (CN)**

(72) Inventors:
• **DONG, Li
Shenzhen, Guangdong 518129 (CN)**
• **PENG, Yong
Shenzhen, Guangdong 518129 (CN)**
• **ZHANG, Guang
Shenzhen, Guangdong 518129 (CN)**

(74) Representative: **Maiwald GmbH
Engineering
Elisenhof
Elisenstrasse 3
80335 München (DE)**

(54)  **EARPHONE AND EARPHONE ASSEMBLY**

(57)  This application discloses an earphone and an earphone assembly. The earphone includes a housing, a speaker, a main circuit board, and a battery. All of the speaker, the main circuit board, and the battery are mounted in the housing. The main circuit board is located between the speaker and the battery. The main circuit board is disposed in an inclined manner relative to the speaker. A risk that the speaker of the earphone generates current noise is low, and sound quality of the earphone is good.

FIG. 13

EP 4 521 774 A1

## Description

This application claims priority to Chinese Patent Application No. 202210705712.8, filed with the China National Intellectual Property Administration on June 21, 2022 and entitled "EARPHONE AND EARPHONE ASSEMBLY", which is incorporated herein by reference in its entirety. This application further claims priority to Chinese Patent Application No. 202211000419.8, filed with the China National Intellectual Property Administration on August 19, 2022 and entitled "EARPHONE AND EARPHONE ASSEMBLY", which is incorporated herein by reference in its entirety.

## TECHNICAL FIELD

This application relates to the field of audio technologies, and in particular, to an earphone and an earphone assembly.

## BACKGROUND

Since wireless earphones abandon conventional cable connections, and are more convenient to use, they are favored by increasingly more consumers. Currently, the wireless earphones are miniaturized, resulting in a compact arrangement of parts such as a speaker, a main board, and a battery inside the earphones. In this case, a coil of the speaker is prone to be interfered with by a magnetic field of the main board (or the battery) to generate an induced current, and to further generate current noise, which results in poor sound quality of the wireless earphones.

## SUMMARY

This application provides an earphone and an earphone assembly including the earphone. A risk that a speaker of the earphone generates current noise is low, and sound quality of the earphone is good.

According to a first aspect, an implementation of this application provides an earphone. The earphone includes a housing, a speaker, a main circuit board, and a battery. All of the speaker, the main circuit board, and the battery are mounted in the housing. The main circuit board is located between the speaker and the battery. In this case, the speaker and the battery are respectively placed at two ends on a long edge of the main circuit board, and the speaker, the main circuit board, and the battery are approximately shaped like a "dumbbell". The main circuit board is disposed in an inclined manner relative to the speaker. That is, a component arrangement plane of the main circuit board is not parallel to a diaphragm plane of the speaker. The component arrangement plane of the main circuit board is a board surface that is of the main circuit board and that is used to arrange a component. The diaphragm plane of the speaker is a plane on which a diaphragm of the speaker is located when being at a balanced position.

In this implementation, the battery and the speaker are respectively located at the two ends on the long edge of the main circuit board. Therefore, there is a long distance between the battery and the speaker, and an induced magnetic field generated by the battery basically exerts no impact on a voice coil of the speaker, so that a current noise risk caused by the battery can be eliminated. In addition, the component arrangement plane of the main circuit board is not parallel to the diaphragm plane of the speaker. Therefore, impact of an induced magnetic field generated by an inductor or a current loop on the main circuit board on the speaker is reduced, and a current noise risk caused by an induced magnetic field of the main circuit board is lowered. Therefore, in this implementation, a position relationship between the speaker, the main circuit board, and the battery is optimized, so that adverse impact of the induced magnetic field of the main circuit board or the battery on the speaker is eliminated or weakened, and a risk of generating current noise is lowered, to ensure sound generation quality of the speaker, and implement that the earphone has good sound quality.

In some possible implementations, an included angle between the component arrangement plane of the main circuit board and the diaphragm plane of the speaker ranges from 10° to 60°. In this case, there is a large included angle between the component arrangement plane of the main circuit board and the diaphragm plane of the speaker. Therefore, the impact of the induced magnetic field generated by the inductor or the current loop on the main circuit board on the speaker can be greatly reduced, and the current noise risk caused by the induced magnetic field of the main circuit board is significantly lowered. In addition, a range of the included angle between the component arrangement plane of the main circuit board and the diaphragm plane of the speaker is controlled, to help reduce difficulty in arranging the speaker, the main circuit board, and the battery in the housing of the earphone, and reduce a limitation imposed on an appearance design of the housing of the earphone due to position requirements of the speaker, the main circuit board, and the battery, so as to highly flexibly design a form of the housing of the earphone.

The included angle between the component arrangement plane of the main circuit board and the diaphragm plane of the speaker may range from 20° to 50°, to further lower the current noise risk caused by the induced magnetic field of the main circuit board to the speaker, and better match mounting space of the housing of the earphone, so as to reduce mounting difficulty.

In some possible implementations, the battery is disposed in an inclined manner relative to the main circuit board. A central axis of the battery is not perpendicular to the component arrangement plane of the main circuit board. In this case, the induced magnetic field generated by the battery exerts little impact on a magnetic field-sensitive component (for example, the inductor or the like) on the main circuit board, so that the component on the main circuit board has a good working environment. For example, an included angle between the central axis of the battery and the component arrangement plane of the main circuit board may range from 30° to 80°.

In some implementations, the main circuit board may be in a long strip board shape, to have a component arrangement plane with a large area. In this case, there is a large spacing between the speaker and the battery, to help lower a risk that current noise occurs in the speaker.

In some possible implementations, the battery is a button battery, and the speaker is a moving coil speaker.

In some possible implementations, the earphone includes an earbud and a stem. The stem may also be referred to as a handle, and a top part of the stem is connected to a rear side of the earbud. An outer surface of the earphone is a geometric curved surface that implements a smooth transition. In a direction from an end connected to the earbud to an end that is far away from the earbud, an outer contour of the stem is in a form of first shrinking, then expanding, and then shrinking, and the stem is as round and natural as a freely falling water drop.

In some possible implementations, the housing includes a main housing and a front housing, the front housing is fastened on a front side of the main housing, internal space of the front housing communicates with internal space of the main housing, and when the earphone is being worn, the front housing faces a user ear. The main housing includes a first end that is in contact with the front housing and a second end that is far away from the front housing, and in a direction from the first end to the second end of the main housing, an outer contour of the main housing first shrinks and then expands.

A case in which the outer contour of the main housing first shrinks and then expands includes a first case in which the outer contour of the main housing first shrinks, then expands, and then shrinks, and a second case in which the outer contour of the main housing first shrinks and then expands.

For the first case, in the direction from the first end of the main housing to the second end of the main housing, a part that is of the main housing and that is located on the earbud is in a shrinking form, and a part that is of the main housing and that is located on the stem is in a form of first shrinking, then expanding, and then shrinking, and at a bottom part of the main housing, a bottom end face may be formed by an arc-shaped surface or an approximately arc-shaped surface, to have a rounded form. In this case, a shape of the main housing is designed, so that the stem of the earphone can have a shape similar to that of a "freely falling water drop".

For the second case, in the direction from the first end of the main housing to the second end of the main housing, a part that is of the main housing and that is located on the earbud is in a shrinking form, and a part that is of the main housing and that is located on the stem first shrinks and then expands, that is, at a bottom part of the main housing, a bottom end face may be formed by a plane or an approximate plane. In the second case, a small rounded transition region connected to the bottom end face may exist at the bottom part of the main housing, and a form change of this part of transition region is small and may be ignored.

In some possible implementations, the internal space of the main housing includes top space, middle space, and bottom space, the top space of the main housing is close to the first end of the main housing, and the bottom space of the main housing is close to the second end of the main housing. The speaker is mounted in the internal space of the front housing and/or the top space of the main housing, the battery is mounted in the bottom space of the main housing, the main circuit board is mounted in the middle space of the main housing, and two ends of the main circuit board respectively extend to the top space of the main housing and the bottom space of the main housing.

In this implementation, the speaker and the battery are large in volume, and are approximately in a flat cylinder shape, and the main circuit board is of a long and narrow board structure. In addition, the internal space of the front housing, the top space of the main housing, and the bottom space of the main housing are large, and the middle space of the main housing is small. Therefore, in this implementation, arrangement positions of the speaker, the main circuit board, and the battery not only can lower a risk that the speaker generates current noise, but also can fully use internal space of the housing, to improve space utilization of the housing, and facilitate miniaturization of the earphone.

In some possible implementations, the main housing has a dorsal line, and the dorsal line extends from the first end of the main housing to the second end of the main housing. The dorsal line is located on a rear side of the main housing, and the dorsal line is located on a central surface of the earphone. The dorsal line is a smooth curve.

For example, when the dorsal line extends from the first end of the main housing to the second end of the main housing, the dorsal line first extends backward and then extends forward. A part that is of the main housing and that corresponds to a line segment that extends backward and that is of the dorsal line is in a form of first shrinking and then expanding. A part that is of the main housing and that corresponds to a line segment that extends forward and that is of the dorsal line is in a shrinking form. In this implementation, a shape of the dorsal line is set, so that a back of the earphone is in a form that implements free sliding, and an overall form of the earphone is natural and beautiful.

The dorsal line may include a plurality of smoothly connected arc-shaped line segments. In an extension direction of the dorsal line, radii of the plurality of arc-shaped line segments first increase and then decrease. An arc-shaped line segment with a largest radius may be disposed to correspond to the middle space of the main housing.

In some possible implementations, the included angle between the component arrangement plane of the main circuit board and the diaphragm plane of the speaker ranges from 20° to 50°. In this case, a relative position between the speaker and the main circuit board can well match a relative position relationship between the top space of the main housing and the middle space of the main housing. Mounting difficulty is low, and implementation is easy.

In some possible implementations, a cross-sectional area of the top space of the main housing is greater than a cross-sectional area of the middle space of the main housing, and a cross-sectional area of the bottom space of the main housing is greater than the cross-sectional area of the middle space of the main housing. In this implementation, the main housing is of a housing member structure, and a form change of the internal space of the main housing is the same as or similar to a form change of the outer contour of the main housing.

In some possible implementations, the main housing includes a main housing member and a sealing cover member, the main housing member has a first opening and a second opening that are disposed at an interval, and when the earphone is being worn, both the first opening and the second opening face the user ear. The front housing is mounted at the first opening, the sealing cover member is mounted at the second opening, and the sealing cover member and a part of the main housing member jointly enclose the bottom space of the main housing.

In this implementation, the housing mainly includes three housing members: the front housing, the main housing member, and the sealing cover member. The housing includes such a few housing members that require no complex structure and are easy to assemble. In addition, a middle part of the main housing member is of a complete housing member structure, and no opening is disposed. This helps improve structural strength of the main housing member, so that overall structural strength of the main housing and the housing is high.

In some possible implementations, the main housing further includes a main housing member, a sealing cover member, and a back cover member, the main housing member has a first opening, a second opening, and a third opening that are disposed at an interval, when the earphone is being worn, both the first opening and the second opening face the user ear, and the third opening faces away from the user ear, and the third opening is located between the first opening and the second opening; and the front housing is mounted at the first opening, the sealing cover member is mounted at the second opening, the sealing cover member and a part of the main housing member jointly enclose the bottom space of the main housing, the back cover member is mounted at the third opening, and the back cover member and a part of the main housing member jointly enclose the middle space of the main housing.

In this implementation, an opening structure is formed at a middle part of the main housing member by using the third opening. This helps implement smooth demolding of the main housing member, simplify a demolding structure and a demolding process of the main housing member, and improve production efficiency and a yield of the main housing member.

In addition, a parting line between the sealing cover member and the main housing member is hidden on a secondary appearance surface, and the back cover member is located on a primary appearance surface. Although the back cover member damages integrity of the primary appearance surface to some extent, an area of the back cover member is small. Therefore, the primary appearance surface of the earphone can still have good visual integrity. In some implementations, appearance richness and diversity may be further implemented by using a differentiated design for the back cover member and the main housing member.

In some possible implementations, the main housing member is an integrally formed structural member. For example, the main housing member may be formed by using an injection molding process. In this implementation, structural strength of the main housing member is high. This helps improve overall structural strength of the earphone.

In some implementations, the housing includes a front housing and a main housing, and the main housing includes a main housing member and a sealing cover member. The main housing member has a first opening and a second opening that are disposed at an interval, and both the first opening and the second opening are disposed to face forward. The main housing member includes a top part, a middle part, and a bottom part that are sequentially connected. The first opening is formed at the top part of the main housing member, and the second opening extends from the bottom part of the main housing member to the top part of the main housing member through the middle part of the main housing member.

In this implementation, because the second opening is partially arranged at the middle part of the main housing member, there is an opening structure at the middle part of the main housing member. This helps implement smooth demolding of the main housing member, simplify a demolding structure and a demolding process of the main housing member, and improve production efficiency and a yield of the main housing member.

In addition, a parting line between the sealing cover member and the main housing member is mostly hidden on a secondary appearance surface, and a small part is exposed on a primary appearance surface. Therefore, the parting line causes little damage to the primary appearance surface, and integrity of the primary appearance surface is basically maintained, so that the earphone has good visual integrity. Furthermore, a part that damages the primary appearance surface on the parting line between the sealing cover member and the main housing member is mainly located on a bottom side of the top part of the main housing member. When the earphone is being worn, the bottom side of the top part of the main housing member abuts against the user ear and is not exposed. Therefore, when the earphone is being worn, the visual integrity is not damaged by the parting line between the sealing cover member and the main housing member, and user experience is good.

In some implementations, the housing includes a front housing and a main housing, the main housing includes a main housing member and a back cover member, the main housing member has a first opening and a third opening that are disposed at an interval, the first opening is disposed to face forward, and the third opening is disposed to face backward. The main housing member includes a top part, a middle part, and a bottom part that are sequentially connected. The first opening is formed at the top part of the main housing member, and the third opening is continuously formed at the top part, the middle part, and the bottom part of the main housing member. The front housing is mounted at the first opening, and the back cover member is mounted at the third opening.

In this implementation, an opening structure is formed at the middle part of the main housing member by using the third opening. This helps implement smooth demolding of the main housing member, simplify a demolding structure and a demolding process of the main housing member, and improve production efficiency and a yield of the main housing member.

A parting line between the main housing member and the back cover member may be partially hidden on a secondary appearance surface, and partially located on a primary appearance surface, to reduce damage to integrity of the primary appearance surface.

In some implementations, the housing includes a front housing and a main housing, and the main housing includes a main housing member and a bottom cover member. The main housing member has a first opening and a fourth opening that are disposed at an interval, the first opening is disposed to face forward, and the fourth opening is disposed to face downward. The front housing is mounted at the first opening, and the bottom cover member is mounted at the fourth opening. A back cover member and the bottom cover member are disposed in a stacked manner. A position at which the fourth opening is located is a position with a largest cross-sectional area at the bottom part of the main housing member.

In some possible implementations, the main housing includes an abutting end face, the abutting end face is located on the main housing member and is disposed around the first opening, and the abutting end face is in contact with the front housing. The main housing member has a first projection on a plane on which the abutting end face is located, the sealing cover member has a second projection on the plane on which the abutting end face is located, and the first projection covers the second projection.

A surface of the earphone in a rear view is the primary appearance surface, that is, in a case of viewing from back to front, an exposed surface of the earphone is the primary appearance surface. A surface of the earphone in a front view is the secondary appearance surface, that is, in a case of viewing from front to back, an exposed surface of the earphone is the primary appearance surface. When the earphone is being worn, the secondary appearance surface faces the user ear and is hidden, and the primary appearance surface faces away from the user ear and is exposed. The main housing member is projected from back to front to form the first projection, and the sealing cover member is projected from back to front to form the second projection. The first projection covers the second projection. Therefore, in the rear view of the earphone, the main housing member blocks the sealing cover member, and the parting line between the sealing cover member and the main housing member is hidden on the secondary appearance surface of the earphone, so that the primary appearance surface of the earphone is complete, to maintain good visual integrity. The parting line between the sealing cover member and the main housing member is a line formed on the appearance surface of the earphone at a junction of the sealing cover member and the main housing member.

In some possible implementations, the earphone further includes a separation assembly, and the separation assembly is mounted in the top space of the main housing and is located between the speaker and the main circuit board. The internal space of the housing includes a front cavity, a rear cavity, and a main board cavity, the front cavity is located between the front housing and the speaker, the rear cavity is located between the speaker and the separation assembly, and the main board cavity is located on a side that is of the separation assembly and that faces away from the speaker. The main board cavity may be a sealed cavity, so that reliability of a component that is of the earphone and that is located in the main board cavity is high, to help extend a service life of the earphone.

In some possible implementations, the separation assembly includes one or more magnetic isolation members, to lower a risk that current noise occurs in the speaker.

In some possible implementations, between a bottom surface center point of the speaker and a center point of the battery, a spacing in a first direction ranges from 12 mm to 20 mm, and a spacing in a second direction ranges from 6 mm to 15 mm, the first direction is parallel to the diaphragm plane of the speaker, and the second direction is perpendicular to the first direction; or a spacing between a bottom surface center point of the speaker and a center point of the battery ranges from 10 mm to 30 mm.

In this implementation, a position relationship between the speaker and the battery helps balance a miniaturization requirement of the earphone and a low current noise requirement.

In some possible implementations, the main circuit board includes a first end adjacent to the speaker and a second end adjacent to the battery; and the earphone further includes a first flexible circuit board and a second flexible circuit board, the first flexible circuit board and the speaker are located on a same side of the main circuit board, the first flexible circuit board is electrically connected to the speaker and the first end of the main circuit board, the second flexible circuit board and the battery are located on a same side of the main circuit board, and the second flexible circuit board is electrically connected to the battery and the second end of the main circuit board.

In this embodiment, the main circuit board is a rigid printed circuit board, to have sufficient structural strength, so that a large quantity of components can be arranged on the component arrangement plane, and component arrangement can be implemented on two sides, to improve component integration. The first flexible circuit board and the second flexible circuit board may be bent, and the first flexible circuit board and the second flexible circuit board may be flexibly arranged based on an internal space shape of the earphone and a structure of another part, so that a circuit in a circuit assembly can smoothly extend outward from the main circuit board, and is electrically connected to another part (for example, the speaker and the battery) of the earphone.

In some possible implementations, the main circuit board is fixedly connected to the first flexible circuit board by using a BOF process, and the main circuit board is fixedly connected to the second flexible circuit board by using the BOF process. In this implementation, a bilateral BOF process is used for the electrical connections between the main circuit board and both the first flexible circuit board and the second flexible circuit board. This can effectively save component arrangement space of the main circuit board and internal stacking space of the earphone, to help reduce costs.

According to a second aspect, an embodiment of this application provides an earphone. The earphone includes a housing, a first circuit board, and an antenna. Both the first circuit board and the antenna are located in the housing and are disposed in a stacked manner. The first circuit board and the antenna are structural members independent of each other. The first circuit board is located between the antenna and the housing. There is a touch sensor on a side that is of the first circuit board and that faces the housing, and the touch sensor is configured to detect a touch action performed on the housing. The antenna is configured to transmit/receive a radio frequency signal.

In this application, a side that is of the touch sensor and that is used to detect a touch operation of a user is a touch side, and the other side of the touch sensor is a non-touch side. That is, a side that is of the touch sensor and that faces the housing is the touch side, and a side that is of the touch sensor and that faces away from the housing is the non-touch side. The antenna is located on the non-touch side of the touch sensor, and the antenna is of a conductor structure. Therefore, the antenna may be used as a reference ground of the touch sensor, to shield a cluttered signal from the non-touch side of the touch sensor, so as to reduce or eliminate signal interference caused by the cluttered signal to the touch sensor, and improve accuracy of touch detection of the touch sensor. In addition, the antenna radiates a high-frequency current, and the touch sensor senses a low-frequency current. Therefore, the antenna exerts no impact on touch detection of the touch sensor.

In this application, the antenna is configured to transmit/receive a radio frequency signal, and the antenna is further configured to provide a reference ground for the touch sensor. In this case, based on a relative position relationship between the housing, the touch sensor, and the antenna, the antenna is compatible with two functions by using a same structure, and is not only used to implement wireless communication of the earphone, but also used as a reference ground of the touch sensor, to shield a cluttered signal and improve accuracy of touch detection.

In addition, the touch sensor and the antenna of the earphone coexist in a same space region, and occupied space is minimized, to facilitate miniaturization of the earphone. Furthermore, a radiation region of the antenna and a touch control region of the touch sensor may be implemented by using a same region of the housing. When the housing has a fixed volume, both the radiation region of the antenna and the touch control region of the touch sensor may have a large area, so that the earphone can obtain better transmit/receive performance of the antenna, and more diversified touch operations can be detected.

In some possible implementations, a projection of the antenna on the first circuit board covers the touch sensor. In this case, the antenna can better provide a reference ground for the touch sensor, to improve detection accuracy of the touch sensor. It may be understood that a case in which the projection of the antenna on the first circuit board covers the touch sensor includes a case of complete coverage and a case of basic coverage. When the projection of the antenna covers more than 80% of the touch sensor, it is considered that there is the case of basic coverage. Specifically, coverage of the touch sensor by the antenna is mainly coverage of the touch sensor by a radiation part of the antenna. At a position at which the touch sensor may be interfered with by concentrated interference sources, the radiation part of the antenna covers the touch sensor as completely as possible.

In some possible implementations, the first circuit board includes a conductive layer, and the conductive layer includes the touch sensor. In this case, the first circuit board has a small thickness when the touch sensor is formed, to facilitate mounting.

In some possible implementations, the touch sensor includes at least three touch blocks, and the at least three touch blocks are arranged into a strip-shaped touch region and are disposed at an interval from each other. An extension direction of the strip-shaped touch region corresponds to an extension direction of the antenna. In this case, the touch sensor is of a slider sensing structure. When capacitance of the at least three touch blocks sequentially changes, it may be determined that the user performs a sliding action. The touch sensor may further detect actions, for example, tap, double tap, touch and hold, and the like, of the user.

In some possible implementations, a spacing between two adjacent touch blocks ranges from 0.5 mm to 2 mm. In this case, the at least three touch blocks are disposed, to avoid incorrectly determining that a sliding action is generated when the user simultaneously touches two touch blocks. On the contrary, when the spacing between two adjacent touch blocks is excessively small, an accidental touch is likely to occur. If the spacing between two adjacent touch blocks is excessively large, the user possibly cannot touch the touch block, resulting in low touch efficiency.

In some possible implementations, the earphone further includes a main circuit board, a processor, and a radio frequency circuit, the main circuit board is located on a side that is of the antenna and that faces away from the first circuit board, both the processor and the radio frequency circuit are fastened and electrically connected to the main circuit board, the radio frequency circuit is electrically connected to the antenna and the processor, and the processor is electrically connected to a plurality of touch blocks.

In this implementation, the main circuit board, the antenna, and the first circuit board are disposed in a stacked manner, so that internal space of the earphone can be fully used, and space utilization of the earphone can be improved, to facilitate miniaturization of the earphone.

In some possible implementations, the earphone further includes a high-frequency blocking circuit, and the high-frequency blocking circuit is connected in series between the plurality of touch blocks and the processor. For example, the high-frequency blocking circuit may be fastened and electrically connected to a second circuit board. An inductive choke (choke) circuit is usually used for the high-frequency blocking circuit. Each touch block passes through the high-frequency blocking circuit and then is connected to the main circuit board. A low-frequency signal formed by the touch sensor in a touch detection process may be transmitted to the processor through the high-frequency blocking circuit. The antenna of the earphone usually works on a high-frequency Bluetooth frequency band. Therefore, the high-frequency blocking circuit can block a signal of the antenna from forming a path on the plurality of touch blocks, to eliminate coupling impact of the plurality of touch blocks on the antenna, so as to ensure that transmit/receive performance of the antenna is not affected or is slightly affected.

In some possible implementations, the earphone further includes the second circuit board, one end of the second circuit board is connected to the first circuit board, the other end of the second circuit board is connected to the main circuit board, and the high-frequency blocking circuit is fastened and electrically connected to the second circuit board. The second circuit board and the first circuit board may be integrally formed structural members, for example, are respectively two parts of a flexible circuit board.

In some possible implementations, the antenna includes an antenna support and a first metal piece, the antenna support is located between the first circuit board and the main circuit board, the first metal piece is fastened to the antenna support, and the first metal piece is electrically connected to the main circuit board. In this implementation, composition of the antenna is simple and easy to implement.

In some possible implementations, the antenna includes an antenna support, a first metal piece, and a second metal piece, the antenna support is located between the first circuit board and the main circuit board, the first metal piece is fastened to the antenna support, the first metal piece is electrically connected to the main circuit board, and the second metal piece is fastened and electrically connected to the first metal piece.

In this implementation, the first metal piece and the second metal piece may jointly form the radiation part of the antenna, and the radiation part of the antenna has a large dimension. This increases a radiation area of the antenna, and improves transmit/receive performance of the antenna, so that the earphone has good wireless communication performance.

All of the antenna support, the first metal piece, and the second metal piece may be approximately strip-shaped, and the entire antenna is approximately strip-shaped, to better match a shape of the housing of the earphone in a case of a large radiation area, so as to reduce mounting difficulty.

In some possible implementations, the first metal piece is formed on the antenna support by using a laser direct structuring process. In this case, a dimension and a shape of the first metal piece are less constrained, and a pattern of the first metal piece is easy to adjust.

In some possible implementations, the antenna support includes a plate body and a plurality of support feet fastened to the plate body, the plate body and the main circuit board are disposed at an interval, and the plurality of support feet are fastened to the main circuit board. Space is formed between the plate body of the antenna support and the main circuit board, and a component may be arranged on the main circuit board by using the space. The first metal piece includes a main body part and a connection part, the main body part is fastened on a side that is of the plate body and that faces away from the main circuit board, the connection part is connected to the main body part, and extends to at least one of the plurality of support feet, and the connection part is soldered to the main circuit board. In this case, the connection part of the first metal piece is fastened and electrically connected to the main circuit board through tin soldering, so that the main circuit board can feed the antenna.

In this implementation, the first metal piece forms the radiation part of the antenna or a part of the radiation part, the first metal piece and the main circuit board share the support foot of the antenna support, and the support foot of the antenna support is not only used to implement a structural connection function, but also used as a feed point of the antenna. Therefore, a conventional spring plate structure used as a feed point is omitted, and a large amount of plate arrangement space is saved, to facilitate arrangement of the antenna in small space. In addition, a signal is transmitted between the antenna and the main circuit board without passing through an electrical connector. Therefore, signal noise of the antenna is reduced, and wireless communication quality of the earphone is improved.

The antenna support may be an integrally formed structural member. In this case, the antenna support has high structural strength and low costs.

In some possible implementations, there are a plurality of connection parts, and the plurality of connection parts are connected to different positions of the main body part and are fastened to different support feet. In this implementation, the earphone can implement a multi-point feeding solution of the antenna, so that a MIMO solution of the antenna can be implemented in some embodiments.

In some possible implementations, the antenna includes an extended circuit board, and the extended circuit board includes the second metal piece. The second metal piece may be formed by a conductive layer of the extended circuit board. The extended circuit board may be a flexible circuit board. In this implementation, the second metal piece is formed by the extended circuit board, and the extended circuit board is small in thickness, can be bent and deformed, has a low requirement for mounting space, and can be easily arranged in narrow space, for example, internal space of a stem, to achieve an objective of extending the radiation area of the antenna in the narrow space.

In some other possible implementations, the second metal piece may alternatively be made of a metal sheet material, for example, a metal plate such as a steel sheet or a structural member such as a metal support. Similarly, the antenna may also achieve, by using the small thickness and easy bending performance of the second metal piece, an objective of extending the radiation area of the antenna in narrow space.

In some possible implementations, the first circuit board includes a conductive layer, an insulation layer, and a second conductive layer that are disposed in a stacked manner. The conductive layer is located on a side that is of the insulation layer and that faces the housing, the conductive layer includes the touch sensor, and the second conductive layer is located on a side that is of the insulation layer and that faces away from the housing. A projection of the antenna on the first circuit board covers one part of the touch sensor, and the second conductive layer covers the other part of the touch sensor.

In this implementation, both the antenna and the second conductive layer provide a reference ground for the touch sensor, to ensure coverage effect of the touch sensor and improve detection accuracy of the touch sensor. The second conductive layer and the antenna are approximately arranged in a staggered manner. There is one second conductive layer, and an area of the second conductive layer is significantly less than an area of the insulation layer. An overall thickness of the first circuit board is still very small, and mounting difficulty is low.

In some possible implementations, the housing includes a main housing and a front housing, the front housing is fastened on a front side of the main housing, internal space of the front housing communicates with internal space of the main housing, and when the earphone is being worn, the front housing faces a user ear. The main housing includes a first end connected to the front housing and a second end that is far away from the front housing, and in a direction from the first end to the second end of the main housing, an outer contour of the main housing first shrinks and then expands. The first circuit board is fastened to an inner wall of the main housing, and when the earphone is being worn, the first circuit board faces away from the user ear.

In this implementation, the touch sensor is a capacitive sensor (cap sensor). The first circuit board is disposed close to the inner wall of the main housing of the housing, and is at a position close to a back side of the main housing, and therefore when the earphone is being worn, faces away from the user ear and is exposed relative to the user ear. When the user approaches or touches a back of the main housing, the touch sensor may detect a touch action of the user, to implement man-machine interaction.

In some possible implementations, the internal space of the main housing includes top space, neck space, and bottom space, a cross-sectional area of the top space of the main housing is greater than a cross-sectional area of the neck space of the main housing, and a cross-sectional area of the bottom space of the main housing is greater than the cross-sectional area of the neck space of the main housing. The first circuit board extends from the top space of the main housing to the bottom space of the main housing. In this case, the first circuit board has a large area, so that the touch sensor has a large arrangement area, and more diversified touch actions can be detected.

In some possible implementations, the earphone further includes a third circuit board, the third circuit board is located in the top space of the main housing, one end of the third circuit board is connected to the first circuit board or the second circuit board, the other end of the third circuit board is bent to the side that is of the antenna and that faces away from the first circuit board, and is fastened to the main housing, and there is a wearing detection sensor on a side that is of the third circuit board and that faces the main housing.

In this implementation, the wearing detection sensor is a capacitive sensor (cap sensor). When the user wears the earphone, the incisura intertragica of the ear corresponds to a position of the wearing detection sensor, and the wearing detection sensor may detect whether skin of the user is in contact with the earphone, to cooperate in detecting whether the earphone is being worn. Detection accuracy of the wearing detection sensor is high.

The earphone cooperates, through detection by a proximity sensor and the wearing detection sensor, in determining whether the earphone is being worn. For example, when both the proximity sensor and the wearing detection sensor of the earphone detect that the earphone approaches or is in contact with the user, the earphone determines that the earphone is being worn; or if one of the proximity sensor and the wearing detection sensor detects that the user does not approach or is not in contact with the user, the earphone determines that the earphone is not being worn. Wearing detection of the earphone may be a prerequisite for the touch sensor to detect a touch operation of the user. The touch sensor senses the touch operation of the user only when the earphone determines that the earphone is being worn.

In some possible implementations, the first circuit board of a detection circuit board may be fixedly connected to the inner wall of the main housing by using a hot melt adhesive membrane, the third circuit board may be fixedly connected to the inner wall of the main housing by using double-sided adhesive tape, and another part of the detection circuit board may also be fixedly connected to the inner wall of the main housing by using the double-sided adhesive tape. A region that is of the main housing and that is used for the third circuit board is located at a position close to a first opening, an opening area of the first opening is large, and it is easy to implement adhesion, so that the third circuit board can be easily and tightly bonded to the main housing at a time by using the double-sided adhesive tape. The first circuit board has a long length, and needs to extend from the top space of the main housing to the bottom space of the main housing during assembly. In a fastening manner of using the hot melt adhesive membrane, the first circuit board may first extend into the main housing in an assembly process. In this process, there is no incorrect adhesion. After the first circuit board extends in place, the hot melt adhesive membrane is heated (for example, heated to 80 degrees or 90 degrees), so that the first circuit board is adhered to the main housing, and a gap between the first circuit board and the main housing can be better absorbed by using a semi-melted state of the hot melt adhesive membrane, to obtain a better bonding state between the first circuit board and the main housing. In an assembly process of the earphone, the detection circuit board may be first mounted in the main housing, then the main circuit board is mounted, and then the detection circuit board is snap-fitted with the main circuit board to implement an electrical connection.

In some possible implementations, the third circuit board and the first circuit board are integrally formed structural members, to reduce costs and assembly difficulty of the earphone.

According to a third aspect, an embodiment of this application provides an earphone. The earphone includes a housing, a speaker, a support, and a microphone. The housing has a first through hole and a second through hole that are disposed at an interval. The speaker is fastened in the housing. The support is fastened in the housing, and a rear cavity is formed between the support and the speaker. The support is provided with a bass tube channel, a sound pickup channel, and a sound pickup cavity. One end of the bass tube channel communicates with the rear cavity, and the other end communicates with the first through hole. The sound pickup channel and the bass tube channel are separately disposed, one end of the sound pickup channel communicates with the sound pickup cavity, and the other end communicates with the second through hole. The microphone is mounted in the sound pickup cavity.

In this embodiment of this application, in the earphone, the bass tube channel and the sound pickup channel are integrated into the support. Integration is high, and utilization of internal space of the earphone is high, to facilitate miniaturization of the earphone. A design solution of an integrated support is used for the earphone. Therefore, assembly difficulty can be reduced, a production yield can be improved, cost advantages can be brought, and product competitiveness can be further improved.

In some possible implementations, the support has a front side and a rear side that are disposed to face away from each other, and further has a peripheral side that is circumferentially located between the front side and the rear side. The front side of the support is disposed to face the speaker, the rear cavity is formed between the support and the speaker, and the front side of the support is disposed to face the rear cavity. The rear side of the support is disposed to face away from the speaker, that is, disposed to face a main board cavity. The peripheral side of the support is disposed to face the housing.

The bass tube channel is formed with a first opening on the front side of the support, and is formed with a second opening on the peripheral side of the support, and the second opening communicates with the first through hole. In this case, air in the rear cavity of the earphone can be propagated to external space of the earphone through the bass tube channel and the first through hole.

In some possible implementations, the bass tube channel is formed with a strip-shaped groove on the front side of the support, the earphone further includes a first cover plate, the first cover plate is fastened on the front side of the support, and covers one part of an opening of the strip-shaped groove, and the other part of the opening of the strip-shaped groove forms the first opening. In this case, the bass tube channel is jointly enclosed by the support and the first cover plate. The first cover plate may be first positioned with the support by using a positioning structure (for example, a positioning post, a protrusion, or the like) on the support, and then fastened to the support in an ultrasonic soldering manner, to ensure sealing reliability of a bass tube. In some other embodiments, the first cover plate may alternatively be fixedly connected to the support by using an adhesive material such as a glue dispensing material or double-sided adhesive tape.

In this embodiment of this application, when the speaker of the earphone works, air resonance is formed in the bass tube channel, to drive air in the rear cavity to form resonance. Therefore, vibration of a diaphragm of the speaker is affected, to improve bass performance of the earphone. A dimension of the bass tube channel of the earphone affects a frequency response result, and a length and/or a cross-sectional area of the bass tube channel may be adjusted to improve low-frequency sensitivity based on a sound quality/noise reduction consideration. In addition, the cross-sectional area of the bass tube channel is limited and cannot be excessively large or excessively small. If the cross-sectional area of the bass tube channel is excessively small, acoustic viscous damping is increased and resonance effect is affected. If the cross-sectional area of the bass tube channel is excessively large, the earphone has an excessively large volume.

For example, the cross-sectional area of the bass tube channel may range from 0.8 mm$^2$ to 1.7 mm$^2$, for example, may range from 0.94 mm$^2$ to 1.54 mm$^2$, for example, 1.126 mm$^2$, 1.20 mm$^2$, 1.24 mm$^2$, 1.28 mm$^2$, or the like. The length of the bass tube channel may range from 7 mm to 16 mm, for example, may range from 9.8 mm to 13.8 mm, for example, 9.8 mm, 10.4 mm, 11.2 mm, or the like, to obtain good low-frequency sensitivity.

In some embodiments, the first cover plate may be made of a plastic material. In this case, a weight of the first cover plate is light, to facilitate weight reduction of the earphone. In addition, when the support is also made of a plastic material, the first cover plate and the support may be fastened to each other by using an ultrasonic soldering technology. In this way, requirements for fastening and sealing can be met, and no additional space is occupied due to a connection requirement, to facilitate miniaturization. Certainly, the first cover plate may alternatively be fixedly connected to the support by using an adhesive material such as a glue dispensing material or double-sided adhesive tape.

In some other embodiments, the first cover plate may alternatively be made of a metal material. In this case, a hermetical connection relationship is still maintained between the first cover plate and a main body. For example, the first cover plate and the main body may be fastened by using an adhesive material such as a glue dispensing material or double-sided adhesive tape. In addition, the first cover plate is located between the speaker and a main circuit board. Therefore, when the first cover plate is made of the metal material, the first cover plate may also be used as a magnetic isolation member, and can isolate a magnetic field, to reduce adverse impact of an induced magnetic field generated by a component on the main circuit board on the speaker, and further lower a risk that current noise occurs.

In some other embodiments, the first cover plate may further include a plurality of plate bodies disposed in a stacked manner, and at least one of the plurality of plate bodies is made of a metal material. In this case, the first cover plate may be reused as a magnetic isolation member. At least one of the plurality of plate bodies may be further made of a plastic material. In this case, the first cover plate is a composite cover plate. For example, the first cover plate may include a plastic plate and a metal plate that are disposed in a stacked manner, the plastic plate is disposed on a side close to the support, and the first cover plate can be soldered to the support through the plastic plate in an ultrasonic soldering manner. In addition, the first cover plate can further implement magnetic isolation by using the metal plate, to lower a risk that current noise occurs in the speaker.

In some possible implementations, a region that is of the support and that is located around the second opening is hermetically connected to an inner wall of the housing. For example, a gap between the region that is of the support and that is located around the second opening and the inner wall of the housing may be hermetically connected by using an adhesive layer, to improve sealing performance of the bass tube channel.

In some possible implementations, the sound pickup channel is formed with a third opening on the peripheral side of the support, the third opening is disposed at an interval from the second opening, and the third opening communicates with the second through hole. The third opening and the second opening may be located on different sides of the support, to correspond to positions of the first through hole and the second through hole of the housing, so as to match an appearance of the earphone.

In some possible implementations, the earphone further includes a fifth mesh fabric, and the fifth mesh fabric is fastened on the peripheral side of the support and covers the third opening. The fifth mesh fabric allows a sound to pass through, and is configured to prevent external dust from entering the sound pickup channel through the third opening, so that sound pickup accuracy of a second microphone is high. The fifth mesh fabric may be fastened to the support by using an adhesive layer, and the adhesive layer may be an adhesive material such as a glue dispensing material or double-sided adhesive tape. The fifth mesh fabric may alternatively be fastened to the support in another manner.

In some possible implementations, a region that is of the support and that is located around the third opening is hermetically connected to the inner wall of the housing. For example, the region that is of the support and that is located around the third opening may be hermetically connected to the inner wall of the housing by using an adhesive layer, to improve sealing performance of the sound pickup channel.

In some possible implementations, the sound pickup cavity is formed on the front side of the support, the earphone further includes a second cover plate, and the second cover plate is fastened on the front side of the support and covers the sound pickup cavity. The second cover plate may be fastened to the support by using an adhesive layer, and the adhesive layer may be an adhesive material such as a glue dispensing material or double-sided adhesive tape. In some other embodiments, the second cover plate may alternatively be fastened to the support through ultrasonic soldering or in another manner.

The second cover plate is hermetically connected to the support, to seal the sound pickup cavity and isolate the rear cavity from the sound pickup cavity, so as to avoid a problem that self-excitation and squealing are caused when the second microphone located in the sound pickup cavity picks up a sound of the speaker. Isolation of the second cover plate is greater than 30 dB, to meet an isolation requirement between the second microphone and the speaker. In some examples, a thickness of the second cover plate may range from 0.15 mm to 0.45 mm, for example, 0.23 mm, 0.3 mm, 0.35 mm, or the like.

In some possible implementations, the second cover plate is made of a plastic material or a metal material. Alternatively, the second cover plate includes a plurality of plate bodies disposed in a stacked manner, and at least one plate body is made of a metal material. Details are as follows:

In some embodiments, the second cover plate may be made of a plastic material. In this case, a weight of the second cover plate is light, to facilitate weight reduction of the earphone. In addition, when the support is also made of a plastic material, the second cover plate and the support may be fastened to each other by using an ultrasonic soldering technology. In this way, requirements for fastening and sealing can be met, and no additional space is occupied due to a connection requirement, to facilitate miniaturization. Certainly, the second cover plate may alternatively be fixedly connected to the support by using an adhesive material such as a glue dispensing material or double-sided adhesive tape.

In some other embodiments, the second cover plate may alternatively be made of a metal material. In this case, a hermetical connection relationship is still maintained between the second cover plate and a main body. For example, the second cover plate and the main body may be fastened by using an adhesive material such as a glue dispensing material or double-sided adhesive tape. In addition, the second cover plate is located between the speaker and the main circuit board. Therefore, when the second cover plate is made of the metal material, the second cover plate may also be used as a magnetic isolation member, and can isolate a magnetic field, to reduce adverse impact of an induced magnetic field generated by a component on the main circuit board on the speaker, and further lower a risk that current noise occurs. For example, the second cover plate may be made of an SPCC material.

In some other embodiments, the second cover plate may further include a plurality of plate bodies disposed in a stacked manner, and at least one of the plurality of plate bodies is made of a metal material. In this case, the second cover plate may be reused as a magnetic isolation member. At least one of the plurality of plate bodies may be further made of a plastic material. In this case, the second cover plate is a composite cover plate. For example, the second cover plate may include a plastic plate and a metal plate that are disposed in a stacked manner, the plastic plate is disposed on a side close to the support, and the second cover plate can be soldered to the support through the plastic plate in an ultrasonic soldering manner. In addition, the second cover plate can further implement magnetic isolation by using the metal plate, to lower a risk that current noise occurs in the speaker.

In some possible implementations, the earphone further includes a sixth mesh fabric, and the sixth mesh fabric is fastened to a bottom wall of the sound pickup cavity, and covers an opening that is of the sound pickup channel and that is on the bottom wall of the sound pickup cavity. The sixth mesh fabric may be fastened to the bottom wall of the sound pickup cavity by using adhesive 83 or in another manner, and the adhesive layer may be an adhesive material such as a glue dispensing material or double-sided adhesive tape.

In some possible implementations, the earphone further includes a first flexible circuit board. A part of the first flexible circuit board extends into the sound pickup cavity from the front side of the support, and the microphone is fastened and electrically connected to the first flexible circuit board. The second microphone is fastened to a first part of the first flexible circuit board. The first flexible circuit board may be wound from the rear side of the support to the front side of the support, the first part of the first flexible circuit board may be located in the sound pickup cavity, and the second microphone is located in the sound pickup cavity, to collect a sound entering the sound pickup cavity. The first part of the first flexible circuit board may be fastened on a side that is of the sixth mesh fabric and that faces away from the sound pickup channel by using an adhesive layer. The first flexible circuit board may further have a partial structure fastened on the front side of the support, so that a relative position between the first flexible circuit board and the support is stable and reliable.

In some possible implementations, a sound pickup direction of the microphone is set to face away from the speaker. In this case, isolation effect between the second microphone and the speaker is good, to help improve a sound pickup signal-to-noise ratio of the second microphone. For example, the first part of the first flexible circuit board is provided with a through hole, and a sound pickup hole of the second microphone communicates with the sound pickup channel through the through hole, so that a sound can enter the second microphone from the sound pickup hole of the second microphone through the sound pickup channel and the through hole of the first part, and the second microphone implements sound pickup.

In some possible implementations, the sound pickup channel is formed with a connection groove on the rear side of the support, the rear side of the support is disposed to face away from the speaker, one end of the connection groove communicates with the sound pickup cavity, and the other end of the connection groove communicates with the third opening. The earphone further includes a third cover plate, and the third cover plate is fastened on the rear side of the support and covers the connection groove.

In this implementation, the sound pickup channel is formed with a curved part at either end of the connection groove. From the sound pickup cavity to the third opening, the sound pickup channel first extends from the front side of the support to the rear side of the support, then extends on the rear side of the support for a distance, and then is wound from the rear side of the support to the peripheral side of the support, to form a curved channel.

The third cover plate may be fixedly connected to the support by using an adhesive layer, and the adhesive layer may be an adhesive material such as a glue dispensing material or double-sided adhesive tape. In some other embodiments, the third cover plate may be fixedly connected to the support in an ultrasonic soldering manner, to ensure sealing reliability of the sound pickup channel. The third cover plate may be made of a plastic material, a metal material, or a composite plate structure.

In some possible implementations, the sound pickup channel includes at least one curved part. In this case, the sound pickup channel is a curved channel, to prevent a sound (for example, a wind sound) outside the earphone from directly entering the sound pickup cavity, so as to improve windproof effect, reduce wind noise, and improve sound pickup accuracy of the second microphone.

In some possible implementations, the support is further provided with a rear discharge channel, and the rear discharge channel is disposed separately from the bass tube channel and the sound pickup channel. The rear discharge channel is formed with a fourth opening on the front side of the support, and is formed with a fifth opening on the peripheral side of the support, and the fifth opening communicates with the first through hole. The air in the rear cavity of the earphone can be propagated to the external space of the earphone through the rear discharge channel and the first through hole.

In this implementation, in this application, the bass tube channel, the sound pickup channel, and the rear discharge channel are integrated into the support. Integration is high, and utilization of the internal space of the earphone is high, to facilitate miniaturization of the earphone. A design solution of an integrated support is used for the earphone. Therefore, assembly difficulty can be reduced, a production yield can be improved, cost advantages can be brought, and product competitiveness can be further improved.

The fifth opening and the second opening are disposed adjacent to each other, that is, openings of the bass tube channel and the rear discharge channel on the peripheral side of the support are disposed adjacent to each other, to reduce an opening area of the first through hole when both the fifth opening and the second opening communicate with the first through hole, so as to avoid forming a hole with a large area on an appearance of the housing. This helps improve visual appearance integrity of the earphone. In some other embodiments, the fifth opening and the second opening may communicate with each other and combined into one opening.

A region that is of the support and that is located around the fifth opening is hermetically connected to the inner wall of the housing. For example, the region that is of the support and that is located around the fifth opening may be hermetically connected to the inner wall of the housing by using an adhesive layer, to improve sealing performance of the sound pickup channel. The adhesive layer may surround both the fifth opening and the second opening, so that the regions that are of the support and that are located around the fifth opening and the second opening are hermetically connected to a region that is of the inner wall of the housing and that is located around the first through hole.

A seventh mesh fabric is fastened on the front side of the support and covers the fourth opening. The seventh mesh fabric may be fastened to the support by using an adhesive layer, or may be fastened to the support in another manner.

In some possible implementations, a distance between the fifth opening and the third opening on the peripheral side of the support is greater than or equal to 10 mm. In this case, there is a specific distance between the fifth opening and the third opening, to meet an isolation requirement between the sound pickup channel and the rear discharge channel, for example, to meet a requirement that isolation is greater than or equal to 30 dB, so as to improve sound pickup accuracy of the second microphone. The first through hole of the housing and the fifth opening are correspondingly disposed, and the second through hole and the third opening are correspondingly disposed. A distance between the first through hole and the second through hole also needs to meet a specific requirement. For example, a distance on an outer surface of the housing is greater than or equal to 10 mm.

In some possible implementations, the earphone further includes a third appearance mesh, and the third appearance mesh is fastened to the inner wall of the housing and covers the second through hole. The third appearance mesh may be fastened to the inner wall of the housing by using an adhesive layer. The third appearance mesh may include a main body and a flange. The flange is circumferentially connected to a peripheral edge of the main body, the flange is fastened to the inner wall of the housing, and the main body is built into the second through hole.

The third appearance mesh is made of a conductive material, and is grounded. In this case, the third appearance mesh may prevent an electric shock problem. The third appearance mesh may further include an extension member. The extension member is connected to the flange, and the extension member is configured to be electrically connected to the first flexible circuit board, to implement grounding of the third appearance mesh. In this implementation, the third appearance mesh is a conductive member, and the extension member of the third appearance mesh is fastened and electrically connected to the first flexible circuit board in a soldering manner. A soldering connection relationship is reliable, a process is simple, and costs are low.

In some possible implementations, the support is an integrally formed structural member. In this case, the support has high structural strength, so that stability of an overall structure formed by assembling the support and a related cover plate is good. In some other embodiments, the support may alternatively be assembled by using a plurality of structures to form an integrated structure, to meet a modular assembly requirement.

In some embodiments, the support may be made of a plastic material, to implement a light weight. In some other embodiments, the support may alternatively be made of a magnetic conductive material (for example, metal or the like), or at least a part of a region is covered with a magnetic isolation sheet, to implement magnetic isolation and lower a risk that current noise occurs in the speaker.

In some possible implementations, the housing includes a main housing and a front housing, the front housing is fastened on a front side of the main housing, internal space of the front housing communicates with internal space of the main housing, and when the earphone is being worn, the front housing faces a user ear. The main housing includes a first end connected to the front housing and a second end that is far away from the front housing, and in a direction from the first end to the second end of the main housing, an outer contour of the main housing first shrinks and then expands. The internal space of the main housing includes top space, middle space, and bottom space, a cross-sectional area of the top space of the main housing is greater than a cross-sectional area of the middle space of the main housing, and a cross-sectional area of the bottom space of the main housing is greater than the cross-sectional area of the middle space of the main housing.

The speaker is located in the internal space of the front housing and the top space of the main housing, and the speaker is fixedly connected to the front housing. The earphone further includes a magnetic attraction member. Both the magnetic attraction member and the support are located in the top space of the main housing, and are fixedly connected to the main housing, and the magnetic attraction member is located on a bottom side of the support. In this case, a volume and a position of the magnetic attraction member can meet a requirement for magnetic attraction force required for placing the earphone in a case.

A side, of the magnetic attraction member, and a side, of the support, that face away from the speaker form a main board cavity. The main board cavity may be a sealed cavity. For example, the support, the related cover plate, and the magnetic attraction member form a separation assembly, the support is hermetically connected to the magnetic attraction member, and a peripheral edge of the separation assembly is hermetically connected to the inner wall of the housing, so that sealing of the main board cavity is reliable.

The separation assembly may include a magnetic isolation member, to lower a risk that current noise occurs in the speaker. For example, the magnetic isolation member may be implemented by the support, the first cover plate, the second cover plate, and/or the third cover plate. In addition, the magnetic attraction member may be a soft magnet (for example, a metal block such as an iron block). In this case, the magnetic attraction member may also be used as a magnetic isolation member.

In some possible implementations, the front housing has a first communication hole and a second communication hole that are disposed at an interval. The front housing is approximately in a shape of a cover body. The front housing may include a front side housing portion and a peripheral side housing portion. The front side housing portion is disposed to face forward, and the peripheral side housing portion is connected to the front side housing portion and is disposed around the front side housing portion. The first communication hole may be disposed at the front side housing portion of the front housing, and the second communication hole may be disposed at the peripheral side housing portion of the front housing.

Both a first assembly and a second assembly in an audio auxiliary assembly are mounted in the internal space of the front housing, and may be located in a front cavity of the earphone. The first assembly is disposed to correspond to the first communication hole and covers the first communication hole, and the second assembly is disposed to correspond to the second communication hole and covers the second communication hole.

In some embodiments, the first assembly includes a first base body, a first appearance mesh, a first grounding member, a first mesh fabric, a fastening plate, and a plurality of adhesive layers. The first base body is provided with a front discharge hole and a light transmission region. The front discharge hole is of a through hole structure, and allows a sound to pass through. The light transmission region allows light to pass through. The light transmission region is disposed at an interval from the front discharge hole, and the light transmission region may be located on one side of the front discharge hole or disposed around the front discharge hole. This is not strictly limited herein.

For example, the first base body may include a main body and a flange, and the flange is circumferentially connected to a peripheral edge of the main body. The front discharge hole and the light transmission region may be formed on the main body. The first base body may be an integrally formed structural member, and the first base body is a light transmission structural member, so that a corresponding structure of the light transmission region allows light to pass through. The first base body may have a black or approximately black appearance, but allows light to pass through. For example, the first base body may include a transparent substrate and a black film layer, the black film layer is fastened to the transparent substrate, and a position that is of the black film layer and that corresponds to the light transmission region is hollowed out or has a small thickness.

The first base body may be fastened to the front housing by using an adhesive layer. When the first base body is mounted on the front housing, the main body of the first base body may be built into the first communication hole of the front housing, and the flange is connected to an inner wall of the front housing by using the adhesive layer. The adhesive layer may be a continuous rubber ring, to connect the first base body and the front housing, and seal the first base body and the front housing. The adhesive layer may be double-sided adhesive tape, glue, or another adhesive material. The main body of the first base body forms a partial appearance of the earphone.

For example, the first appearance mesh may include a main body and a flange, and the flange is circumferentially connected to a peripheral edge of the main body. The first appearance mesh is fastened on a rear side of the first base body and covers the front discharge hole. The main body of the first appearance mesh is built into the front discharge hole, and the flange of the first appearance mesh is fastened to an inner wall of the first base body. The first appearance mesh forms a partial appearance of the earphone. The first appearance mesh may be a metal mesh, to improve a fashion sense and mechanical reliability of the earphone, and lower a risk that a part located on a rear side of the first appearance mesh is damaged by external force, for example, prevent penetration of an external sharp object, so as to extend a service life of the earphone. The first appearance mesh may be an integrally formed structural member. For example, the first appearance mesh may be formed by stamping a metal mesh member.

For example, the first grounding member includes a fastening portion and a connection portion. One end of the connection portion is connected to the fastening portion, and the fastening portion may be ring-shaped. The first grounding member is fastened on a side that is of the first appearance mesh and that faces away from the first base body. The fastening portion of the first grounding member may be circumferentially fixedly connected to the first appearance mesh, for example, fixedly connected to the flange of the first appearance mesh. The fastening portion of the first grounding member may be further partially located on an inner side of the main body of the first appearance mesh. In this case, the first grounding member is disposed around the front discharge hole. The first grounding member is made of a conductive material, for example, a metal material. The first grounding member may be an integrally formed structural member. For example, the first grounding member may be formed by stamping a metal plate. The first grounding member is grounded, and is configured to prevent an electric shock problem from occurring in the first assembly.

For example, the first mesh fabric is fastened on a side that is of the first grounding member and that faces away from the first appearance mesh by using an adhesive layer. The first mesh fabric is configured to prevent external dust from entering the earphone and adversely affecting sound effect and sound quality of the earphone. The first mesh fabric is of a breathable structure.

In this implementation, air can pass through the first appearance mesh, the first grounding member, the first mesh fabric, and the plurality of adhesive layers, so that the front cavity of the earphone communicates with an outside of the earphone, to balance atmospheric pressure between the front cavity of the earphone and the outside of the earphone. The first assembly provides a front discharge channel for the speaker of the earphone.

For example, a second part of the first flexible circuit board is fastened on the rear side of the first base body by using an adhesive layer, and a proximity sensor is disposed to correspond to the light transmission region of the first base body. The proximity sensor transmits and receives an optical signal by using the light transmission region, to perform wearing detection of the earphone. The fastening plate may be fastened on a side that is of the second part of the first flexible circuit board and that faces away from the proximity sensor by using an adhesive layer, and the fastening plate is configured to enhance structural strength of the second part of the first flexible circuit board. The fastening plate may be further fixedly connected to the first base body, so that the second part of the first flexible circuit board is fixedly connected to the first base body, to improve assembly stability of the first assembly.

The connection portion of the first grounding member may be fastened and electrically connected to the second part of the first flexible circuit board, to implement grounding. For example, the connection portion of the first grounding member may be soldered to the second part of the first flexible circuit board. In some other embodiments, the first assembly may not be provided with the first grounding member, the first appearance mesh is made of a conductive material, and the first appearance mesh is electrically connected to the first flexible circuit board, to implement grounding.

In some embodiments, the second assembly includes a second base body, a second mesh fabric, a second appearance mesh, a second grounding member, a third mesh fabric, and a plurality of adhesive layers.

For example, the second base body has a first surface and a second surface. The first surface is located on one side of the second base body, and the second surface is connected to a peripheral edge of the first surface and is disposed in an inclined manner relative to the first surface. The second base body is provided with a first hole, a sound pickup channel, and a second hole. The first hole penetrates through the first surface to the other side of the second base body. An opening at one end of the sound pickup channel is located on the first surface, an opening at the other end extends to a surface on the other side of the second base body, and the sound pickup channel is separately disposed from the first hole. The sound pickup channel may be a curved channel. The second hole penetrates through the first surface or the second surface to the other side of the second base body, and the second hole is separately disposed from both the sound pickup channel and the first hole.

The second base body is fastened on an inner side of the front housing, the second base body is located in the front cavity, the first surface of the second base body faces the second communication hole, and the second surface faces the inner wall of the front housing.

For example, the second mesh fabric is fastened to the first surface of the second base body by using an adhesive layer. The second mesh fabric is configured to prevent external dust from entering the earphone and adversely affecting sound effect and sound quality of the earphone. The second mesh fabric covers the first hole of the second base body and an opening of the sound pickup channel on the first surface. In some embodiments, the second mesh fabric may cover the first surface of the second base body, and a shape of the adhesive layer may be adapted to a shape of the first surface.

For example, the second grounding member includes a fastening portion and a connection portion. One end of the connection portion is connected to the fastening portion, and the fastening portion may be ring-shaped. The second grounding member is fastened on a side that is of the second mesh fabric and that faces away from the second base body. The fastening portion of the second grounding member may be circumferentially fixedly connected to the second mesh fabric, for example, fixedly connected to a peripheral edge of the second mesh fabric by using an adhesive layer. The connection portion of the second grounding member may extend to the other side of the second base body through the second hole of the second base body. The second grounding member is made of a conductive material, for example, a metal material. The second grounding member may be an integrally formed structural member. For example, the second grounding member may be formed by stamping a metal plate. The second grounding member is grounded, and is configured to prevent an electric shock problem from occurring in the second assembly.

For example, the second appearance mesh includes a middle part and a peripheral part, and the peripheral part is circumferentially connected to a peripheral edge of the middle part. The middle part may protrude relative to the peripheral part, to form a bulging structure. Alternatively, the middle part may be of a flat structure, and the second appearance mesh is of a planar mesh structure. The peripheral part of the second appearance mesh may be fastened on a side that is of the second grounding member and that faces away from the second mesh fabric by using an adhesive layer, and the middle part of the second appearance mesh may protrude in a direction far away from the second base body.

The second appearance mesh may be a metal mesh, to improve a fashion sense and mechanical reliability of the earphone, and lower a risk that a part located on a rear side of the second appearance mesh is damaged by external force, for example, prevent penetration of an external sharp object, so as to extend a service life of the earphone. The second appearance mesh may be an integrally formed structural member. For example, the second appearance mesh may be formed by stamping a metal mesh member. In some other embodiments, the second appearance mesh may alternatively be made of a plastic material or another material.

For example, all of the second appearance mesh, the second grounding member, and the second mesh fabric are located between the second communication hole of the front housing and the second base body, the peripheral part of the second appearance mesh is connected to the inner wall of the front housing by using an adhesive layer, and both the second appearance mesh and the second mesh fabric cover the second communication hole. When the speaker 31 works, air in the front cavity is pushed to vibrate to form a sound, and the sound sequentially passes through the first hole of the second base body, the second mesh fabric, the second appearance mesh, and the second communication hole of the front housing, and is propagated to the outside of the earphone, to implement sound generation. The second assembly forms a sound output channel of the speaker 31.

An opening area of the first hole of the second base body needs to meet a sound output requirement of the speaker. When there are a plurality of first holes, the plurality of first holes are disposed at an interval from each other, an area of a single first hole is small, and a total area of the plurality of first holes meets the sound output requirement. In this case, structural strength of the second base body is high.

For example, the third mesh fabric may be fastened on a side that is of the second base body and that faces away from the first surface by using an adhesive layer, and covers an opening of the sound pickup channel. A third part of the first flexible circuit board may be fastened on a side that is of the third mesh fabric and that faces away from the second base body by using an adhesive layer. The third part of the first flexible circuit board is provided with a through hole, and a first microphone fastened to the third part of the first flexible circuit board may receive a sound through the through hole. The third mesh fabric covers the through hole.

In this implementation, a sound outside the earphone may sequentially pass through the second appearance mesh, the second mesh fabric, the sound pickup channel, the third mesh fabric, and the through hole of the third part of the first flexible circuit board, and enter the first microphone, and the earphone collects the external sound by using the first microphone, to implement sound pickup.

The connection portion of the second grounding member may be fastened and electrically connected to the third part of the first flexible circuit board, to implement grounding. For example, the connection portion of the second grounding member may be soldered to the third part of the first flexible circuit board. In some other embodiments, the second assembly may not be provided with the second grounding member, the second appearance mesh is made of a conductive material, and the second appearance mesh is electrically connected to the first flexible circuit board, to implement grounding.

In some possible implementations, the speaker includes a basin frame, a magnetic circuit assembly, and a diaphragm. Both the magnetic circuit assembly and the diaphragm are fixedly connected to the basin frame, second space is formed between the diaphragm and the magnetic circuit assembly, and third space is formed on a side that is of the magnetic circuit assembly and that faces away from the diaphragm. The basin frame is provided with a first through hole or a second through hole, and the first through hole or the second through hole of the basin frame communicates with the second space and the third space. A third through hole is disposed at a middle part of the magnetic circuit assembly, and the third through hole communicates with the second space and the third space.

In this implementation, first space is formed on a side that is of the diaphragm and that faces away from the magnetic circuit assembly, the second space is formed between the diaphragm and the magnetic circuit assembly, and the third space is formed on the side that is of the magnetic circuit assembly and that faces away from the diaphragm. When the speaker is mounted in the earphone, the first space corresponds to the front cavity, and the third space corresponds to the rear cavity. All of the first through hole, the second through hole, and the third through hole communicate with the second space and the third space, and the first through hole, the second through hole, and the third through hole form a rear discharge hole of the speaker. In this embodiment of this application, the third through hole is additionally disposed on the speaker, so that a hole area of the rear discharge hole of the speaker is greatly increased. This helps reduce overall acoustic impedance of the earphone, so that resonance effect between the speaker and the bass tube channel is better, and low-frequency performance of the earphone is better.

The overall acoustic impedance of the earphone includes mechanical acoustic impedance of the diaphragm of the speaker, acoustic impedance of the rear discharge hole of the speaker, acoustic impedance of the bass tube channel, and acoustic impedance of a sound hole. The mechanical acoustic impedance of the diaphragm is resistance received when the diaphragm vibrates. The acoustic impedance of the rear discharge hole of the speaker is acoustic impedance of a mesh fabric covering the rear discharge hole of the speaker, and is acoustic impedance of the first mesh fabric, the second mesh fabric, and the third mesh fabric in this implementation. The acoustic impedance of the bass tube channel is acoustic impedance of a mesh fabric at an opening of the bass tube channel, and in this implementation, is acoustic impedance of a mesh fabric at a position at which the bass tube channel communicates with the outside. The acoustic impedance of the sound hole is acoustic impedance of a mesh fabric at a position at which the front cavity of the earphone communicates with the outside, that is, acoustic impedance of the second mesh fabric covering the second communication hole.

For example, the overall acoustic impedance of the earphone is less than or equal to $10^7$ pa*s/mm$^3$, to ensure good resonance effect between the speaker and the bass tube channel.

In some possible implementations, a hole area of the third through hole is less than or equal to 3.14 mm$^2$, to ensure that magnetic field strength of the magnetic circuit assembly of the speaker is sufficient when the overall acoustic impedance is reduced. The third through hole may be a round hole, a square hole, or a hole in another shape. When the third through hole is a round hole, a diameter of the third through hole is less than or equal to 2 mm.

According to a fourth aspect, an embodiment of this application further provides an earphone assembly. The earphone assembly includes a charging case and the earphone according to any one of the foregoing first implementations. The charging case is configured to accommodate the earphone.

According to a fifth aspect, an embodiment of this application further provides an earphone assembly. The earphone assembly includes a charging case, a first earphone, and a second earphone. The charging case has a first earphone slot and a second earphone slot that are disposed at an interval. The charging case includes a first electrode, a second electrode, a third electrode, and a fourth electrode. Both the first electrode and the second electrode are at least partially located in the first earphone slot, and both the third electrode and the fourth electrode are at least partially located in the second earphone slot. The second electrode and the third electrode are located between the first electrode and the fourth electrode. A polarity of the first electrode is the same as a polarity of the third electrode, and a polarity of the second electrode is the same as a polarity of the fourth electrode.

The first earphone includes a first contact and a second contact that are disposed at an interval, and the second earphone includes a first contact and a second contact that are disposed at an interval. A polarity of the first contact of the second earphone is the same as a polarity of the first contact of the first earphone, and a polarity of the second contact of the second earphone is the same as a polarity of the second contact of the first earphone.

The first earphone is detachably accommodated in the first earphone slot, the first contact of the first earphone is in contact with the first electrode, and the second contact of the first earphone is in contact with the second electrode. The second earphone is detachably accommodated in the second earphone slot, the first contact of the second earphone is in contact with the third electrode, and the second contact of the second earphone is in contact with the fourth electrode.

In this application, when the first earphone and the second earphone are correctly placed in the charging case, the polarities of the contacts of the first earphone and the second earphone correspond to the polarities of the plurality of electrodes of the charging case, there is a correct connection, and the first earphone and the second earphone can normally communicate with the charging case and be charged. When the first earphone is placed in the second earphone slot, the second earphone is placed in the first earphone slot, and the first earphone and the second earphone are incorrectly placed in the charging case in a manner of reversely placing the two earphones, the first contact of the second earphone is in contact with the first electrode, the second contact of the second earphone is in contact with the second electrode, the first contact of the first earphone is in contact with the third electrode, and the second contact of the first earphone is in contact with the fourth electrode. The polarities of the contacts of the first earphone and the second earphone still correspond to the polarities of the plurality of electrodes of the charging case, and there is a correct connection. Therefore, damage to next circuits of the first earphone and the second earphone can be effectively avoided, and the earphone and the earphone assembly have a long service life.

The polarities of the first electrode to the fourth electrode of the charging case may be sequentially arranged as positive, negative, positive, and negative, or negative, positive, negative, and positive. When the first earphone and the second earphone are correctly placed in the charging case, the polarities of the plurality of contacts of the first earphone and the second earphone are sequentially arranged as positive, negative, positive, and negative, or negative, positive, negative, and positive.

In some possible implementations, both the first contact of the first earphone and the second contact of the first earphone are fastened to a housing of the first earphone, and are exposed relative to the housing of the first earphone; and both the first contact of the second earphone and the second contact of the second earphone are fastened to a housing of the second earphone, and are exposed relative to the housing of the second earphone. The housing of the first earphone and the housing of the second earphone are of mutually symmetric structures, the first contact of the first earphone is symmetrically disposed with the second contact of the second earphone, and the second contact of the first earphone is symmetrically disposed with the first contact of the second earphone.

When the first earphone is placed in the first earphone slot, and the first earphone is incorrectly placed in the charging case in a manner of implementing reverse placement through rotation, the first contact of the first earphone is in contact with the second electrode, the second contact of the first earphone is in contact with the first electrode, the polarities of the contacts of the first earphone are opposite to the polarities of the plurality of electrodes of the charging case, and a reverse connection occurs. When the first earphone is placed in the second earphone slot, and the first earphone is incorrectly placed in the charging case in a manner of implementing reverse placement through rotation, the first contact of the first earphone is in contact with the fourth electrode, the second contact of the first earphone is in contact with the third electrode, the polarities of the contacts of the first earphone are opposite to the polarities of the plurality of electrodes of the charging case, and a reverse connection occurs.

In the foregoing two cases of reverse connection, an anti-reverse connection circuit may be disposed in the first earphone and the second earphone in the earphone assembly. The anti-reverse connection circuit is connected in series between the first contact or the second contact and a charging circuit. The anti-reverse connection circuit is configured to: be turned on when the first earphone or the second earphone is correctly connected to the charging case, and be turned off when the first earphone or the second earphone is reversely connected to the charging case, to effectively avoid damage to the next circuits of the first earphone and the second earphone when the first earphone or the second earphone is incorrectly placed in the charging case. The anti-reverse connection circuit may include one or more of devices such as a MOS transistor, a resistor, a capacitor, a diode, and a magnetic bead.

In some possible implementations, in the first earphone, the first earphone includes an anti-reverse connection circuit and a charging circuit, the anti-reverse connection circuit is connected in series between the first contact or the second contact and the charging circuit, and the anti-reverse connection circuit is configured to be turned on when the first contact is in contact with the first electrode and the second contact is in contact with the second electrode, and is further configured to be turned off when the first contact is in contact with the second electrode and the second contact is in contact with the first electrode.

In this implementation, the anti-reverse connection circuit is turned on when the first earphone is correctly connected to the charging case, and is turned off when the first earphone is reversely connected to the charging case, to effectively avoid a case in which the next circuit is damaged when the first earphone is incorrectly placed in the charging case.

The anti-reverse connection circuit may be further turned on or off when the first contact is in contact with the third electrode and the second contact is in contact with the fourth electrode. The anti-reverse connection circuit is turned off when the first contact is in contact with the fourth electrode and the second contact is in contact with the third electrode.

For example, a processor of the first earphone is electrically connected to the anti-reverse connection circuit, and the processor is configured to control a working state of the anti-reverse connection circuit. The processor may send an enable signal to the anti-reverse connection circuit. The enable signal indicates the anti-reverse connection circuit to work.

In some possible implementations, the anti-reverse connection circuit includes an NMOS transistor, a drain of the NMOS transistor is electrically connected to the first contact or the second contact, and a source of the NMOS transistor is electrically connected to the charging circuit. In this implementation, the anti-reverse connection circuit implements, by using the NMOS transistor, a function of being turned on in a case of a correct connection and being turned off in a case of a reverse connection.

In some possible implementations, the first earphone further includes the processor, the processor is electrically connected to a gate of the NMOS transistor, and the processor is configured to control the working state of the anti-reverse connection circuit.

For example, the drain of the NMOS transistor is electrically connected to the second contact, the source of the NMOS transistor is electrically connected to a second port of the charging circuit, and the gate of the NMOS transistor may be electrically connected to the processor. Alternatively, the drain of the NMOS transistor is electrically connected to the first contact, the source of the NMOS transistor is electrically connected to a first port of the charging circuit, and the gate of the NMOS transistor may be electrically connected to the processor. When the first earphone is correctly connected to the charging case, Vgs of the NMOS transistor is greater than Vth, and the NMOS transistor is turned on. When the first earphone is reversely connected to the charging case, Vgs of the NMOS transistor is less than Vth, and the NMOS transistor is turned off.

An equivalent circuit of the NMOS transistor may include a MOS transistor part, a parasitic capacitor, and a body diode that are connected in parallel.

In some possible implementations, the first earphone further includes a first resistor and a second resistor, and the first resistor and the second resistor form a voltage divider circuit. The first resistor and the second resistor are connected in series between the first contact and the second contact, and the gate of the NMOS transistor is electrically connected between the first resistor and the second resistor. When the first earphone is correctly connected to the charging case, a first voltage exists between the first contact and the second contact, and the first resistor and the second resistor perform voltage division, so that a voltage exists at the gate of the NMOS transistor, and the NMOS transistor is turned on.

In some use scenarios, the first earphone is correctly placed in the first earphone slot in the charging case. When in-case presence detection is performed by using the first contact and the second contact, a detection voltage exists between the first contact and the second contact, and the first resistor and the second resistor perform voltage division, so that a voltage exists at the gate of the NMOS transistor, and the NMOS transistor is turned on. When the first earphone communicates with the charging case, if the charging case outputs a signal 1 (a high level), the first resistor and the second resistor perform voltage division, so that a voltage exists at the gate of the NMOS transistor, and the NMOS transistor is turned on; or if the charging case outputs a signal 0 (a low level), the processor outputs the enable signal, so that a voltage exists at the gate of the NMOS transistor, and the NMOS transistor is turned on. When the charging case charges the first earphone, a charging voltage exists between the first contact and the second contact, and the first resistor and the second resistor perform voltage division, so that a voltage exists at the gate of the NMOS transistor, and the NMOS transistor is turned on.

In some possible implementations, the first earphone further includes a first transient voltage suppressor, and two ends of the first transient voltage suppressor are respectively electrically connected to the first contact and the second contact; and/or the first earphone further includes a second transient voltage suppressor, and two ends of the second transient voltage suppressor are respectively electrically connected to the drain and the source of the NMOS transistor.

In this implementation, the transient voltage suppressor is a highly efficient protection device in a form of a diode. The first transient voltage suppressor and the second transient voltage suppressor are disposed to prevent the first earphone from generating static electricity, so as to improve reliability and user experience.

In some possible implementations, the first earphone may further include a diode, a positive electrode of the diode is connected to the processor, and a negative electrode is connected to the gate of the NMOS transistor, to prevent a voltage from flowing back into the processor, and lower a risk that the processor is damaged.

In some possible implementations, the anti-reverse connection circuit includes one NMOS transistor. In this case, the anti-reverse connection circuit includes few parts, has simple logic, is easy to control, and has low costs.

In some possible implementations, the anti-reverse connection circuit includes a plurality of NMOS transistors, and the plurality of NMOS transistors are connected in series or in parallel. When the NMOS transistors are connected in parallel, impedance of the anti-reverse connection circuit may be reduced, and a through current may be increased, to improve charging efficiency. In addition, a risk that the NMOS transistor is damaged can be lowered. When the NMOS transistors are connected in series, reliability of the anti-reverse connection circuit is high, to effectively prevent a risk that the next circuit of the first earphone is damaged when the first earphone is reversely connected to the charging case.

In some possible implementations, the first earphone further includes a third resistor, and two ends of the third resistor are respectively connected to two ports of the charging circuit. The third resistor is configured to implement impedance matching.

In some possible implementations, the anti-reverse connection circuit may further cooperate with software of the earphone, to ensure that when the first earphone and the second earphone are correctly connected to the charging case, normal communication and charging can be performed, and when the first earphone and the second earphone are reversely connected to the charging case, a component such as a charging circuit of the charging case and the next circuit such as the charging circuit of the earphone are protected, so as to improve reliability of the earphone assembly.

In some possible implementations, an anti-reverse connection function is enabled by default for software of the first earphone and the second earphone. That is, the processor sends the enable signal to the anti-reverse connection circuit by default, so that the anti-reverse connection circuit is in the working state. In this case, when the first earphone and the second earphone are correctly connected to the charging case, charging and communication can be implemented; and when the first earphone and the second earphone are reversely connected to the charging case, the next circuits of the first earphone and the second earphone are normal.

In some other possible implementations, an anti-reverse connection function is not enabled by default for software of the first earphone and the second earphone, but the anti-reverse connection function is enabled in some scenarios. For example, the first earphone and the second earphone may determine, based on an in-case/out-case presence detection status, whether to enable the anti-reverse connection function. For example, the first earphone includes an in-case presence detection component (for example, a Hall sensor), the in-case presence detection component is electrically connected to the processor, the in-case presence detection component is configured to detect whether the first earphone is accommodated in the first earphone slot in the charging case, and the processor is configured to control the anti-reverse connection circuit to work when the first earphone is accommodated in the first earphone slot. The first earphone and the second earphone may further determine, based on other status changes of the earphone, including but not limited to changes of status registers such as a sensor and the charging circuit, whether to enable the anti-reverse connection function.

In some possible implementations, in the first earphone, the first earphone includes the processor, the charging circuit, and the in-case presence detection component, the processor is electrically connected to the charging circuit and the in-case presence detection component, the charging circuit is electrically connected to the first contact and the second contact, the in-case presence detection component is configured to detect whether the first earphone is accommodated in the first earphone slot, and the processor is configured to control the charging circuit to work when the first earphone is accommodated in the first earphone slot.

Working states of charging circuits of the first earphone and the second earphone may be controlled, to ensure that when the first earphone and the second earphone are correctly connected to the charging case, normal communication and charging can be performed, and when the first earphone and the second earphone are reversely connected to the charging case, the next circuits are not damaged, so as to improve reliability of the earphone assembly.

In some possible implementations, in the charging case, the charging case further includes a processor and a charging circuit, the charging circuit is electrically connected to the processor, the first electrode, and the second electrode, and the processor is configured to: when the first earphone is accommodated in the first earphone slot, obtain a battery level of the first earphone through the charging circuit, the first electrode, and the second electrode, and when the battery level of the first earphone is less than or equal to a threshold, control the charging circuit to charge the first earphone.

A working mode of the charging circuit includes a communication mode and a charging mode, and the two modes are time-division multiplexed. In some use scenarios, after the charging case is opened, the charging circuit is in the communication mode, and the processor continuously performs polling through the charging circuit, to detect whether the first earphone is placed in the case. After detecting that the first earphone is placed in the case, the processor obtains the battery level of the first earphone through the charging circuit, and determines whether the first earphone needs to be charged. When the battery level of the first earphone is less than or equal to the threshold, the processor determines that the first earphone needs to be charged, and controls the charging circuit to switch to the charging mode and charge the first earphone. After charging is performed for a specific time, the processor controls the charging circuit to switch to the communication mode, reads the battery level of the first earphone again, and determines whether to continue charging the first earphone. This is repeated for one or more times. When the processor determines that the first earphone is fully charged, charging is stopped. When determining that the battery level of the first earphone is sufficient (for example, greater than 90%), or a voltage of the first earphone is sufficient, the processor may control the charging circuit to reduce a charging current.

In this implementation, a dual-contact solution is used for the first earphone, and a dual-electrode solution is correspondingly used for the charging case. Therefore, in a working process of the assembly of the first earphone, the two contacts of the first earphone and the two electrodes of the charging case are switched between the communication mode and the charging mode.

In some possible implementations, the housing of the first earphone is of an asymmetric structure, the first earphone slot is of an asymmetric structure, and a shape of the first earphone slot is the same as a shape of the housing of the first earphone. Similarly, the housing of the second earphone is of an asymmetric structure, the second earphone slot is of an asymmetric structure, and a shape of the second earphone slot is the same as a shape of the housing of the second earphone. When the first earphone and the second earphone are placed in an incorrect posture in the charging case, the first earphone and the second earphone cannot be placed in place, and a user can be reminded to place the first earphone and the second earphone again, to help improve user experience.

In some possible implementations, in the first earphone, the housing includes a main housing and a front housing, the front housing is fastened on a front side of the main housing, internal space of the front housing communicates with internal space of the main housing, and when the earphone is being worn, the front housing faces a user ear. The main housing includes a first end that is in contact with the front housing and a second end that is far away from the front housing, and in a direction from the first end to the second end of the main housing, an outer contour of the main housing first shrinks and then expands. Both the first contact and the second contact are fastened to the main housing and exposed relative to the main housing.

In this implementation, a shape of the main housing is designed, so that a stem of the earphone can have a shape similar to that of a "freely falling water drop", and an appearance is exquisite.

In some possible implementations, in the first earphone, the main housing includes a main housing member, the main housing member includes a top part, a middle part, and a bottom part that are sequentially connected, the top part of the main housing member is connected to the front housing, and both the first contact and the second contact are fastened to the bottom part of the main housing member. The first earphone slot includes a first bottom slot and a first top slot that are located in a case body of the charging case. When the first earphone is placed in the first earphone slot, the bottom part of the main housing member is located in the first bottom slot, both the front housing and the top part of the main housing member are partially located in the first top slot and partially located outside the case body, and the middle part of the main housing member is located outside the case body.

In this implementation, when the first earphone is placed in the first earphone slot, a large part of the first earphone is exposed relative to the charging case, to help the user take out the earphone and improve user experience. In addition, the two contacts are located at the bottom part of the main housing member, to facilitate smooth contact between the two contacts and the electrodes of the charging case, and ensure reliability of an electrical connection.

According to a sixth aspect, an embodiment of this application provides a charging case. The charging case has two earphone slots that are disposed at an interval, and the earphone slot is configured to accommodate an earphone. The charging case includes a case body and a case cover, and the case cover is rotatably connected to the case body. The earphone slot includes a top slot and a bottom slot that are located in the case body. The top slot is configured to accommodate an earbud of the earphone. The bottom slot is configured to accommodate a stem of the earphone. The case body includes a top surface disposed to face the case cover. Both an opening of the top slot and an opening of the bottom slot are located on the top surface of the case body, and the opening of the bottom slot is lower than the opening of the top slot.

In this embodiment of this application, a display surface of the charging case is an inclined surface. When the earphone is placed in the earphone slot, a large part of the earphone is exposed relative to the charging case, so that a user can easily take out the earphone, to improve user experience of taking out the earphone from the charging case, ensure specific aesthetics, and improve product appearance exquisiteness.

In some possible implementations, the opening of the bottom slot and the opening of the top slot are disposed at an interval. In this case, an end that is of the opening of the bottom slot and that is close to the opening of the top slot is lower than an end that is of the opening of the top slot and that is close to the opening of the bottom slot. In this implementation, the opening of the bottom slot may be significantly lower than the opening of the top slot, so that when the earphone is placed in the earphone slot, a larger part of the earphone is exposed relative to the charging case.

In some possible implementations, a lowest part of a bottom wall of the top slot is not lower than a lowest edge of the opening of the bottom slot. In this implementation, when the earphone is placed in the earphone slot, a larger part of the earphone is exposed relative to the charging case.

In some possible implementations, the case body has a first end and a second end that are disposed opposite to each other, the case cover has a first end and a second end that are disposed opposite to each other, the first end of the case cover is rotatably connected to the first end of the case body, and the second end of the case cover is far away from the second end of the case body, to open the case cover relative to the case body, or the second end of the case cover is close to the second end of the case body, to close the case cover relative to the case body; and the top slot is closer to the first end of the case body than the bottom slot.

In some possible implementations, the first end of the case body is higher than the second end of the case body.

In some possible implementations, the case body includes a case body housing and a case body lining, the case body lining is fastened on an inner side of the case body housing, the case body lining has the top slot and the bottom slot, and a top part of the case body lining protrudes relative to the case body housing. In this case, a top surface of the case body housing protrudes relative to a top surface of the case body lining, so that the user can more conveniently take out the earphone placed in the charging case, to improve user experience.

In some possible implementations, the top surface of the case body housing is a plane, so that processing difficulty of the case body housing and a case cover housing is reduced, the case body housing and the case cover housing are easily closed, and a parting surface of the charging case is a plane. In this case, an appearance of the charging case is exquisite and concise. In some other embodiments, the parting surface of the charging case may alternatively be a curved surface. This is not strictly limited in this embodiment of this application.

The top surface of the case body lining is a curved surface, so that shapes of an opening of the top slot and an opening of the bottom slot better match and support the earphone. In this case, the earphone is stably and reliably placed in the charging case, and is convenient for the user to take out. In addition, the display surface of the charging case is beautiful and exquisite. In some other embodiments, the top surface of the case body housing may alternatively be a plane. This is not strictly limited in this embodiment of this application.

In some possible implementations, the charging case has a width direction, a thickness direction, and a height direction that are perpendicular to each other, the two earphone slots are arranged in the width direction of the charging case, a dimension of the charging case in the height direction is greater than a dimension of the charging case in the thickness direction, and the top surface of the case body housing is inclined to the thickness direction of the charging case, and is inclined to the height direction of the charging case.

In some possible implementations, the charging case includes a magnet, and the magnet is fastened to the case body lining, and is located between the top slot and the bottom slot. In this implementation, there is large space between the top slot and the bottom slot, so that a magnet with a large volume can be placed, to increase magnetic attraction force used to attract the earphone. When the earphone is placed in the earphone slot, a magnetic attraction member of the earphone and the magnet of the charging case are disposed opposite to each other, and the magnetic attraction member and the magnet are close to each other and have a small spacing, to generate sufficient magnetic attraction force, so that the first earphone is stably placed in the charging case.

In some possible implementations, the charging case further includes a battery and a circuit board, both the battery and the circuit board are fastened on the inner side of the case body housing, and are located below the case body lining, the circuit board is located below the bottom slot, and the battery is located below the top slot. In this case, the battery and the circuit board may be arranged by fully using space in the case body, and space utilization of the charging case is high.

In some possible implementations, the charging case further includes a hinge assembly, the hinge assembly includes a rotating shaft and a hinge bracket, the hinge bracket is fastened to the case body, and the case cover is rotatably connected to the hinge bracket by using the rotating shaft, to be rotatably connected to the case body.

In some possible implementations, the charging case further includes a wireless charging coil, and the wireless charging coil is fastened in the case body; and the hinge bracket includes a metal part and a plastic part, the plastic part is located between the metal part and the wireless charging coil, and the rotating shaft is inserted into the metal part.

In this implementation, the hinge bracket may reduce adverse impact of a metal piece on the charging case in a wireless charging process while ensuring strength of a connection structure, to ensure wireless charging performance of an earphone assembly.

The hinge bracket may be an integrally formed structural member, to have high structural strength. For example, the hinge bracket may be formed by using a metal injection molding (Metal injection Molding, MIM) process, a metal insert injection molding process, or the like.

In some possible implementations, the case cover includes an adapter block, and the adapter block is rotatably connected to the hinge bracket by using the rotating shaft. The case body is provided with a notch, and when the case cover is closed relative to the case body, the adapter block covers the notch. In this case, the appearance of the charging case is complete.

In some possible implementations, the hinge assembly further includes a decorative part, and the decorative part is fastened on an outer side of the adapter block and covers an outer side surface of the adapter block.

In this implementation, the decorative part covers the outer side surface of the adapter block. When the charging case is closed, the decorative part covers the notch of the case body, and jointly forms the appearance of the charging case with the case body.

In some possible implementations, the decorative part is made of an aluminum alloy material. In this case, the decorative part is beautiful and has high structural strength, and impact on the wireless charging process of the charging case can be reduced. The decorative part may be formed by bending a plate, has high structural strength, is easy to process, and has low costs.

In some possible implementations, the decorative part includes a first plate, a second plate, and a third plate, the second plate and the third plate are respectively connected to two ends of the first plate, and are both bent to the first plate, the first plate covers the outer side surface of the adapter block, and the rotating shaft is inserted into the second plate and the third plate.

In this implementation, a structure in which two ends pass through the shaft is designed for the decorative part. Therefore, a problem of uneven gaps between the decorative part and both a conventional rearmounted decorative part and the case body is resolved, and aesthetics is improved. In addition, support for the rotating shaft is increased, so that structural strength of the hinge assembly is high, to improve reliability.

In some possible implementations, the hinge assembly further includes a torsion spring, one end of the torsion spring is connected to the hinge bracket, and the other end of the torsion spring is connected to the adapter block. In this implementation, the torsion spring is disposed, so that a feel of opening and closing the cover is achieved for the charging case.

In some possible implementations, the charging case includes a first electrode, a second electrode, a third electrode, and a fourth electrode, both the first electrode and the second electrode are at least partially located in one earphone slot, both the third electrode and the fourth electrode are at least partially located in the other earphone slot, the second electrode and the third electrode are located between the first electrode and the fourth electrode, a polarity of the first electrode is the same as a polarity of the third electrode, and a polarity of the second electrode is the same as a polarity of the fourth electrode.

In this implementation, when the earphone is correctly placed in the charging case, polarities of contacts of the earphone correspond to the polarities of the plurality of electrodes of the charging case, there is a correct connection, and the earphone can normally communicate with the charging case and be charged. When the earphone is incorrectly placed in the charging case in a manner of reversely placing two earphones, polarities of contacts of the earphone still correspond to the polarities of the plurality of electrodes of the charging case, and there is a correct connection. Therefore, damage to a next circuit of the earphone can be effectively avoided, and the earphone and the earphone assembly have a long service life.

According to a seventh aspect, an embodiment of this application further provides an earphone assembly. The earphone assembly includes two earphones and the charging case according to any one of the foregoing implementations.

## BRIEF DESCRIPTION OF DRAWINGS

FIG. 1A is a rear view of an earphone in some embodiments according to this application;
FIG. 1B is a left view of the earphone shown in FIG. 1A;
FIG. 2 is a diagram of a structure of the earphone shown in FIG. 1A in some use scenarios;
FIG. 3 is a diagram of a partial exploded structure of the earphone shown in FIG. 1A;
FIG. 4 is a diagram of a cross-sectional structure that is of the earphone shown in FIG. 1A and that is taken along A-A;
FIG. 5 is a block diagram of some circuits of the earphone shown in FIG. 1A;
FIG. 6 is a diagram of an exploded structure of a housing shown in FIG. 3;
FIG. 7 is a diagram of an internal structure of a housing shown in FIG. 3;
FIG. 8A is a diagram 1 of a demolding process of a middle housing shown in FIG. 6;
FIG. 8B is a diagram 2 of a demolding process of a middle housing shown in FIG. 6;
FIG. 9A is a rear view of a housing of an earphone in some other embodiments according to this application;
FIG. 9B is a left view of the housing shown in FIG. 9A;
FIG. 10A is a rear view of a housing of an earphone in some other embodiments according to this application;
FIG. 10B is a left view of the housing shown in FIG. 10A;

FIG. 11A is a diagram of a structure of a housing of an earphone in some other embodiments according to this application;

FIG. 11B is a diagram of a structure of a housing of an earphone in some other embodiments according to this application;

FIG. 11C is a diagram of a structure of a housing of an earphone in some other embodiments according to this application;

FIG. 11D is a diagram of a structure of a housing of an earphone in some other embodiments according to this application;

FIG. 12A is a diagram of a partial structure of a conventional earphone;

FIG. 12B is a diagram of a partial structure of another conventional earphone;

FIG. 13 is a diagram of a partial structure of the earphone shown in FIG. 1A;

FIG. 14 is a brief diagram of a partial structure of the earphone shown in FIG. 4;

FIG. 15 is a diagram of a partial structure of the earphone shown in FIG. 1A;

FIG. 16 is a diagram of structures of a first flexible circuit board and some components shown in FIG. 15;

FIG. 17 is a diagram of structures of a second flexible circuit board and some components shown in FIG. 15;

FIG. 18 is a diagram of a partial structure of the earphone shown in FIG. 1A at another angle;

FIG. 19 is a diagram of an exploded structure of a first assembly shown in FIG. 3;

FIG. 20 is a diagram of a partial cross-sectional structure of the earphone shown in FIG. 18 along B-B;

FIG. 21 is a diagram of an exploded structure of a second assembly shown in FIG. 3;

FIG. 22 is a diagram of a structure of a second base body of the second assembly shown in FIG. 21 at another angle;

FIG. 23 is a diagram of the other partial cross-sectional structure of the earphone shown in FIG. 18 along B-B;

FIG. 24 is a diagram of a partial structure of the earphone shown in FIG. 1A;

FIG. 25 is a diagram of a structure of a fifth assembly in an audio auxiliary assembly shown in FIG. 3;

FIG. 26 is a diagram of a partial exploded structure of the fifth assembly shown in FIG. 25;

FIG. 27 is a diagram of a structure of the fifth assembly shown in FIG. 25 at another angle;

FIG. 28 is a diagram of a partial exploded structure of the fifth assembly shown in FIG. 27;

FIG. 29A is a simulation diagram of a relationship between a length of a bass tube channel of the fifth assembly shown in FIG. 25 and a frequency response of an earphone in a possible implementation;

FIG. 29B is a simulation diagram of a relationship between a cross-sectional area of a bass tube channel of the fifth assembly shown in FIG. 25 and a frequency response of an earphone in a possible implementation;

FIG. 30A is a diagram of a partial internal structure of the earphone shown in FIG. 1A;

FIG. 30B is a diagram of a cross-sectional structure of the partial structure shown in FIG. 30A along F-F;

FIG. 31A is a diagram of a structure of a speaker shown in FIG. 3;

FIG. 31B is a diagram of a cross-sectional structure of the speaker shown in FIG. 31A along E-E;

FIG. 31C is a diagram of an exploded structure of the speaker shown in FIG. 31A;

FIG. 31D is a diagram of an overall frequency response curve of the earphone shown in FIG. 1A in some possible implementations;

FIG. 32A is a diagram of a structure of an antenna of the earphone shown in FIG. 3;

FIG. 32B is a diagram of a structure of the antenna shown in FIG. 32A at another angle;

FIG. 33A is a diagram of an assembly structure of an antenna and a main circuit board shown in FIG. 3;

FIG. 33B is a diagram of a structure of the structure shown in FIG. 33A at another angle;

FIG. 34A is a diagram of an assembly structure of a main circuit board, an antenna, and a detection circuit board shown in FIG. 3;

FIG. 34B is a diagram of a structure of the structure shown in FIG. 34A at another angle;

FIG. 35 is a diagram of a partial structure of the earphone shown in FIG. 4;

FIG. 36 is a diagram of a partial structure of a first circuit board shown in FIG. 34A;

FIG. 37 is a diagram of structures of a first circuit board and the antenna shown in FIG. 34A in some other embodiments;

FIG. 38 is a diagram of structures of a detection circuit board and a related adhesive layer shown in FIG. 35;

FIG. 39 is a diagram of a partial structure of a main housing member shown in FIG. 6;

FIG. 40 is a diagram of the other partial structure of a main housing member shown in FIG. 6;

FIG. 41 is a diagram of a structure of a first contact of the earphone shown in FIG. 3;

FIG. 42 is a diagram of a partial structure of a sixth assembly of the earphone shown in FIG. 3;

FIG. 43 is a diagram of an internal structure of a partial structure of the earphone shown in FIG. 1A;

FIG. 44 is an enlarged view of a structure at A shown in FIG. 43;

FIG. 45 is an enlarged view of a structure at B shown in FIG. 43;

FIG. 46 is a diagram of a structure of an earphone assembly in some embodiments according to an embodiment of this application;

FIG. 47 is a diagram of a structure of the earphone assembly shown in FIG. 46 in another use state;

FIG. 48A is a diagram of a structure of a charging case of the earphone assembly shown in FIG. 47 in another use state;

FIG. 48B is a diagram of a structure of the charging case shown in FIG. 48A at another angle;

FIG. 49 is a diagram of a partial exploded structure of a charging case shown in FIG. 47;

FIG. 50 is a diagram of a cross-sectional structure of FIG. 48A along C-C;

FIG. 51 is a diagram of a cross-sectional structure of FIG. 48A along D-D;

FIG. 52 is a diagram of a structure of the earphone assembly shown in FIG. 46 at another angle;

FIG. 53 is a diagram of a partial structure of the charging case shown in FIG. 49;

FIG. 54 is a diagram 1 of an assembly structure of the partial structure in FIG. 53;

FIG. 55 is a diagram 2 of an assembly structure of the partial structure in FIG. 53;

FIG. 56 is a diagram of a partial structure of the charging case shown in FIG. 51;

FIG. 57 is a diagram of an exploded structure of a partial structure of the charging case shown in FIG. 49;

FIG. 58 is a diagram of a partial structure of the earphone assembly shown in FIG. 46;

FIG. 59A is a diagram of a structure of the earphone assembly shown in FIG. 46 in another use state;

FIG. 59B is a diagram of a partial structure of the earphone assembly shown in FIG. 59A;

FIG. 60A is a diagram of a structure of the earphone assembly shown in FIG. 46 in another use state;

FIG. 60B is a diagram of a partial structure of the earphone assembly shown in FIG. 60A;

FIG. 61A is a diagram of a structure of the earphone assembly shown in FIG. 46 in another use state;

FIG. 61B is a diagram of a partial structure of the earphone assembly shown in FIG. 61A;

FIG. 62 is a diagram of some circuits of the earphone assembly shown in FIG. 46 in some embodiments;

FIG. 63 is a diagram of some circuits of a first earphone shown in FIG. 62 in some other embodiments;

FIG. 64 is a diagram of some circuits of a first earphone shown in FIG. 62 in some other embodiments; and

FIG. 65 is a diagram of some circuits of a first earphone shown in FIG. 62 in some other embodiments.

## DESCRIPTION OF EMBODIMENTS

The following describes technical solutions of embodiments of this application with reference to accompanying drawings. In the descriptions of embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

In the following, terms such as "first" and "second" are used only for description purposes, and cannot be understood as an indication or implication of relative importance or an implicit indication of a quantity of indicated technical features. Therefore, a feature limited by "first" or "second" may explicitly or implicitly include one or more features.

The orientation terms such as "front", "rear", "left", "right", "inner", "outer", "side", "top", "bottom", "upper", and "lower" in embodiments of this application are merely directions described with reference to the accompanying drawings. Therefore, the orientation terms are used to better and more clearly describe and understand embodiments of this application, instead of indicating or implying that a specified apparatus or element needs to have a specific orientation, or be constructed and operated in a specific orientation. Therefore, this cannot be understood as a limitation on embodiments of this application.

In the descriptions of embodiments of this application, it should be noted that unless otherwise explicitly specified and limited, the terms "mounted", "connected", "connection", and "disposed on..." should be understood in a broad sense. For example, a "connection" may be a detachable connection, a non-detachable connection, a direct connection, or an indirect connection implemented through an intermediate medium. A "fixed connection" means that two parts are connected to each other and a relative position relationship remains unchanged after the two parts are connected. An "electrical connection" means that an electrical signal may be conducted between each other.

Overall appearance and parting of an earphone:

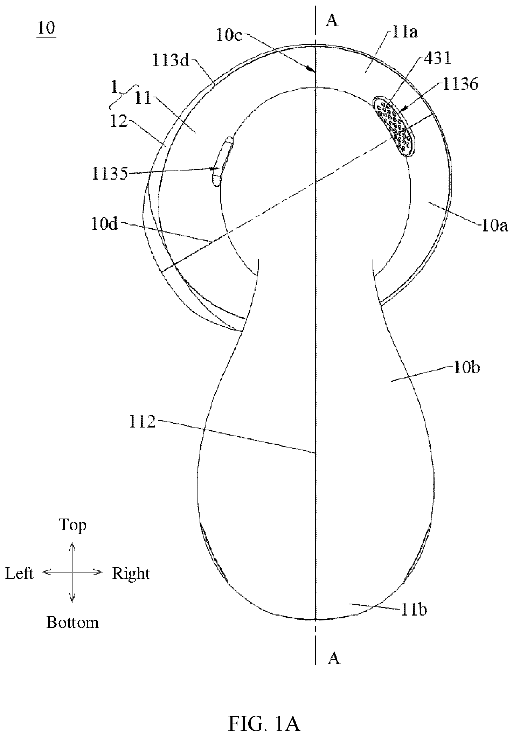

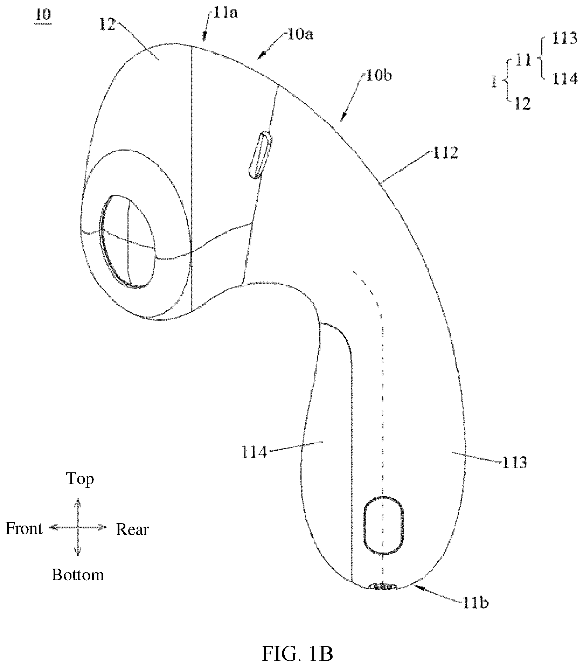

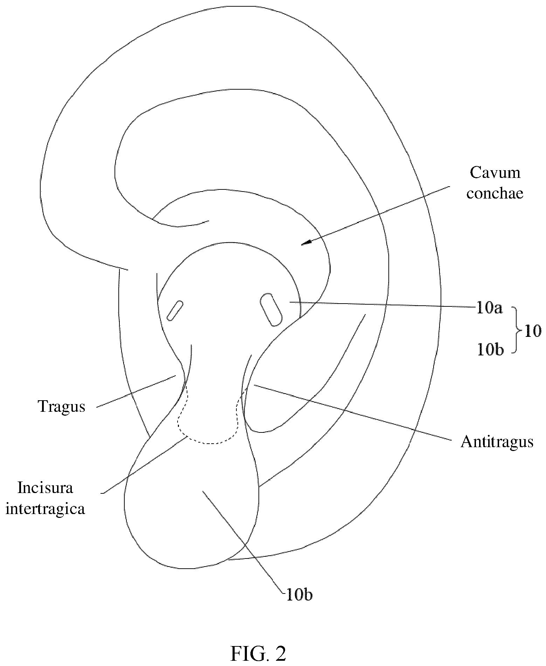

Refer to FIG. 1A, FIG. 1B, and FIG. 2. FIG. 1A is a rear view of an earphone 10 in some embodiments according to this application, FIG. 1B is a left view of the earphone 10 shown in FIG. 1A, and FIG. 2 is a diagram of a structure of the earphone 10 shown in FIG. 1A in some use scenarios.

This application provides an earphone 10. The earphone 10 is a wireless earphone, for example, may be a TWS (True Wireless Stereo, true wireless stereo) earphone. For ease of description in the following, it is defined as follows: The earphone 10 has relative orientations "top" and "bottom", which correspond to a height direction of the earphone 10; the earphone 10 has relative orientations "left" and "right", which correspond to a width direction of the earphone 10; and the earphone 10 has relative orientations "front" and "rear", which correspond to a thickness direction of the earphone 10. In descriptions of some embodiments, an orientation "upper" corresponds to the orientation "top", and an orientation "lower" corresponds to the orientation "bottom".

The earphone 10 includes an earbud 10a and a stem 10b. The stem 10b may also be referred to as a handle, and a top part of the stem 10b is connected to a rear side of the earbud 10a. An outer surface of the earphone 10 is a geometric curved surface that implements a smooth transition. In a direction from an end connected to the earbud 10a to an end that is far away from the earbud 10a, an outer contour of the stem 10b is in a form of first shrinking, then expanding, and then shrinking, and the stem 10b is as round and natural as a freely falling water drop. For example, the earphone 10 may have a central surface 10c, and a central axis 10d of the earbud 10a may be inclined to the central surface 10c. When the earphone 10 is used as a left earphone, a bottom end of the central axis 10d of the earbud 10a may be deflected to the left relative to the central surface 10c, and a top end of the central axis 10d of the earbud 10a may be deflected to the right relative to the central surface 10c. When the earphone 10 is used as a right earphone, a bottom end of the central axis 10d of the earbud 10a may be deflected to the right relative to the central surface 10c, and a top end of the central axis 10d of the earbud 10a may be deflected to the left relative to the central surface 10c. For example, the outer contour of the stem 10b may be symmetrically disposed relative to the central surface 10c.

When the earphone 10 is worn on an ear of a consumer, a front side of the earphone 10 faces the ear, and a rear side of the earphone 10 faces away from the ear. The front side of the earphone 10 is mostly an invisible region, and the rear side of the earphone 10 is mostly a visible region. The earbud 10a of the earphone 10 is inserted into the cavum conchae of the ear, the top part of the stem 10b is located in the cavum conchae, and a bottom part of the stem 10b is located outside the cavum conchae. The tragus, incisura intertragica, and antitragus of the ear may just surround a shrinking part of the stem 10b, to clamp the shrinking part of the stem 10b, so that wearing stability of the earphone 10 is improved, and wearing comfort can be considered, to improve user experience.

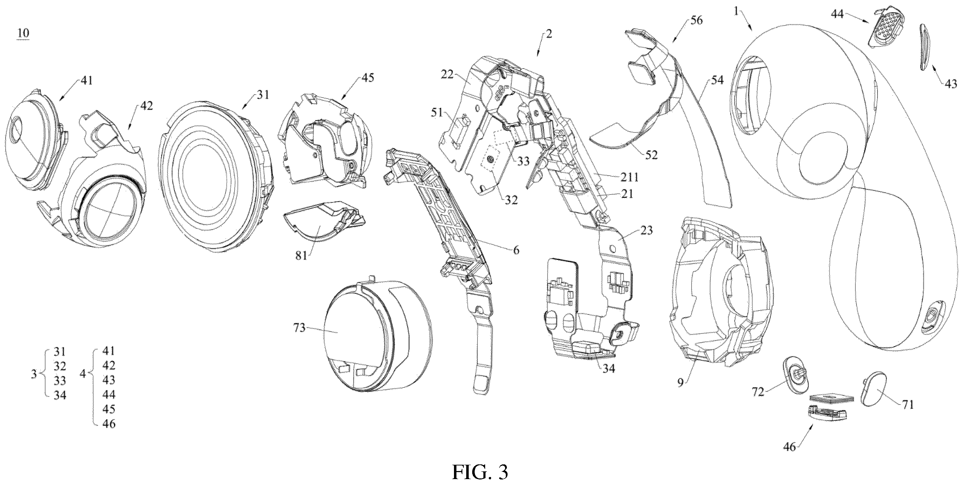

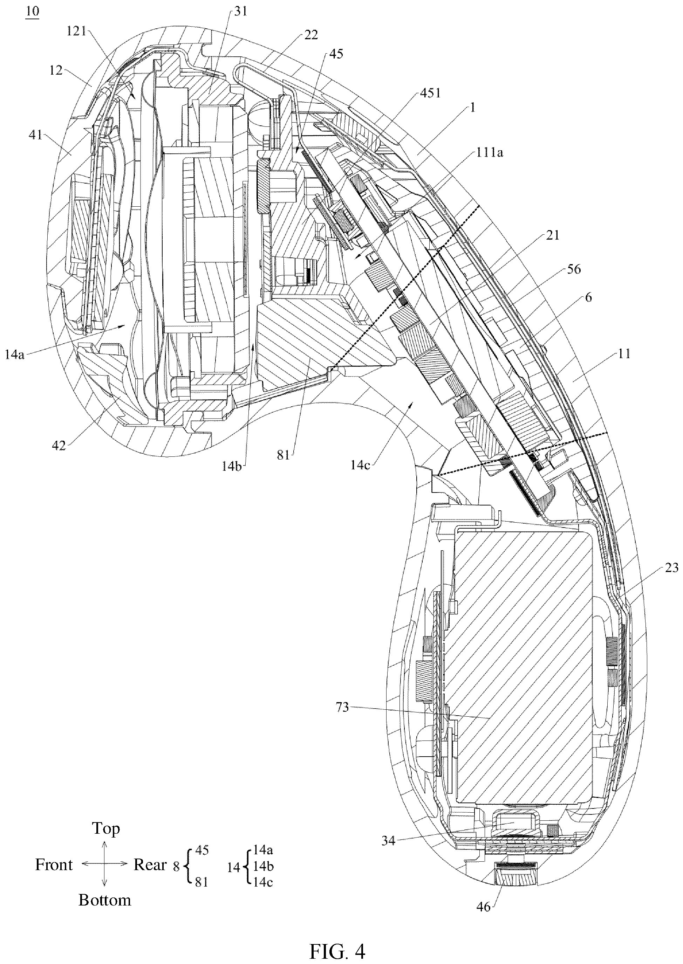

Refer to FIG. 3 and FIG. 4. FIG. 3 is a diagram of a partial exploded structure of the earphone 10 shown in FIG. 1A, and FIG. 4 is a diagram of a cross-sectional structure that is of the earphone 10 shown in FIG. 1A and that is taken along A-A. A-A corresponds to the central surface 10c of the earphone 10.

In some embodiments, the earphone 10 includes a housing 1 and a plurality of assemblies mounted in the housing 1. The plurality of assemblies include but are not limited to a circuit assembly 2, an audio assembly 3, an audio auxiliary assembly 4, a detection assembly 5, an antenna 6, a first contact 71, a second contact 72, a battery 73, and a magnetic attraction member 81.

For example, the circuit assembly 2 may include a main circuit board 21, a first flexible circuit board 22, and a second flexible circuit board 23. A plurality of components may be fastened on each circuit board. For example, a main control chip 211 may be arranged on the main circuit board 21, and the main control chip 211 may be a system on chip (System on Chip, SoC). A plurality of circuits may be integrated into the main control chip 211. One end of the first flexible circuit board 22 is electrically connected to the main circuit board 21, and one end of the second flexible circuit board 23 is electrically connected to the main circuit board 21, to implement electrical connections between components on the circuit boards. The circuit assembly 2 is electrically connected to another functional component, module, and the like of the earphone 10.

For example, the audio assembly 3 may include a speaker 31 and a plurality of microphones, to implement sound playing and sound pickup. The speaker 31 may also be referred to as a "horn", and is configured to convert an audio electrical signal into a sound signal. The microphone is configured to convert a sound signal into an electrical signal, and is mainly configured to: collect a sound outside the earphone 10, convert the sound into an electrical signal, and transmit the electrical signal to the main control chip 211 for processing, to implement functions such as active noise reduction, a voice call, call noise reduction, an ambient sound mode, and voice assistant wakeup of the earphone 10.

The plurality of microphones may include a first microphone 32, a second microphone 33, and a third microphone 34. In this application, the first microphone 32 and the second microphone 33 in the audio assembly 3 of the earphone 10 are used in an active noise cancelling (Active Noise Cancelling, ANC) design system. Active noise cancelling is a method for identifying an unwanted sound source as noise, and a design of eliminating original noise by generating an "anti-noise" signal, to eliminate noise in real time. The second microphone 33 may be an FF (Feedforward topology, feedforward topology) microphone. The FF microphone is a reference microphone facing an outside of a user ear, and is configured to sense a main noise signal that may be used as a reference signal of a forward active noise cancelling filter. The first microphone 32 may be an FB (Feedback Topology, feedback topology) microphone. The FB microphone is an error microphone, and is configured to collect, as a reference signal of a feedback active noise cancelling filter, a signal entering the user ear. The third microphone 34 may be a call microphone.

For example, the audio auxiliary assembly 4 is configured to provide a plurality of channels, to assist the audio assembly 3 in implementing sound playing, sound pickup, and the like. The audio auxiliary assembly 4 may include a first assembly 41, a second assembly 42, a third assembly 43, a fourth assembly 44, a fifth assembly 45, and a sixth assembly 46. The plurality of assemblies are mounted at different positions of the housing 1, and are configured to provide corresponding channels for a plurality of parts in the audio assembly 3.

For example, the detection assembly 5 includes a plurality of sensors. The plurality of sensors may include a proximity sensor 51, a wearing detection sensor 52, a Hall sensor (Hall sensor) (not shown in the figure), a touch sensor 54, a gravity sensor (g-sensor) (not shown in the figure), and the like. The proximity sensor 51 and the wearing detection sensor 52 are configured to implement wearing detection of the earphone 10. The Hall sensor is configured to implement in-case presence detection of the earphone 10. The touch sensor 54 is configured to detect a touch action of a user. The gravity sensor is configured to detect a posture change of the earphone 10. The touch sensor 54 and the gravity sensor are configured to improve man-machine interaction experience of the earphone 10. The wearing detection sensor 52 and the touch sensor 54 may be capacitive sensors (cap sensors). The detection assembly 5 may include a detection circuit board 56. The detection circuit board 56 forms the wearing detection sensor 52 and the touch sensor 54.

In some use scenarios, the earphone 10 may determine, by using a wearing detection function, whether the user wears/takes off the earphone 10, to automatically play/pause music. In some other use scenarios, if the user takes off the earphone 10, does not wear the earphone 10 for a long time, and does not put the earphone 10 back into a charging case, the earphone 10 automatically sleeps/powers off, to save power. In some other use scenarios, to improve experience of single/-dual-ear use of the earphone 10, when two earphones 10 are worn, both the two earphones 10 play music, and when one earphone 10 is taken off and the other earphone 10 is worn, the earphone 10 that is not being worn stops playing music, and the earphone 10 that is being worn continues to play, to implement seamless switching.

In some use scenarios, the earphone 10 may detect different touch actions or operation actions of the user by using a man-machine interaction function, to implement functions such as music playing/pause, music switching, volume adjustment, and intelligent voice wakeup of the earphone 10. In this way, during use, the earphone 10 may be disconnected, to some extent, from a terminal (a mobile phone, a tablet, or the like) connected to the earphone 10, and an operation is more convenient and quick, to help improve user experience.

For example, the antenna 6 is configured to implement wireless communication between the earphone 10 and another terminal (for example, a mobile phone, a tablet, or the like). The battery 73 is configured to supply power to the earphone 10. The first contact 71 and the second contact 72 are configured to: when the earphone 10 is accommodated in the charging case, implement communication with the charging case, and implement a process of charging the earphone 10 by the charging case. The magnetic attraction member 81 is configured to form magnetic attraction force with the charging case when the earphone 10 is placed in the case, so that the earphone 10 is stably placed in the charging case.

In some other embodiments of this application, the earphone 10 may include more or fewer parts than those in the foregoing embodiment, some parts may be combined, some parts may be split, or different part arrangements may be used. The parts of the earphone 10 may be implemented by hardware, software, or a combination of software and hardware.

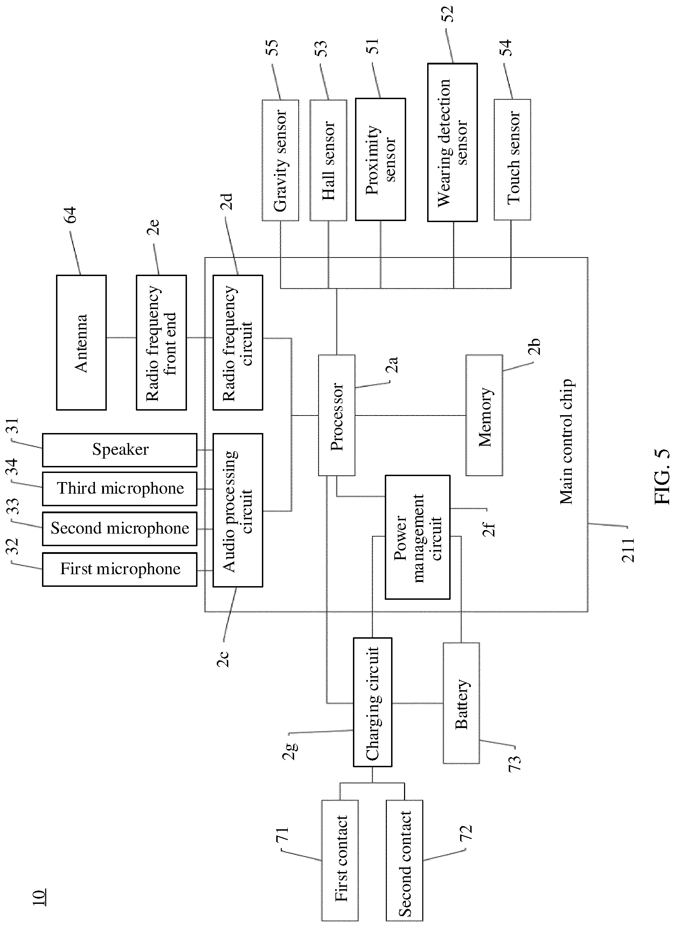

Refer to FIG. 5. FIG. 5 is a block diagram of some circuits of the earphone 10 shown in FIG. 1A.

In some embodiments, the earphone 10 may include a processor 2a, a memory 2b, an audio processing circuit 2c, a radio frequency circuit 2d, a radio frequency front end 2e, a power management circuit 2f, a charging circuit 2g, and the like. The processor 2a is electrically connected to the memory 2b.

All of the speaker 31, the first microphone 32, the second microphone 33, and the third microphone 34 are electrically connected to the audio processing circuit 2c, and the audio processing circuit 2c is electrically connected to the processor 2a. The audio processing circuit 2c is configured to convert digital audio information into an analog audio signal for output, and is further configured to convert an analog audio input into a digital audio signal. The audio processing circuit 2c may be further configured to encode and decode an audio signal. In some embodiments, the audio processing circuit 2c may alternatively be disposed in the processor 2a, or some functional modules of the audio processing circuit 2c are disposed in the processor 2a.

The antenna 6 is connected to the radio frequency front end 2e, the radio frequency front end 2e is connected to the radio frequency circuit 2d, and the radio frequency circuit 2d is connected to the processor 2a. The radio frequency circuit 2d is configured to modulate a radio frequency signal or demodulate a radio frequency signal. The radio frequency front end 2e is configured to filter and amplify the radio frequency signal. The radio frequency front end 2e may include one or more of a power amplifier (Power Amplifier, PA), a filter, a switch (Switch), and a low noise amplifier (LNA, Low Noise Amplifier). The filter may be a surface acoustic wave (surface acoustic wave, SAW) filter.

The first contact 71 and the second contact 72 are electrically connected to the charging circuit 2g, and the charging circuit 2g is electrically connected to the processor 2a, the power management circuit 2f, and the battery 73. The charging circuit 2g is configured to receive a charging input through the first contact 71 and the second contact 72. The power management circuit 2f is electrically connected to the processor 2a. The power management circuit 2f receives an input from the battery 73 and/or the charging circuit 2g, and supplies power to the processor 2a, the memory 2b, and other parts. In some other embodiments, the power management circuit 2f may alternatively be disposed in the processor 2a. In some other embodiments, the power management circuit 2f and the charging circuit 2g may alternatively be disposed in a same component.

All of the proximity sensor 51, the wearing detection sensor 52, the Hall sensor 53, the touch sensor 54, and the gravity sensor 55 are electrically connected to the processor 2a.

The processor 2a, the memory 2b, the audio processing circuit 2c, the radio frequency circuit 2d, and the power management circuit 2f may be integrated into the main control chip 211. The radio frequency front end 2e and the charging circuit 2g may be respectively formed in other chips. In some other embodiments, the foregoing circuit may have another implementation structure. For example, more or fewer circuits may be integrated into the main control chip 211. For example, the radio frequency circuit 2d may be independent of the main control chip 211 and implemented by a radio frequency chip. This is not strictly limited in this embodiment of this application.

The following describes the parts/components of the earphone 10 by using examples.

Housing 1 of the earphone 10:

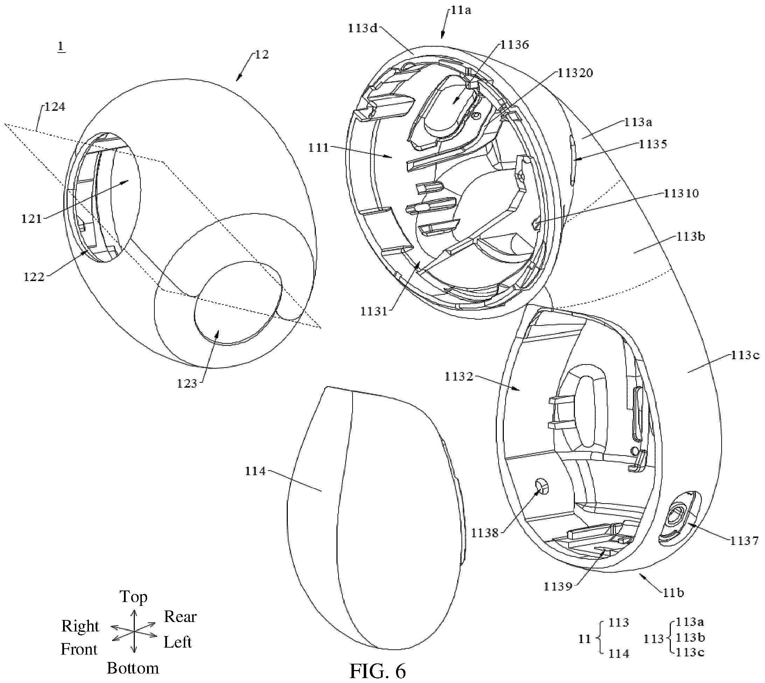

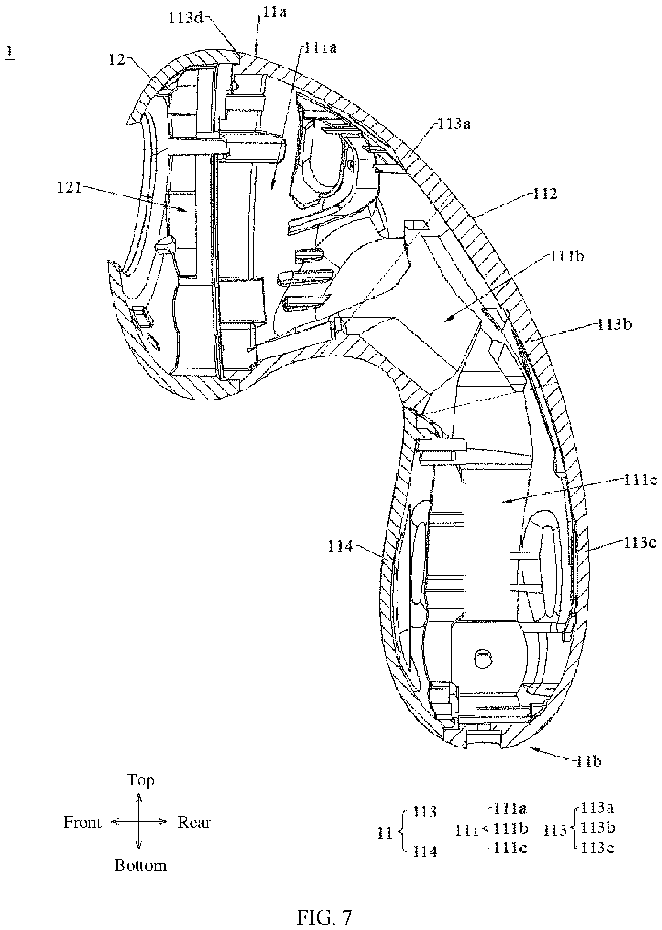

Refer to FIG. 1A, FIG. 1B, FIG. 6, and FIG. 7. FIG. 6 is a diagram of an exploded structure of the housing 1 shown in FIG. 3, and FIG. 7 is a diagram of an internal structure of the housing 1 shown in FIG. 3.

In some embodiments, the housing 1 includes a main housing 11 and a front housing 12, the front housing 12 is fastened on a front side of the main housing 11, and internal space 121 of the front housing 12 communicates with internal space 111 of the main housing 11. When the earphone 10 is being worn, the front housing 12 faces a user ear. Specifically, the front housing 12 may be located in the cavum conchae, be in contact with the cavum conchae, and face an ear canal of the user ear. The front housing 12 and a partial structure that is of the main housing 11 and that is connected to the front housing 12 form a housing of the earbud 10a of the earphone 10, and the other partial structure of the main housing 11 forms a housing of the stem 10b of the earphone 10.

The main housing 11 includes a first end 11a and a second end 11b. The first end 11a of the main housing 11 is close to the front housing 12, and is in contact with the front housing 12, and the second end 11b of the main housing 11 is far away from the front housing 12. The main housing 11 has a dorsal line 112, and the dorsal line 112 extends from the first end 11a of the main housing 11 to the second end 11b of the main housing 11. The dorsal line 112 is located on a rear side of the main housing 11, and the dorsal line 112 is located on the central surface 10c of the earphone 10. The dorsal line 112 is a smooth curve. As shown in FIG. 1B, when the earphone 10 is in a left view, a contour line of a side (that is, a side facing away from the front housing 12) that is of the main housing 11 and that faces backward corresponds to the dorsal line 112. The dorsal line 112 may be a solid line, or may be a non-solid line. This is not strictly limited in this embodiment of this application.

For example, in a direction from the first end 11a of the main housing 11 to the second end 11b of the main housing 11, an outer contour of the main housing 11 first shrinks and then expands. A case in which the outer contour of the main housing 11 first shrinks and then expands includes a first case in which the outer contour of the main housing 11 first shrinks, then expands, and then shrinks, and a second case in which the outer contour of the main housing 11 first shrinks and then expands.

For the first case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b is in a form of first shrinking, then expanding, and then shrinking, and at a bottom part of the main housing 11, a bottom end face may be formed by an arc-shaped surface or an approximately arc-shaped surface, to have a rounded form. In this case, a shape of the main housing 11 is designed, so that the stem 10b of the earphone 10 can have a shape similar to that of a "freely falling water drop".

For the second case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b first shrinks and then expands, that is, at a bottom part of the main housing 11, a bottom end face may be formed by a plane or an approximate plane. In the second case, a small rounded transition region connected to the bottom end face may exist at the bottom part of the main housing 11, and a form change of this part of transition region is small and may be ignored.

For example, as shown in FIG. 7, the internal space 111 of the main housing 11 includes top space 111a, middle space 111b, and bottom space 111c that sequentially communicate with each other, the top space 111a of the main housing 11 is close to the first end 11a of the main housing 11, and the bottom space 111c of the main housing 11 is close to the second end 11b of the main housing 11. The top space 111a of the main housing 11 is connected to the internal space 121 of the front housing 12. In the direction from the first end 11a of the main housing 11 to the second end 11b of the main housing 11, the internal space 111 of the main housing 11 first shrinks and then expands. A cross-sectional area of the top space 111a of the main housing 11 is basically greater than a cross-sectional area of the middle space 111b of the main housing 11, and a cross-sectional area of the bottom space 111c of the main housing 11 is basically greater than the cross-sectional area of the middle space 111b of the main housing 11. That is, a narrowest position in the internal space 111 of the main housing 11 is located in the middle space 111b of the main housing 11. In this embodiment, the main housing 11 is of a housing member structure, and a form change of the internal space 111 of the main housing 11 is the same as or similar to a form change of the outer contour of the main housing 11.

It may be understood that in the accompanying drawings of this embodiment of this application, division positions of the top space 111a, the middle space 111b, and the bottom space 111c of the main housing 11 are example positions, and are not strict and unique position division. In an overall design of the earphone 10, a requirement that the internal space 111 of the main housing 11 shrinks to the narrowest in the middle space 111b needs to be met, and the division positions of the top space 111a, the middle space 111b, and the bottom space 111c of the main housing 11 may be adaptively changed based on an actual situation.

For example, when the dorsal line 112 extends from the first end 11a of the main housing 11 to the second end 11b of the main housing 11, the dorsal line 112 first extends backward and then extends forward. A part that is of the main housing 11 and that corresponds to a line segment that extends backward and that is of the dorsal line 112 is in a form of first shrinking and then expanding. A part that is of the main housing 11 and that corresponds to a line segment that extends forward and that is of the dorsal line 112 is in a shrinking form. In this embodiment, a shape of the dorsal line 112 is set, so that a back of the earphone 10 is in a form that implements free sliding, and an overall form of the earphone 10 is natural and beautiful.

The dorsal line 112 may include a plurality of smoothly connected arc-shaped line segments. In an extension direction of the dorsal line 112, radii of the plurality of arc-shaped line segments first increase and then decrease. An arc-shaped line segment with a largest radius may be disposed to correspond to the middle space 111b of the main housing 11.

In some embodiments, as shown in FIG. 1B, FIG. 6, and FIG. 7, the main housing 11 includes a main housing member 113 and a sealing cover member 114. The main housing member 113 has a first opening 1131 and a second opening 1132 that are disposed at an interval, and both the first opening 1131 and the second opening 1132 are disposed to face forward. That is, when the earphone 10 is being worn, both the first opening 1131 and the second opening 1132 face the user ear. The main housing member 113 includes a top part 113a, a middle part 113b, and a bottom part 113c that are sequentially connected. The first opening 1131 is formed at the top part 113a of the main housing member 113, and the second opening 1132 is formed at the bottom part 113c of the main housing member 113. The front housing 12 is mounted at the first opening 1131, the sealing cover member 114 is mounted at the second opening 1132, and the sealing cover member 114 is located on a front side of the bottom part 113c of the main housing member 113. As shown in FIG. 7, inner side space of the top part 113a of the main housing member 113 forms the top space 111a of the main housing 11, inner side space of the middle part 113b of the main housing member 113 forms the middle space 111b of the main housing 11, and the sealing cover member 114 and a part (that is, the bottom part 113c of the main housing member 113) of the main housing member 113 jointly enclose the bottom space 111c of the main housing 11. The main housing member 113 may be an integrally formed structural member. For example, the main housing member 113 may be formed by using an injection molding process.

In this embodiment, the housing 1 mainly includes three housing members: the front housing 12, the main housing member 113, and the sealing cover member 114. The housing 1 includes such a few housing members that require no complex structure and are easy to assemble. In addition, the middle part 113b of the main housing member 113 is of a complete housing member structure, and no opening is disposed. This helps improve structural strength of the main housing member 113, so that overall structural strength of the main housing 11 and the housing 1 is high.

For example, with reference to FIG. 1A, FIG. 6, and FIG. 7, the main housing 11 includes an abutting end face 113d, the abutting end face 113d is located on the main housing member 113 and is disposed around the first opening 1131, and the abutting end face 113d is in contact with the front housing 12. A plane on which the abutting end face 113d is located is perpendicular to the central surface 10c of the earphone 10. The main housing member 113 has a first projection on the plane on which the abutting end face 113d is located, the sealing cover member 114 has a second projection on the plane on which the abutting end face 113d is located, and the first projection covers the second projection.

A surface of the earphone 10 in a rear view is a primary appearance surface, that is, in a case of viewing from back to front, an exposed surface of the earphone 10 is the primary appearance surface. A surface of the earphone 10 in a front view is a secondary appearance surface, that is, in a case of viewing from front to back, an exposed surface of the earphone 10 is the primary appearance surface. When the earphone 10 is being worn, the secondary appearance surface faces the user ear and is hidden, and the primary appearance surface faces away from the user ear and is exposed. The main housing member 113 is projected from back to front to form the first projection, and the sealing cover member 114 is projected from back to front to form the second projection. The first projection covers the second projection. Therefore, in the rear view of the earphone 10, the main housing member 113 blocks the sealing cover member 114, and a parting line between the sealing cover member 114 and the main housing member 113 is hidden on the secondary appearance surface of the earphone 10, so that the primary appearance surface of the earphone 10 is complete, to maintain good visual integrity. The parting line between the sealing cover member 114 and the main housing member 113 is a line formed on the appearance surface of the earphone 10 at a junction of the sealing cover member 114 and the main housing member 113. A maximum contour line of the main housing member 113 in a left-right direction is shown by a dashed line in FIG. 1B, and the parting line between the sealing cover member 114 and the main housing member 113 is located on a front side of the maximum contour line.

In some embodiments, an overall height of the earphone 10 may range from 35 mm to 45 mm, for example, 38 mm, 39.56 mm, 41.5 mm, 43.21 mm, or the like. An overall width of the earphone 10 may range from 19 mm to 26 mm, for example, 21 mm, 22.83 mm, 24.5 mm, or the like. An overall height of the main housing member 113 may range from 35 mm to 45 mm, for example, 37 mm, 39.38 mm, 41.2 mm, 42.8 mm, or the like. A thickness at a thickest position of the bottom part 113c of the main housing member 113 may range from 8 mm to 12 mm, for example, 8.2 mm, 9 mm, 9.74 mm, 10.11 mm, 10.53 mm, or the like. A width at a widest position of the bottom part 113c of the main housing member 113 may range from 11 mm to 16 mm, for example, 12 mm, 12.8 mm, 13.53 mm, 14.2 mm, or the like. A thickness at a narrowest position of the main housing member 113 in a front-rear direction may range from 6 mm to 8.5 mm, for example, 6.5 mm, 7.2 mm, 7.4 mm, or the like. A width at a narrowest position of the main housing member 113 in the left-right direction ranges from 5 mm to 8.5 mm, for example, 6.47 mm or the like. A spacing between the sealing cover member 114 and the front housing 12 may range from 5 mm to 8 mm, for example, 5.7 mm, 6 mm, 6.54 mm, 7.12 mm, or the like. An included angle between the central axis 10d of the earbud 10a and the central surface 10c may range from 50° to 70°, for example, 55°, 60°, 67°, or the like. An included angle between the abutting end face 113d of the main housing member 113 and a boundary line between the earbud 10a and the stem 10b may range from 7° to 10°, for example, 7.6°, 8.4°, 9.2°, or the like. In some other embodiments, one or more of the foregoing dimensions of the earphone 10 may be adjusted as required.

In a conventional earphone, a housing of a stem of the earphone is usually set to a regular geometric shape, for example, a cuboid, a cylinder, or the like, to facilitate mold demolding during injection molding processing of the housing. However, in this application, the housing 1 of the earphone 10 is in an irregular geometric shape. Therefore, in this application, a mold solution in which a rear mold inclined core pull is in contact with a rear mold inclined inner slide to implement sealing-off is designed for the housing 1, to smoothly perform demolding. Details are as follows:

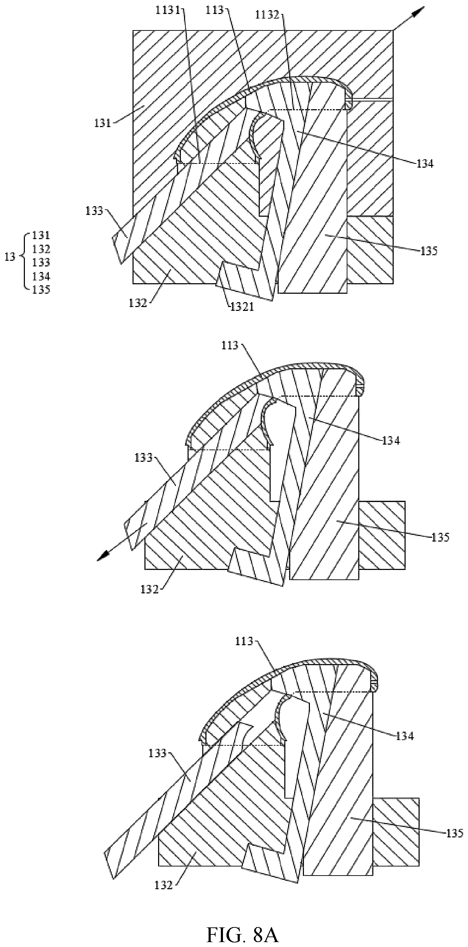

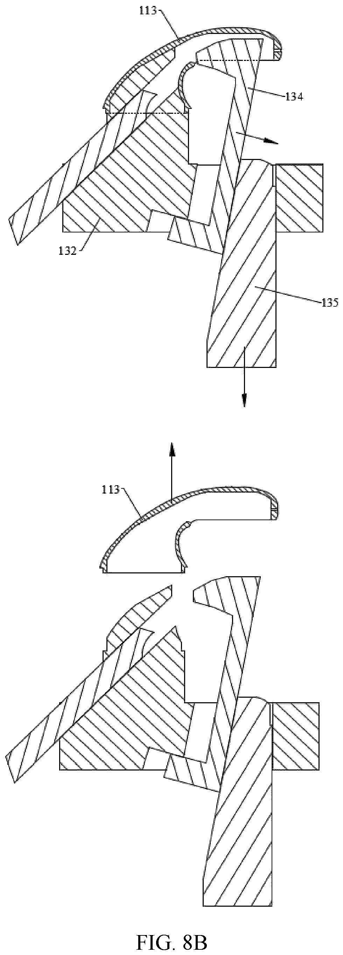

Refer to FIG. 8A and FIG. 8B. FIG. 8A is a diagram 1 of a demolding process of a middle housing shown in FIG. 6, and FIG. 8B is a diagram 2 of a demolding process of a middle housing shown in FIG. 6. The demolding process shown in FIG. 8B is performed after FIG. 8A.

In some embodiments, a mold 13 includes a front mold slide 131, a rear mold core 132, a rear mold inclined core pull 133, a rear mold inclined inner slide 134, and a rear mold slide wedge 135. Before demolding, the front mold slide 131 and the rear mold core 132 fit with each other to clamp the main housing member 113, and a partial structure of the rear mold core 132 extends into an inner side of the main housing member 113 through the first opening 1131 of the main housing member 113. Both the rear mold inclined inner slide 134 and the rear mold slide wedge 135 are inserted into the rear mold core 132 and the front mold slide 131, and extend into the inner side of the main housing member 113 through the second opening 1132 of the main housing member 113. Both the rear mold inclined inner slide 134 and the rear mold slide wedge 135 abut against an inner wall of the main housing member 113. The rear mold core 132 has a directional groove 1321, and one end of the rear mold inclined inner slide 134 is mounted in the directional groove 1321. After being inserted into the rear mold core 132 and extending into the inner side of the main housing member 113 through the second opening 1132 of the main housing member 113, the rear mold inclined core pull 133 abuts against the rear mold inclined inner slide 134 and the inner wall of the main housing member 113. In a demolding process, first, the front mold slide 131 is slid to the left and right to be detached from the main housing member 113; then, the rear mold inclined core pull 133 is pulled, so that the rear mold inclined core pull 133 is detached from the rear mold inclined inner slide 134 and the inner wall of the main housing member 113, and avoids an undercut position of the main housing member 113; then, the rear mold slide wedge 135 is pulled, so that the rear mold slide wedge 135 is detached from the main housing member 113, and under driving of the rear mold slide wedge 135 and constraint of the directional groove 1321, the rear mold inclined inner slide 134 is diagonally slid downward, is detached from the inner wall of the main housing member 113, and avoids an undercut position of the main housing member 113; and finally, the main housing member 113 is pushed to move upward, to complete demolding. Implementation of the demolding solution in this embodiment helps implement mass production of the main housing member 113.

It may be understood that the structure of the mold 13 and the demolding process are merely examples for description. In some other embodiments, the structure of the mold 13 and the demolding process may have other implementations. This is not strictly limited in this embodiment of this application.

In this application, the housing 1 of the earphone 10 may alternatively have another structure. The following provides descriptions by using an example.

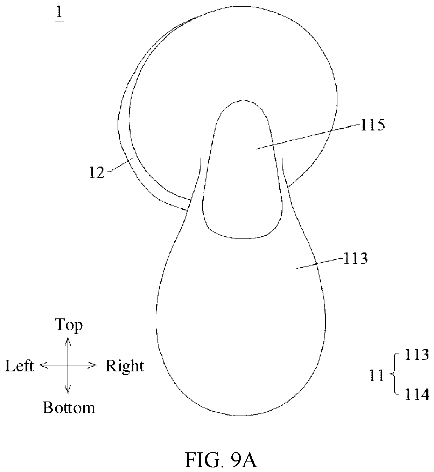

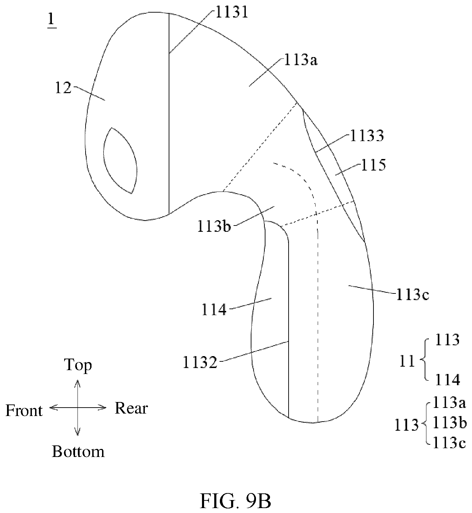

Refer to FIG. 9A and FIG. 9B. FIG. 9A is a rear view of the housing 1 of the earphone 10 in some other embodiments according to this application, and FIG. 9B is a left view of the housing 1 shown in FIG. 9A. The housing 1 shown in FIG. 9A and FIG. 9B may include most features of the housing 1 in the foregoing embodiment. The following mainly describes a difference between the two housings, and a same part of the two housings is not described.

In some embodiments, the housing 1 includes a front housing 12 and a main housing 11, the main housing 11 includes a main housing member 113, a sealing cover member 114, and a back cover member 115, and the main housing member 113 has a first opening 1131, a second opening 1132, and a third opening 1133 that are disposed at an interval. Both the first opening 1131 and the second opening 1132 are disposed to face forward, and the third opening 1133 is disposed to face backward. That is, when the earphone 10 is being worn, both the first opening 1131 and the second opening 1132 face the user ear, and the third opening faces away from the user ear. The third opening 1133 is located between the first opening 1131 and the second opening 1132. The main housing member 113 includes a top part 113a, a middle part 113b, and a bottom part 113c that are sequentially connected. The first opening 1131 is formed at the top part 113a of the main housing member 113, the second opening 1132 is formed at the bottom part 113c of the main housing member 113, and the third opening 1133 is formed at the middle part 113b of the main housing member 113. In some other embodiments, the third opening 1133 may further extend to the top part 113a of the main housing member 113 and/or the bottom part 113c of the main housing member 113.

The front housing 12 is mounted at the first opening 1131, the sealing cover member 114 is mounted at the second opening 1132, and the back cover member 115 is mounted at the third opening 1133. Inner side space of the top part 113a of the main housing member 113 forms top space of the main housing 11, the sealing cover member 114 and a part (that is, the bottom part 113c of the main housing member 113) of the main housing member 113 jointly enclose bottom space of the main housing 11, and the back cover member 115 and a part (that is, the middle part 113b of the main housing member 113) of the main housing member 113 jointly enclose middle space of the main housing 11.

In this embodiment, an opening structure is formed at the middle part 113b of the main housing member 113 by using the third opening 1133. This helps implement smooth demolding of the main housing member 113, simplify a demolding structure and a demolding process of the main housing member 113, and improve production efficiency and a yield of the main housing member 113.

In addition, a parting line between the sealing cover member 114 and the main housing member 113 is hidden on a secondary appearance surface, and the back cover member 115 is located on a primary appearance surface. Although the back cover member 115 damages integrity of the primary appearance surface to some extent, an area of the back cover member 115 is small. Therefore, the primary appearance surface of the earphone 10 can still have good visual integrity. In some embodiments, appearance richness and diversity may be further implemented by using a differentiated design for the back cover member 115 and the main housing member 113.

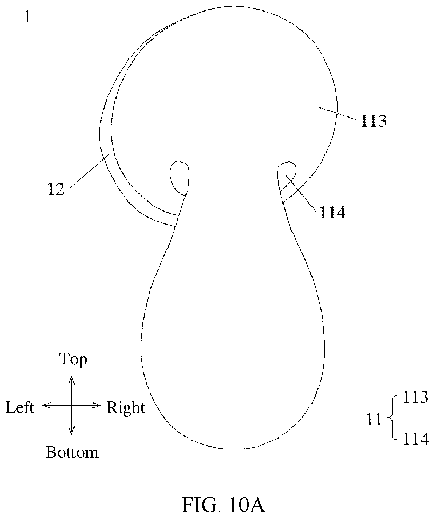

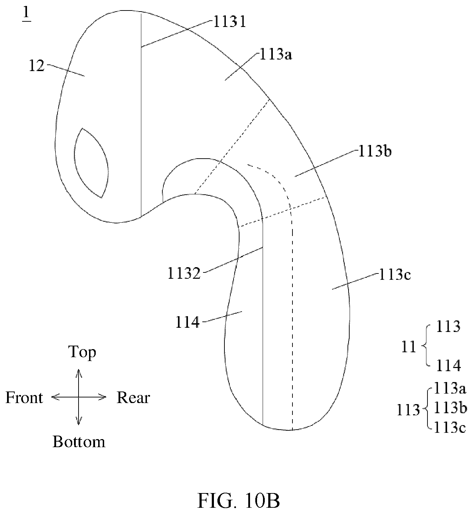

Refer to FIG. 10A and FIG. 10B. FIG. 10A is a rear view of the housing 1 of the earphone 10 in some other embodiments according to this application, and FIG. 10B is a left view of the housing 1 shown in FIG. 10A. The housing 1 shown in FIG. 10A and FIG. 10B may include most features of the housing 1 in the foregoing embodiment. The following mainly describes a difference between the two housings, and a same part of the two housings is not described.

In some embodiments, the housing 1 includes a front housing 12 and a main housing 11, and the main housing 11 includes a main housing member 113 and a sealing cover member 114. The main housing member 113 has a first opening 1131 and a second opening 1132 that are disposed at an interval, and both the first opening 1131 and the second opening 1132 are disposed to face forward. The main housing member 113 includes a top part 113a, a middle part 113b, and a bottom part 113c that are sequentially connected. The first opening 1131 is formed at the top part 113a of the main housing member 113, and the second opening 1132 extends from the bottom part 113c of the main housing member 113 to the top part 113a of the main housing member 113 through the middle part 113b of the main housing member 113.

In this embodiment, because the second opening 1132 is partially arranged at the middle part 113b of the main housing member 113, there is an opening structure at the middle part 113b of the main housing member 113. This helps implement smooth demolding of the main housing member 113, simplify a demolding structure and a demolding process of the main housing member 113, and improve production efficiency and a yield of the main housing member 113.

In addition, a parting line between the sealing cover member 114 and the main housing member 113 is mostly hidden on a secondary appearance surface, and a small part is exposed on a primary appearance surface. Therefore, the parting line causes little damage to the primary appearance surface, and integrity of the primary appearance surface is basically maintained, so that the earphone 10 has good visual integrity. Furthermore, a part that damages the primary appearance surface on the parting line between the sealing cover member 114 and the main housing member 113 is mainly located on a bottom side of the top part 113a of the main housing member 113. When the earphone 10 is being worn, the bottom side of the top part 113a of the main housing member 113 abuts against the user ear and is not exposed. Therefore, when the earphone 10 is being worn, the visual integrity is not damaged by the parting line between the sealing cover member 114 and the main housing member 113, and user experience is good.

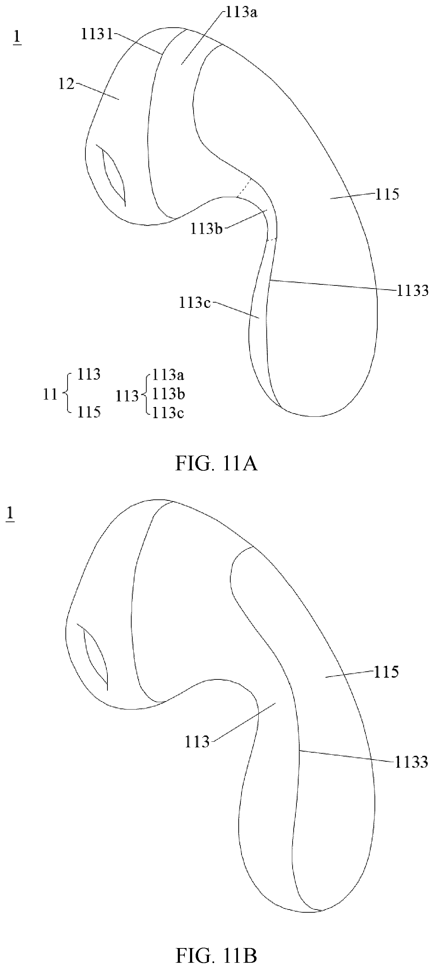

Refer to FIG. 11A. FIG. 11A is a diagram of a structure of the housing 1 of the earphone 10 in some other embodiments according to this application. The housing 1 shown in FIG. 11A may include most features of the housing 1 in the foregoing embodiment. The following mainly describes a difference between the two housings, and a same part of the two housings is not described.

In some embodiments, the housing 1 includes a front housing 12 and a main housing 11, the main housing 11 includes a main housing member 113 and a back cover member 115, the main housing member 113 has a first opening 1131 and a third opening 1133 that are disposed at an interval, the first opening 1131 is disposed to face forward, and the third opening 1133 is disposed to face backward. The main housing member 113 includes a top part 113a, a middle part 113b, and a bottom part 113c that are sequentially connected. The first opening 1131 is formed at the top part 113a of the main housing member 113, and the third opening 1133 is continuously formed at the top part, the middle part 113b, and the bottom part 113c of the main housing member 113. The front housing 12 is mounted at the first opening 1131, and the back cover member 115 is mounted at the third opening 1133.

In this embodiment, an opening structure is formed at the middle part 113b of the main housing member 113 by using the third opening 1133. This helps implement smooth demolding of the main housing member 113, simplify a demolding structure and a demolding process of the main housing member 113, and improve production efficiency and a yield of the main housing member 113.

A parting line between the main housing member 113 and the back cover member 115 may be partially hidden on a secondary appearance surface, and partially located on a primary appearance surface, to reduce damage to integrity of the primary appearance surface.

Refer to FIG. 11B. FIG. 11B is a diagram of a structure of the housing 1 of the earphone 10 in some other embodiments according to this application. A difference between the housing 1 shown in FIG. 11B and the housing 1 shown in FIG. 11A lies in that an opening area of a third opening 1133 of a main housing member 113 is small, an area of a back cover member 115 is small, and a parting line between the main housing member 113 and the back cover member 115 may be partially located on a maximum contour line.

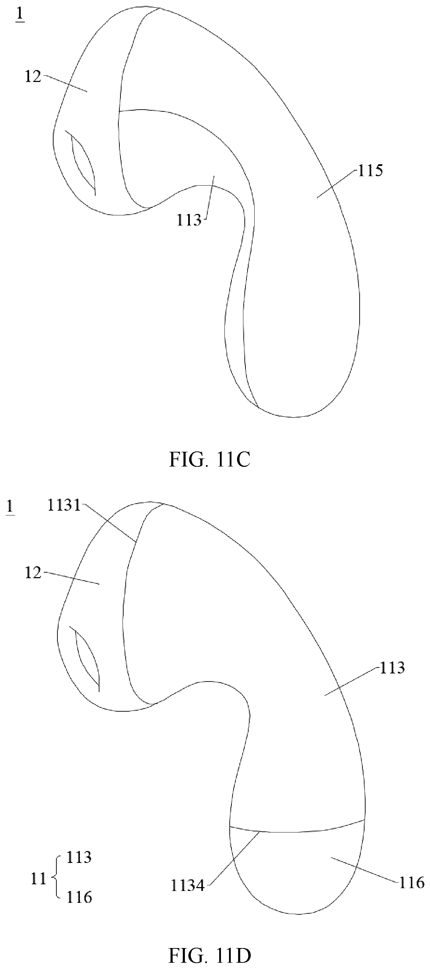

Refer to FIG. 11C. FIG. 11C is a diagram of a structure of the housing 1 of the earphone 10 in some other embodiments according to this application. A difference between the housing 1 shown in FIG. 11C and the housing 1 shown in FIG. 11A lies in that a top part of a back cover member 115 extends to be connected to a front housing 12, an area of the back cover member 115 is large, and a main housing member 113 and the back cover member 115 are of a stacked structure.

Refer to FIG. 11D. FIG. 11D is a diagram of a structure of the housing 1 of the earphone 10 in some other embodiments according to this application. The housing 1 shown in FIG. 11D may include most features of the housing 1 in the foregoing embodiment. The following mainly describes a difference between the two housings, and a same part of the two housings is not described.

In some embodiments, the housing 1 includes a front housing 12 and a main housing 11, and the main housing 11 includes a main housing member 113 and a bottom cover member 116. The main housing member 113 has a first opening 1131 and a fourth opening 1134 that are disposed at an interval, the first opening 1131 is disposed to face forward, and the fourth opening 1134 is disposed to face downward. The front housing 12 is mounted at the first opening 1131, and the bottom cover member 116 is mounted at the fourth opening 1134. A back cover member 115 and the bottom cover member 116 are disposed in a stacked manner. A position at which the fourth opening 1134 is located is a position with a largest cross-sectional area at a bottom part of the main housing member 113.

It may be understood that the foregoing descriptions of the structure of the housing 1 are merely example descriptions. In some other embodiments, the housing 1 may alternatively have another structure. This is not strictly limited in this application.

Speaker 31, main circuit board 21, and battery 73 of the earphone 10:

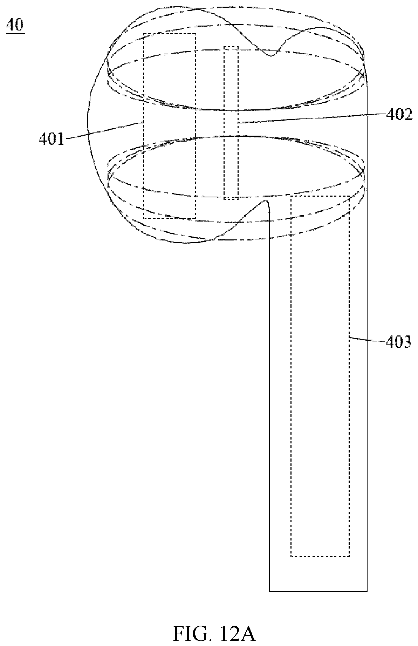

Refer to FIG. 12A. FIG. 12A is a diagram of a partial structure of a conventional earphone 40.

In the conventional earphone 40 with a stem, a speaker 401 and a main board 402 are located at a position of an earbud, and a battery 403 is located at a position of the stem. Due to a space limitation of the earbud, the main board 402 is usually disposed close to the speaker 401 and is disposed substantially parallel to the speaker 401. After vector summation is performed on an onboard current on the main board 402, the onboard current may be equivalent to an energized coil. According to the Ampere's law, the energized coil generates a magnetic field when being energized. Similarly, an inductor on the main board 402 also generates a magnetic field when being energized. When the main board 402 is disposed close to the speaker 401, according to the Faraday's law, a magnetic induction line of the magnetic field generated by the onboard current on the main board 402 and/or a magnetic induction line of the magnetic field generated by the inductor pass/passes through an inside of a voice coil of the speaker 401. In this case, a magnetic flux in the voice coil changes, and further an electric potential is generated. Consequently, the speaker 401 generates current noise.

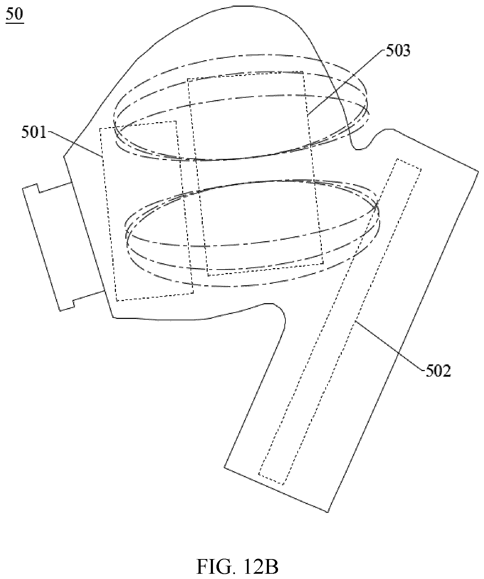

Refer to FIG. 12B. FIG. 12B is a diagram of a partial structure of another conventional earphone 50.

In the conventional bean-shaped earphone 50, a speaker 501 and a battery 503 are located at a position of an earbud, and a main board 502 is located behind the battery 503. Due to a space limitation of the earbud, the battery 503 is usually disposed close to the speaker 501 and is disposed substantially parallel to the speaker 501. The battery 503 is, for example, a button battery. Because an electrode of the battery 503 is formed through winding, a positive electrode and a negative electrode of the battery 503 have different lengths. Therefore, when the battery 503 outputs electricity, a positive magnetic field and a negative magnetic field are not completely cancelled, and the battery 503 generates an induced magnetic field. A direction of the induced magnetic field is parallel to a direction of a central axis of the battery 503. When the battery 503 is disposed close to the speaker 501, according to the Faraday's law, a magnetic induction line of the magnetic field generated by the battery 503 passes through an inside of a voice coil of the speaker 501. In this case, a magnetic flux in the voice coil changes, and further an electric potential is generated. Consequently, the speaker 501 generates current noise.

Therefore, in a conventional earphone, a coil of a speaker is prone to be interfered with by a magnetic field of a main board or a battery to generate an induced current, and further current noise is generated, resulting in poor sound quality of the earphone.

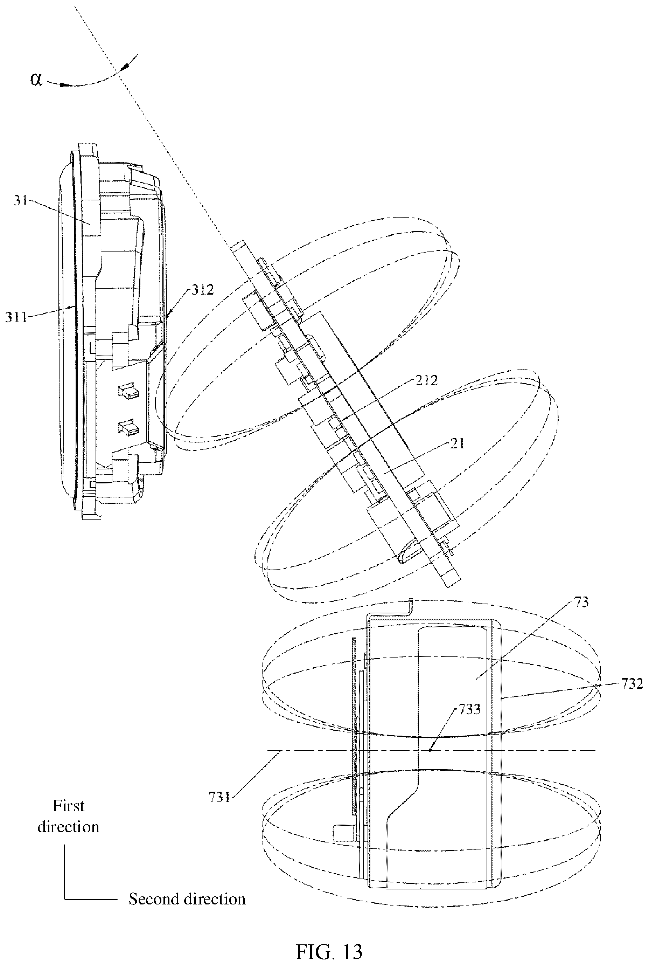

Refer to FIG. 13. FIG. 13 is a diagram of a partial structure of the earphone 10 shown in FIG. 1A.

In some embodiments, the main circuit board 21 is located between the speaker 31 and the battery 73. In this case, the speaker 31 and the battery 73 are respectively placed at two ends on a long edge of the main circuit board 21, and the speaker 31, the main circuit board 21, and the battery 73 are approximately shaped like a "dumbbell". The main circuit board 21 is disposed in an inclined manner relative to the speaker 31. That is, a component arrangement plane 212 of the main circuit board 21 is not parallel to a diaphragm plane 311 of the speaker 31. The component arrangement plane 212 of the main circuit board 21 is a board surface that is of the main circuit board 21 and that is used to arrange a component. The diaphragm plane 311 of the speaker 31 is a plane on which a diaphragm of the speaker 31 is located when being at a balanced position.

In this embodiment, the battery 73 and the speaker 31 are respectively located at the two ends on the long edge of the main circuit board 21. Therefore, there is a long distance between the battery 73 and the speaker 31, and an induced magnetic field generated by the battery 73 basically exerts no impact on a voice coil of the speaker 31, so that a current noise risk caused by the battery 73 can be eliminated. In addition, the component arrangement plane 212 of the main circuit board 21 is not parallel to the diaphragm plane 311 of the speaker 31. Therefore, impact of an induced magnetic field generated by an inductor or a current loop on the main circuit board 21 on the speaker 31 is reduced, and a current noise risk caused by an induced magnetic field of the main circuit board 21 is lowered. Therefore, in this embodiment, a position relationship between the speaker 31, the main circuit board 21, and the battery 73 is optimized, so that adverse impact of the induced magnetic field of the main circuit board 21 or the battery 73 on the speaker 31 is eliminated or weakened, and a risk of generating current noise is lowered, to ensure sound generation quality of the speaker 31, and implement that the earphone 10 has good sound quality.

For example, an included angle α between the component arrangement plane 212 of the main circuit board 21 and the diaphragm plane 311 of the speaker 31 ranges from 10° to 60°, for example, 20.2°, 28.5°, 30°, 35.21°, 45°, 48.5°, 50°, 55°, or the like. In this case, there is a large included angle between the component arrangement plane 212 of the main circuit board 21 and the diaphragm plane 311 of the speaker 31. Therefore, the impact of the induced magnetic field generated by the inductor or the current loop on the main circuit board 21 on the speaker 31 can be greatly reduced, and the current noise risk caused by the induced magnetic field of the main circuit board 21 is significantly lowered. In addition, a range of the included angle between the component arrangement plane 212 of the main circuit board 21 and the diaphragm plane 311 of the speaker 31 is controlled, to help reduce difficulty in arranging the speaker 31, the main circuit board 21, and the battery 73 in the housing 1 of the earphone 10, and reduce a limitation imposed on an appearance design of the housing 1 of the earphone 10 due to position requirements of the speaker 31, the main circuit board 21, and the battery 73, so as to highly flexibly design a form of the housing 1 of the earphone 10.

The included angle α between the component arrangement plane 212 of the main circuit board 21 and the diaphragm plane 311 of the speaker 31 may range from 20° to 50°, to further lower the current noise risk caused by the induced magnetic field of the main circuit board 21 to the speaker 31, and better match mounting space of the housing 1 of the earphone 10, so as to reduce mounting difficulty.

For example, the battery 73 is disposed in an inclined manner relative to the main circuit board 21. A central axis 731 of the battery 73 is not perpendicular to the component arrangement plane 212 of the main circuit board 21. In this case, the induced magnetic field generated by the battery 73 exerts little impact on a magnetic field-sensitive component (for example, the inductor or the like) on the main circuit board 21, so that the component on the main circuit board 21 has a good working environment.

For example, an included angle between the central axis 731 of the battery 73 and the component arrangement plane 212 of the main circuit board 21 may range from 30° to 80°, for example, 32°, 35.21°, 45°, 48.5°, 50°, 55°, 57.5°, 63.4°, 69.5°, or the like.

For example, an end face 732 of the battery 73 may be parallel to the diaphragm plane 311 of the speaker 31. The end face 732 of the battery 73 is perpendicular to the central axis 731 of the battery 73. In this case, the central axis 731 of the battery 73 is perpendicular to the diaphragm plane 311 of the speaker 31.

In some embodiments, the main circuit board 21 may be in a long strip board shape, to have a component arrangement plane 212 with a large area. In this case, there is a large spacing between the speaker 31 and the battery 73, to help lower a risk that current noise occurs in the speaker 31.

For example, the speaker 31 is a moving coil speaker. In this embodiment, the speaker 31 drives, through vibration of the voice coil in a permanent magnetic field, the diaphragm to vibrate, to implement sound generation. In some other embodiments, the speaker 31 may alternatively be another speaker type having a voice coil structure, for example, a moving iron speaker, a coil iron speaker, or the like. This is not strictly limited in this embodiment of this application.

For example, the battery 73 is a button battery. The button battery means a cylindrical battery whose diameter is greater than a height. In some other embodiments, the battery 73 may alternatively be another type of battery whose electrodes are repeatedly bent, stacked, or wound. This is not strictly limited in this embodiment of this application.

For example, a spacing between a bottom surface center point 312 of the speaker 31 and a center point 733 of the battery 73 in a first direction ranges from 12 mm to 20 mm, for example, 13.2 mm, 14 mm, 16.2 mm, 18.8 mm, or the like; and a spacing between the bottom surface center point 312 of the speaker 31 and the center point 733 of the battery 73 in a second direction ranges from 6 mm to 15 mm, for example, 8.4 mm, 9.2 mm, 10.5 mm, 12.3 mm, 13.8 mm, or the like. The center point 733 of the battery 73 is located on the center axis 731 of the battery 73. The first direction is parallel to the diaphragm plane 311 of the speaker 31, and the second direction is perpendicular to the first direction. The first direction may be parallel to the height direction of the earphone 10, and the second direction may be parallel to the thickness direction of the earphone 10.

For example, a spacing between the bottom surface center point 312 of the speaker 31 and the center point 733 of the battery 73 ranges from 10 mm to 30 mm, for example, 15 mm, 18.2 mm, 19.2 mm, 22.2 mm, 26.8 mm, or the like. A position relationship between the speaker 31 and the battery 73 helps balance a miniaturization requirement of the earphone 10 and a low current noise requirement.

In this embodiment of this application, the speaker 31, the main circuit board 21, and the battery 73 may be properly arranged in the earphone 10 based on a relative position relationship between the speaker 31, the main circuit board 21, and the battery 73, a shape of the housing 1, and a shape of internal space 11 of the housing 1. Details are as follows:

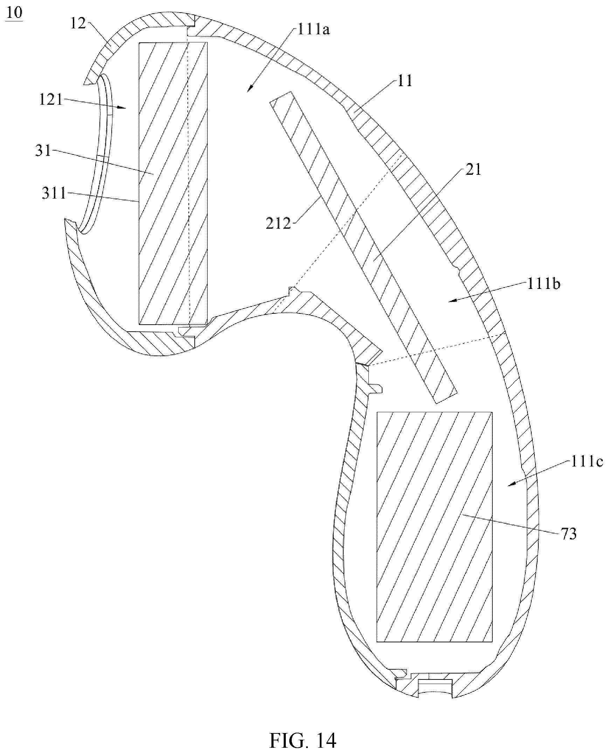

Refer to FIG. 14. FIG. 14 is a brief diagram of a partial structure of the earphone 10 shown in FIG. 4.

In some embodiments, all of the speaker 31, the main circuit board 21, and the battery 73 are mounted in the housing 1. For example, the speaker 31 may be mounted in the internal space 121 of the front housing 12 and/or the top space 111a of the main housing 11; the battery 73 may be mounted in the bottom space 111c of the main housing 11; and the main circuit board 21 is mounted in the middle space 111b of the main housing 11, and two ends of the main circuit board 21 respectively extend to the top space 111a of the main housing 11 and the bottom space 111c of the main housing 11.

In this embodiment, the speaker 31 and the battery 73 are large in volume, and are approximately in a flat cylinder shape, and the main circuit board 21 is of a long and narrow board structure. In addition, the internal space 121 of the front housing 12, the top space 111a of the main housing 11, and the bottom space 111c of the main housing 11 are large, and the middle space 111b of the main housing 11 is small. Therefore, in this embodiment, arrangement positions of the speaker 31, the main circuit board 21, and the battery 73 not only can lower a risk that the speaker 31 generates current noise, but also can fully use the internal space of the housing 1, to improve space utilization of the housing 1, and facilitate miniaturization of the earphone 10.

For example, the included angle between the component arrangement plane 212 of the main circuit board 21 and the diaphragm plane 311 of the speaker 31 ranges from 20° to 50°. In this case, a relative position between the speaker 31 and the main circuit board 21 can well match a relative position relationship between the top space 111a of the main housing 11 and the middle space 111b of the main housing 11. Mounting difficulty is low, and implementation is easy.

It may be understood that in some other embodiments, a housing in another shape may alternatively be designed or matched for the earphone 10 when the relative position relationship between the speaker 31, the main circuit board 21, and the battery 73 is met, to obtain more diversified appearances. This is not strictly limited in this embodiment of this application.

Circuit assembly 2 of the earphone 10:

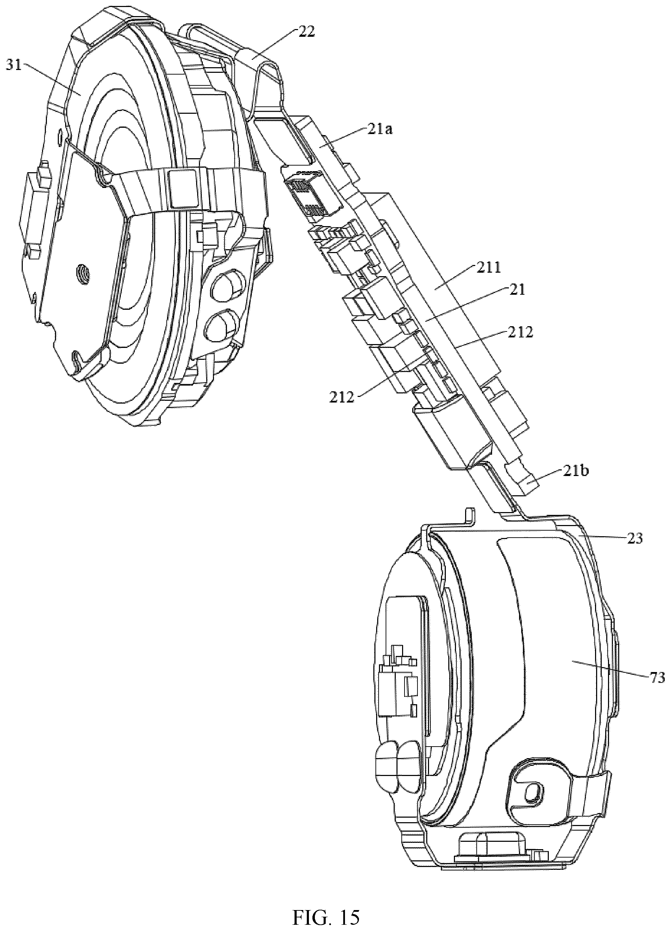

Refer to FIG. 3 and FIG. 15. FIG. 15 is a diagram of a partial structure of the earphone 10 shown in FIG. 1A.

In some embodiments, the main circuit board 21 includes a first end 21a and a second end 21b that are opposite to each other. The first end 21a of the main circuit board 21 is close to the speaker 31, and the second end 21b of the main circuit board 21 is close to the battery 73. The first flexible circuit board 22 and the speaker 31 are located on a same side of the main circuit board 21, and the first flexible circuit board 22 is electrically connected to the speaker 31 and the first end 21a of the main circuit board 21. The second flexible circuit board 23 and the battery 73 are located on a same side of the main circuit board 21, and the second flexible circuit board 23 is electrically connected to the battery 73 and the second end 21b of the main circuit board 21.

In this embodiment, the main circuit board 21 is a rigid printed circuit board, to have sufficient structural strength, so that a large quantity of components can be arranged on the component arrangement plane, and component arrangement can be implemented on two sides, to improve component integration. The first flexible circuit board 22 and the second flexible circuit board 23 may be bent, and the first flexible circuit board 22 and the second flexible circuit board 23 may be flexibly arranged based on an internal space shape of the earphone 10 and a structure of another part, so that a circuit in the circuit assembly 2 can smoothly extend outward from the main circuit board 21, and is electrically connected to another part (for example, the speaker 31 and the battery 73) of the earphone 10.

The first flexible circuit board 22 may be wound from a rear side of the speaker 31 to a front side of the speaker 31, and a plurality of parts of the first flexible circuit board 22 at different positions may be connected to different components, to improve component integration of the earphone 10. The second flexible circuit board 23 partially surrounds the battery 73, and a plurality of parts of the second flexible circuit board 23 at different positions may be connected to different components, to improve component integration of the earphone 10.

For example, the main circuit board 21 is fixedly connected to the first flexible circuit board 22 by using a BOF (Board on FPC) process, and the main circuit board 21 is fixedly connected to the second flexible circuit board 23 by using the BOF process. The BOF process means a process in which the main circuit board 21 is directly mounted on an FPC. In this embodiment, a bilateral BOF process is used for the electrical connections between the main circuit board 21 and both the first flexible circuit board 22 and the second flexible circuit board 23. This can effectively save component arrangement space of the main circuit board 21 and internal stacking space of the earphone 10, to help reduce costs.

In some other embodiments, the electrical connections between the main circuit board 21 and both the first flexible circuit board 22 and the second flexible circuit board 23 may have other implementations. For example, the electrical connections may be implemented by using a board-to-board (Board-to-board, BTB) connector or a zero insertion force (Zero Insertion Force, ZIF) connector, or the electrical connections may be implemented by using a rigid-flex board solution.

As shown in FIG. 15, for example, both of two board surfaces that are of the main circuit board 21 and that are disposed opposite to each other are component arrangement planes 212, and component arrangement is implemented on the main circuit board 21 on two sides, to fully use board surface space and improve utilization of internal space of the earphone 10. In this embodiment, the main circuit board 21 is of a single-board structure. In some other embodiments, the main circuit board 21 may alternatively be of a multi-board structure, for example, a sandwich structure (that is, a circuit board-component-circuit board structure). This is not strictly limited in this embodiment of this application.

For example, in addition to the main control chip 211, other components, for example, the gravity sensor, the Hall sensor, the radio frequency front end, and the like, of the earphone 10 may be further arranged on the main circuit board 21. A specific component arranged on the main circuit board 21 is not strictly limited in this application.

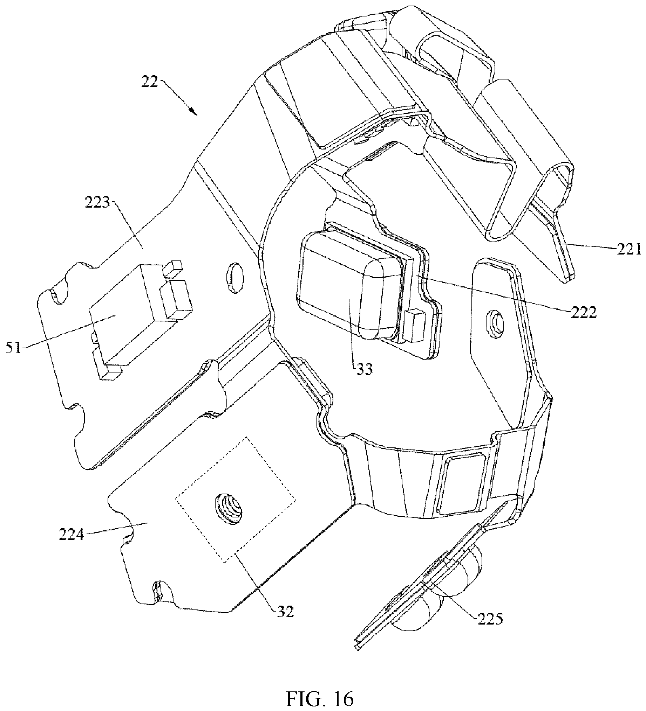

Refer to FIG. 16. FIG. 16 is a diagram of structures of the first flexible circuit board 22 and some components shown in FIG. 15.

In some embodiments, the first flexible circuit board 22 includes an interface part 221 and a plurality of connection parts. The plurality of connection parts may have a plurality of arrangement manners and connection structures. All of the plurality of connection parts are electrically connected to the interface part 221, and the interface part 221 is configured to be electrically connected to the main circuit board 21. The plurality of connection parts may include a first part 222, a second part 223, a third part 224, and a fourth part 225. For example, the second microphone 33 is fastened and electrically connected to the first part 222, and the first part 222 may be further fastened and electrically connected to a fitting component of the second microphone 33. The proximity sensor 51 is electrically connected to the second part 223, and the second part 223 may be further fastened and electrically connected to a fitting component of the proximity sensor 51. The first microphone 32 is fastened and electrically connected to the third part 224, and the third part 224 may be further fastened and electrically connected to a fitting component of the first microphone 32. The fourth part 225 is configured to be electrically connected to the speaker 31. One/Some parts of the first flexible circuit board 22 may be further configured to implement fastening to another part, so that a mounting position of the first flexible circuit board 22 in the earphone 10 is stable and reliable. One/Some parts of the first flexible circuit board 22 may be further used to arrange another circuit component. A stiffener may be disposed at a part that is of the first flexible circuit board 22 and that is used to fasten a component, to increase support strength and improve reliability.

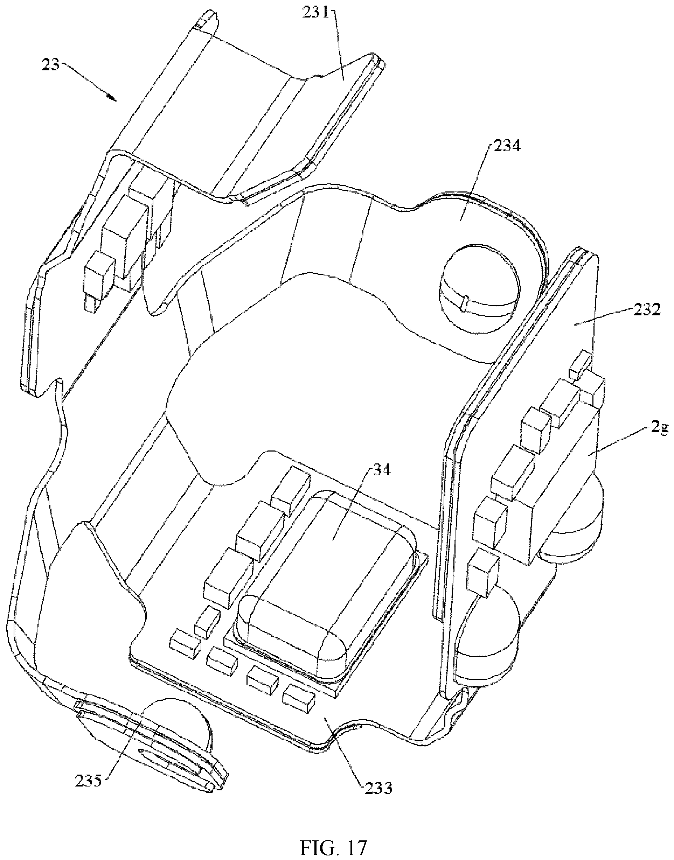

Refer to FIG. 17. FIG. 17 is a diagram of structures of the second flexible circuit board 23 and some components shown in FIG. 15.

In some embodiments, the second flexible circuit board 23 includes an interface part 231 and a plurality of connection parts. The plurality of connection parts may have a plurality of arrangement manners and connection structures. All of the plurality of connection parts are electrically connected to the interface part 231, and the interface part 231 is configured to be electrically connected to the main circuit board 21. The plurality of connection parts may include a first part 232, a second part 233, a third part 234, and a fourth part 235. For example, the first part 232 is configured to be electrically connected to the battery 73, and the charging circuit 2g and a fitting component thereof may be further fastened to the first part 232. The third microphone 34 is electrically connected to the second part 233, and the second part 233 may be further fastened and electrically connected to a fitting component of the third microphone 34. The third part 234 and the fourth part 235 may be respectively configured to be connected to the first contact 71 and the second contact 72. This part of content is described below. One/Some parts of the second flexible circuit board 23 may be further configured to implement fastening to another part, so that a mounting position of the second flexible circuit board 23 in the earphone 10 is stable and reliable. One/Some parts of the second flexible circuit board 23 may be further used to arrange another circuit component. A stiffener may be disposed at a part that is of the second flexible circuit board 23 and that is used to fasten a component, to increase support strength and improve reliability.

Cavity division of the earphone 10:

With reference to FIG. 3 and FIG. 4 again, the magnetic attraction member 81 of the earphone 10 is located below the fifth assembly 45 in the audio auxiliary assembly 4, and the fifth assembly 45 and the magnetic attraction member 81 jointly form a separation assembly 8. The separation assembly 8 is mounted in the top space 111a of the main housing 11 and is located between the speaker 31 and the main circuit board 21. The internal space 14 of the housing 1 includes a front cavity 14a, a rear cavity 14b, and a main board cavity 14c. The front cavity 14a is located between the front housing 12 and the speaker 31, the rear cavity 14b is located between the speaker 31 and the separation assembly 8, and the main board cavity 14c is located on a side that is of the separation assembly 8 and that faces away from the speaker 31.

The main circuit board 21, the second flexible circuit board 23, the antenna 6, the battery 73, and the like may be located in the main board cavity 14c. The first flexible circuit board 22 may extend from the main board cavity 14c to the rear cavity 14b and the front cavity 14a. In the audio auxiliary assembly 4, some components are located in the main board cavity 14c, and some components are located in the front cavity 14a.

For example, a peripheral edge of the speaker 31 is hermetically connected to an inner wall of the front housing 12. In this case, the front cavity 14a and the rear cavity 14b are separated from each other and do not communicate with each other. The front housing 12 is hermetically connected to the main housing 11, the fifth assembly 45 is hermetically connected to the magnetic attraction member 81, and a peripheral edge of the separation assembly 8 is hermetically connected to an inner wall of the main housing 11. The main board cavity 14c may be designed as a sealed cavity.

Front housing 12, first assembly 41 in the audio auxiliary assembly 4, proximity sensor 51, second assembly 42 in the audio auxiliary assembly 4, and first microphone 32 of the earphone 10:

With reference to FIG. 1A and FIG. 6, the front housing 12 has a first communication hole 122 and a second communication hole 123 that are disposed at an interval. The front housing 12 is approximately in a shape of a cover body. The front housing 12 may include a front side housing portion and a peripheral side housing portion. The front side housing portion is disposed to face forward, and the peripheral side housing portion is connected to the front side housing portion and is disposed around the front side housing portion. The first communication hole 122 may be disposed at the front side housing portion of the front housing 12, and the second communication hole 123 may be disposed at the peripheral side housing portion of the front housing 12. The second communication hole 123 may also be referred to as a sound hole. The front housing 12 may have a central surface 124, and the central surface 124 of the front housing 12 corresponds to the central axis 10d of the earbud 10a of the earphone 10. An outer contour of the front housing 12 may be symmetrically disposed relative to the central surface 124 of the front housing 12, and the first communication hole 122 and the second communication hole 123 may intersect with the central surface 124 of the front housing 12.

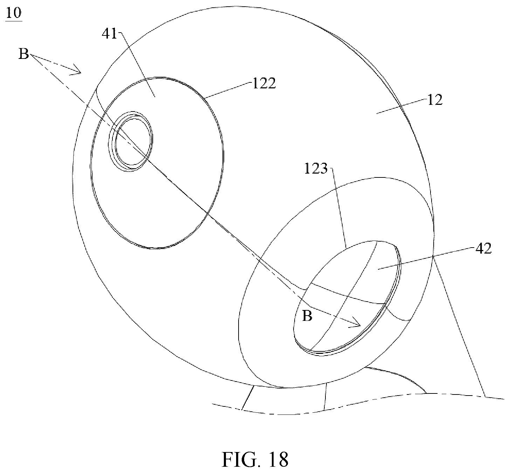

Refer to FIG. 4 and FIG. 18. FIG. 18 is a diagram of a partial structure of the earphone 10 shown in FIG. 1A at another angle.

In some embodiments, both the first assembly 41 and the second assembly 42 in the audio auxiliary assembly 4 are mounted in the internal space 121 of the front housing 12, and may be located in the front cavity 14a of the earphone 10. The first assembly 41 is disposed to correspond to the first communication hole 122 and covers the first communication hole 122, and the second assembly 42 is disposed to correspond to the second communication hole 123 and covers the second communication hole 123.

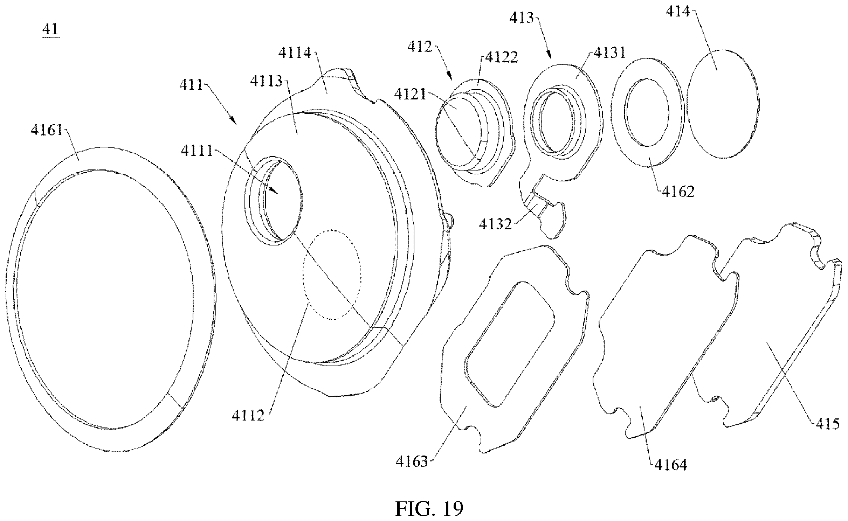

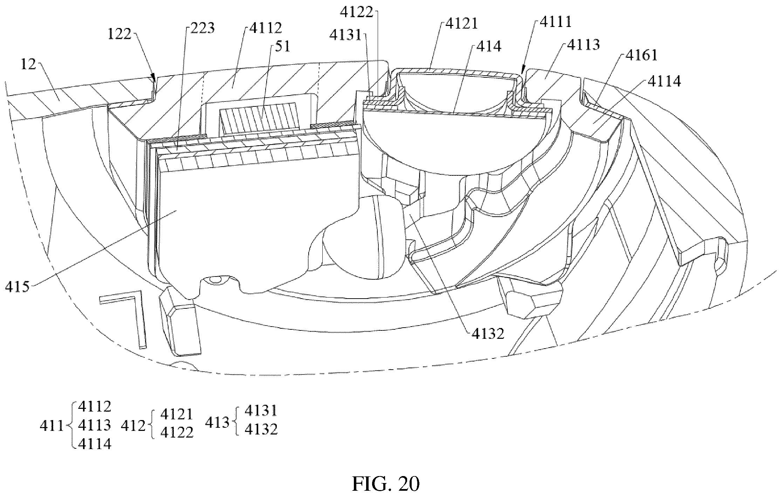

Refer to FIG. 19 and FIG. 20. FIG. 19 is a diagram of an exploded structure of the first assembly 41 shown in FIG. 3, and FIG. 20 is a diagram of a partial cross-sectional structure of the earphone 10 shown in FIG. 18 along B-B. For ease of illustration, a view in FIG. 20 is obtained by rotating a view in FIG. 18.

In some embodiments, the first assembly 41 includes a first base body 411, a first appearance mesh 412, a first grounding member 413, a first mesh fabric 414, a fastening plate 415, and a plurality of adhesive layers. The first base body 411 is provided with a front discharge hole 4111 and a light transmission region 4112. The front discharge hole 4111 is of a through hole structure, and allows a sound to pass through. The light transmission region 4112 allows light to pass through. The light transmission region 4112 is disposed at an interval from the front discharge hole 4111, and the light transmission region 4112 may be located on one side of the front discharge hole 4111 or disposed around the front discharge hole 4111. This is not strictly limited herein.

For example, the first base body 411 may include a main body 4113 and a flange 4114, and the flange 4114 is circumferentially connected to a peripheral edge of the main body 4113. The main body 4113 may protrude forward relative to the flange 4114, and a plurality of grooves are formed on a rear side of the main body 4113 to accommodate other parts. The front discharge hole 4111 and the light transmission region 4112 may be formed on the main body 4113. The first base body 411 may be an integrally formed structural member, and the first base body 411 is a light transmission structural member, so that a corresponding structure of the light transmission region 4112 allows light to pass through. The first base body 411 may have a black or approximately black appearance, but allows light to pass through. For example, the first base body 411 may include a transparent substrate and a black film layer, the black film layer is fastened to the transparent substrate, and a position that is of the black film layer and that corresponds to the light transmission region 4112 is hollowed out or has a small thickness. In some other embodiments, the first base body 411 may include a first part and a second part. The first part is a light transmission structural member to form the light transmission region 4112, the second part is a non-light transmission structural member, and the first part is built into a through hole of the second part. It may be understood that the first base body 411 may alternatively have another implementation structure. This is not strictly limited in this embodiment of this application.

The first base body 411 may be fastened to the front housing 12 by using an adhesive layer 4161. When the first base body 411 is mounted on the front housing 12, the main body 4113 of the first base body 411 may be built into the first communication hole 122 of the front housing 12, and the flange 4114 is connected to the inner wall of the front housing 12 by using the adhesive layer 4161. The adhesive layer 4161 may be a continuous rubber ring, to connect the first base body 411 and the front housing 12, and seal the first base body 411 and the front housing 12. The adhesive layer 4161 may be double-sided adhesive tape, glue, or another adhesive material. The main body 4113 of the first base body 411 forms a partial appearance of the earphone 10.

For example, the first appearance mesh 412 may include a main body 4121 and a flange 4122, and the flange 4122 is circumferentially connected to a peripheral edge of the main body 4121. The first appearance mesh 412 is fastened on a rear side of the first base body 411 and covers the front discharge hole 4111. The main body 4121 of the first appearance mesh 412 is built into the front discharge hole 4111, and the flange 4122 of the first appearance mesh 412 is fastened to an inner wall of the first base body 411. The first appearance mesh 412 forms a partial appearance of the earphone 10. The first appearance mesh 412 may be a metal mesh, to improve a fashion sense and mechanical reliability of the earphone 10, and lower a risk that a part located on a rear side of the first appearance mesh 412 is damaged by external force, for example, prevent penetration of an external sharp object, so as to extend a service life of the earphone 10. The first appearance mesh 412 may be an integrally formed structural member. For example, the first appearance mesh 412 may be formed by stamping a metal mesh member. In some other embodiments, the first appearance mesh 412 may alternatively be made of a plastic material or another material.

For example, the first grounding member 413 includes a fastening portion 4131 and a connection portion 4132. One end of the connection portion 4132 is connected to the fastening portion 4131, and the fastening portion 4131 may be ring-shaped. The first grounding member 413 is fastened on a side that is of the first appearance mesh 412 and that faces away from the first base body 411. The fastening portion 4131 of the first grounding member 413 may be circumferentially fixedly connected to the first appearance mesh 412, for example, fixedly connected to the flange of the first appearance mesh 412. The fastening portion 4131 of the first grounding member 413 may be further partially located on an inner side of the main body of the first appearance mesh 412. In this case, the first grounding member 413 is disposed around the front discharge hole 4111. The first grounding member 413 is made of a conductive material, for example, a metal material. The first grounding member 413 may be an integrally formed structural member. For example, the first grounding member 413 may be formed by stamping a metal plate. The first grounding member 413 is grounded, and is configured to prevent an electric shock problem from occurring in the first assembly 41.

For example, the first mesh fabric 414 is fastened on a side that is of the first grounding member 413 and that faces away from the first appearance mesh 412 by using an adhesive layer 4162. The first mesh fabric 414 is configured to prevent external dust from entering the earphone 10 and adversely affecting sound effect and sound quality of the earphone 10. The first mesh fabric 414 is of a breathable structure. In this embodiment of this application, the mesh fabric may have a mesh structure, and the mesh fabric may be made of a material such as nylon or metal. This is not strictly limited in this embodiment of this application.

In this embodiment, air can pass through the first appearance mesh 412, the first grounding member 413, the first mesh fabric 414, and the plurality of adhesive layers, so that the front cavity 14a of the earphone 10 communicates with an outside of the earphone 10, to balance atmospheric pressure between the front cavity 14a of the earphone 10 and the outside of the earphone 10. The first assembly 41 provides a front discharge channel for the speaker 31 of the earphone 10.

For example, the second part 223 of the first flexible circuit board 22 is fastened on the rear side of the first base body 411 by using an adhesive layer 4163, and the proximity sensor 51 is disposed to correspond to the light transmission region 4112 of the first base body 411. The proximity sensor 51 transmits and receives an optical signal by using the light transmission region 4112, to perform wearing detection of the earphone 10. The fastening plate 415 may be fastened on a side that is of the second part 223 of the first flexible circuit board 22 and that faces away from the proximity sensor 51 by using an adhesive layer 4164, and the fastening plate 415 is configured to enhance structural strength of the second part 223 of the first flexible circuit board 22. The fastening plate 415 may be further fixedly connected to the first base body 411, so that the second part 223 of the first flexible circuit board 22 is fixedly connected to the first base body 411, to improve assembly stability of the first assembly 41.

The connection portion 4132 of the first grounding member 413 may be fastened and electrically connected to the second part 223 of the first flexible circuit board 22, to implement grounding. For example, the connection portion 4132 of the first grounding member 413 may be soldered to the second part 223 of the first flexible circuit board 22. In some other embodiments, the first assembly 41 may not be provided with the first grounding member 413, the first appearance mesh 412 is made of a conductive material, and the first appearance mesh 412 is electrically connected to the first flexible circuit board 22, to implement grounding.

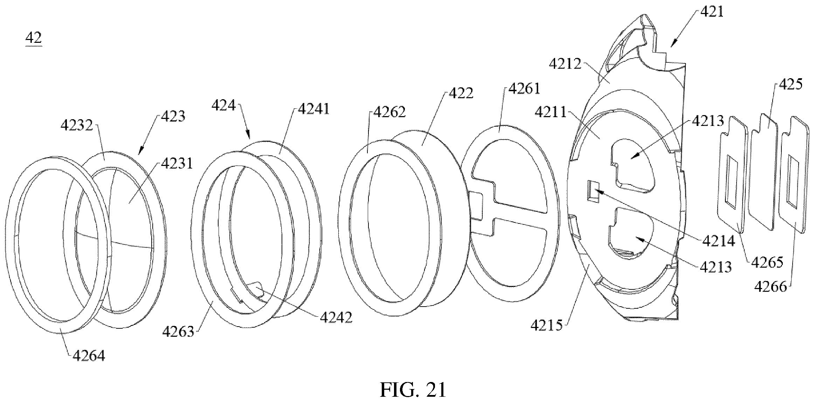

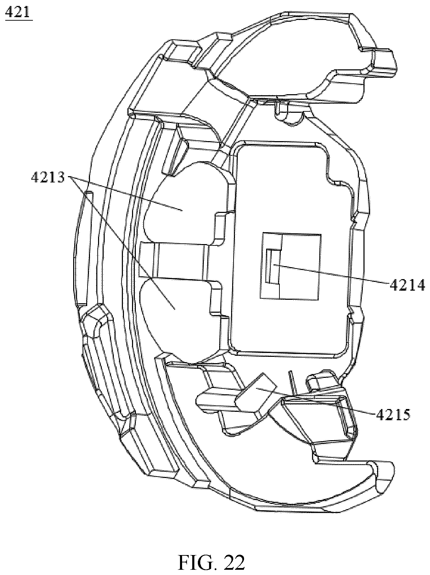

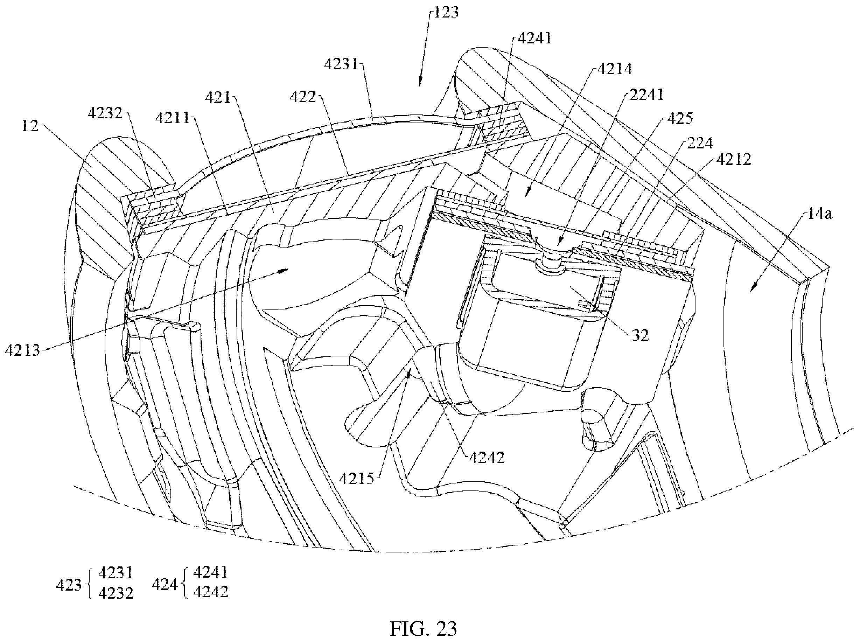

Refer to FIG. 21 to FIG. 23. FIG. 21 is a diagram of an exploded structure of the second assembly 42 shown in FIG. 3, FIG. 22 is a diagram of a structure of a second base body of the second assembly 42 shown in FIG. 21 at another angle, and FIG. 23 is a diagram of the other partial cross-sectional structure of the earphone 10 shown in FIG. 18 along B-B. For ease of illustration, a view in FIG. 23 is obtained by rotating a view in FIG. 18.

In some embodiments, the second assembly 42 includes a second base body 421, a second mesh fabric 422, a second appearance mesh 423, a second grounding member 424, a third mesh fabric 425, and a plurality of adhesive layers.

For example, the second base body 421 has a first surface 4211 and a second surface 4212. The first surface 4211 is located on one side of the second base body 421, and the second surface 4212 is connected to a peripheral edge of the first surface 4211 and is disposed in an inclined manner relative to the first surface 4211. The second base body 421 is provided with a first hole 4213, a sound pickup channel 4214, and a second hole 4215. The first hole 4213 penetrates through the first surface 4211 to the other side of the second base body 421, and there may be one or more first holes 4213. An opening at one end of the sound pickup channel 4214 is located on the first surface 4211, an opening at the other end extends to a surface on the other side of the second base body 421, and the sound pickup channel 4214 is separately disposed from the first hole 4213. The sound pickup channel 4214 may be a curved channel. The second hole 4215 penetrates through the first surface 4211 or the second surface 4212 to the other side of the second base body 421, and the second hole 4215 is separately disposed from both the sound pickup channel 4214 and the first hole 4213.

The second base body 421 is fastened on an inner side of the front housing 12, the second base body 421 is located in the front cavity 14a, the first surface 4211 of the second base body 421 faces the second communication hole 123, and the second surface 4212 faces the inner wall of the front housing 12.

For example, the second mesh fabric 422 is fastened to the first surface 4211 of the second base body 421 by using an adhesive layer 4261. The second mesh fabric 422 is configured to prevent external dust from entering the earphone 10 and adversely affecting sound effect and sound quality of the earphone 10. The second mesh fabric 422 covers the first hole 4213 of the second base body 421 and an opening of the sound pickup channel 4214 on the first surface 4211. In some embodiments, the second mesh fabric 422 may cover the first surface 4211 of the second base body 421, and a shape of the adhesive layer 4261 may be adapted to a shape of the first surface 4211.

For example, the second grounding member 424 includes a fastening portion 4241 and a connection portion 4242. One end of the connection portion 4242 is connected to the fastening portion 4241, and the fastening portion 4241 may be ring-shaped. The second grounding member 424 is fastened on a side that is of the second mesh fabric 422 and that faces away from the second base body 421. The fastening portion 4241 of the second grounding member 424 may be circumferentially fixedly connected to the second mesh fabric 422, for example, fixedly connected to a peripheral edge of the second mesh fabric 422 by using an adhesive layer 4262. The connection portion 4242 of the second grounding member 424 may extend to the other side of the second base body 421 through the second hole 4215 of the second base body 421. The second grounding member 424 is made of a conductive material, for example, a metal material. The second grounding member 424 may be an integrally formed structural member. For example, the second grounding member 424 may be formed by stamping a metal plate. The second grounding member 424 is grounded, and is configured to prevent an electric shock problem from occurring in the second assembly 42.

For example, the second appearance mesh 423 includes a middle part 4231 and a peripheral part 4232, and the peripheral part 4232 is circumferentially connected to a peripheral edge of the middle part 4231. The middle part 4231 may protrude relative to the peripheral part 4232, to form a bulging structure. Alternatively, the middle part 4231 may be of a flat structure, and the second appearance mesh 423 is of a planar mesh structure. The peripheral part 4232 of the second appearance mesh 423 may be fastened on a side that is of the second grounding member 424 and that faces away from the second mesh fabric 422 by using an adhesive layer 4263, and the middle part 4231 of the second appearance mesh 423 may protrude in a direction far away from the second base body 421.

The second appearance mesh 423 may be a metal mesh, to improve a fashion sense and mechanical reliability of the earphone 10, and lower a risk that a part located on a rear side of the second appearance mesh 423 is damaged by external force, for example, prevent penetration of an external sharp object, so as to extend a service life of the earphone 10. The second appearance mesh 423 may be an integrally formed structural member. For example, the second appearance mesh 423 may be formed by stamping a metal mesh member. In some other embodiments, the second appearance mesh 423 may alternatively be made of a plastic material or another material.

For example, all of the second appearance mesh 423, the second grounding member 424, and the second mesh fabric 422 are located between the second communication hole 123 of the front housing 12 and the second base body 421, the peripheral part 4232 of the second appearance mesh 423 is connected to the inner wall of the front housing 12 by using an adhesive layer 4264, and both the second appearance mesh 423 and the second mesh fabric 422 cover the second communication hole 123. When the speaker 31 works, air in the front cavity 14a is pushed to vibrate to form a sound, and the sound sequentially passes through the first hole 4213 of the second base body 421, the second mesh fabric 422, the second appearance mesh 423, and the second communication hole 123 of the front housing 12, and is propagated to the outside of the earphone 10, to implement sound generation. The second assembly 42 forms a sound output channel of the speaker 31.

An opening area of the first hole 4213 of the second base body 421 needs to meet a sound output requirement of the speaker 31. When there are a plurality of first holes 4213, the plurality of first holes 4213 are disposed at an interval from each other, an area of a single first hole 4213 is small, and a total area of the plurality of first holes 4213 meets the sound output requirement. In this case, structural strength of the second base body 421 is high.

For example, the third mesh fabric 425 may be fastened on a side that is of the second base body 421 and that faces away from the first surface 4211 by using an adhesive layer 4265, and covers an opening of the sound pickup channel 4214. The third part 224 of the first flexible circuit board 22 may be fastened on a side that is of the third mesh fabric 425 and that faces away from the second base body 421 by using an adhesive layer 4266. The third part 224 of the first flexible circuit board 22 is provided with a through hole 2241, and the first microphone 32 fastened to the third part 224 of the first flexible circuit board 22 may receive a sound through the through hole 2241. The third mesh fabric 425 covers the through hole 2241.

In this embodiment, a sound outside the earphone 10 may sequentially pass through the second appearance mesh 423, the second mesh fabric 422, the sound pickup channel 4214, the third mesh fabric 425, and the through hole 2241 of the third part 224 of the first flexible circuit board 22, and enter the first microphone 32, and the earphone 10 collects the external sound by using the first microphone 32, to implement sound pickup.

The connection portion 4242 of the second grounding member 424 may be fastened and electrically connected to the third part 224 of the first flexible circuit board 22, to implement grounding. For example, the connection portion 4242 of the second grounding member 424 may be soldered to the third part 224 of the first flexible circuit board 22. In some other embodiments, the second assembly 42 may not be provided with the second grounding member 424, the second appearance mesh 423 is made of a conductive material, and the second appearance mesh 423 is electrically connected to the first flexible circuit board 22, to implement grounding.

Main housing member 113 and third assembly 43 and fourth assembly 44 in the audio auxiliary assembly 4 of the earphone 10:

With reference to FIG. 1A and FIG. 6 again, in some embodiments, the main housing member 113 of the housing 1 has a first through hole 1135 and a second through hole 1136 that are disposed at an interval, and both the first through hole 1135 and the second through hole 1136 are located on a rear side of the main housing member 113, that is, located on a side that is of the main housing 11 and that faces away from the front housing 12. The first through hole 1135 and the second through hole 1136 are respectively located on two sides of the dorsal line 112. The first through hole 1135 and the second through hole 1136 may be approximately located at a junction position between the earbud 10a and the stem 10b. When the user wears the earphone 10, the first through hole 1135 and the second through hole 1136 face away from the user ear and are exposed.

In this embodiment, the first through hole 1135 and the second through hole 1136 are arranged at positions that are approximately symmetric, to help improve appearance exquisiteness of the earphone 10.

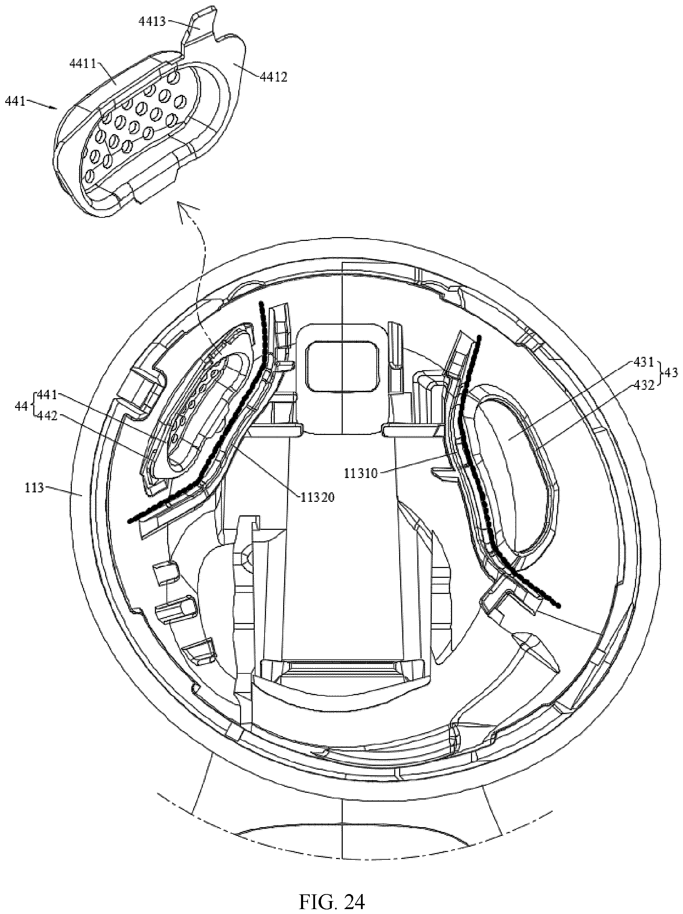

Refer to FIG. 1A and FIG. 24. FIG. 24 is a diagram of a partial structure of the earphone 10 shown in FIG. 1A.

In some embodiments, the third assembly 43 in the audio auxiliary assembly 4 includes a fourth mesh fabric 431 and an adhesive layer 432. The fourth mesh fabric 431 may be fastened to the inner wall of the main housing member 113 by using the adhesive layer 432, and the fourth mesh fabric 431 covers the first through hole 1135. The fourth mesh fabric 431 is configured to prevent external dust from entering the earphone 10 through the first through hole 1135. The fourth mesh fabric 431 may further prevent an internal structure of the earphone 10 from being directly seen from the outside of the earphone 10, and play a decoration role. In some other embodiments, the third assembly 43 may not include the adhesive layer, and the fourth mesh fabric 431 is fastened to the inner wall of the main housing member 113 in another manner. This is not strictly limited in this embodiment of this application.

In some embodiments, the fourth assembly 44 in the audio auxiliary assembly 4 includes a third appearance mesh 441 and an adhesive layer 442. The third appearance mesh 441 may be fastened to the inner wall of the main housing member 113 by using the adhesive layer 442, and the third appearance mesh 441 covers the second through hole 1136. The third appearance mesh 441 may include a main body 4411 and a flange 4412. The flange 4412 is circumferentially connected to a peripheral edge of the main body 4411, the flange 4412 is fastened to the inner wall of the main housing member 113, and the main body 4411 is built into the second through hole 1136.

For example, the third appearance mesh 441 is made of a conductive material, and is grounded. In this case, the third appearance mesh 441 may prevent an electric shock problem. The third appearance mesh 441 may further include an extension member 4413. The extension member 4413 is connected to the flange 4412, and the extension member 4413 is configured to be electrically connected to the first flexible circuit board 22, to implement grounding of the third appearance mesh 441. In this embodiment, the third appearance mesh 441 is a conductive member, and the extension member 4413 of the third appearance mesh 441 is fastened and electrically connected to the first flexible circuit board 22 in a soldering manner. A soldering connection relationship is reliable, a process is simple, and costs are low.

The third appearance mesh 441 forms a partial appearance of the earphone 10. The third appearance mesh 441 may be a metal mesh, to improve a fashion sense and mechanical reliability of the earphone 10, and lower a risk that a part located on a rear side of the third appearance mesh 441 is damaged by external force, for example, prevent penetration of an external sharp object, so as to extend a service life of the earphone 10. The third appearance mesh 441 may be an integrally formed structural member. For example, the third appearance mesh 441 may be formed by stamping a metal mesh member.

In some other embodiments, the fourth assembly 44 may also include a grounding member, and the fourth assembly 44 is grounded by using the grounding member, to prevent electric shock. In this case, the third appearance mesh 441 may be made of a metal material, or may be made of a plastic material or another material.

Fifth assembly 45 in the audio auxiliary assembly 4 of the earphone 10:

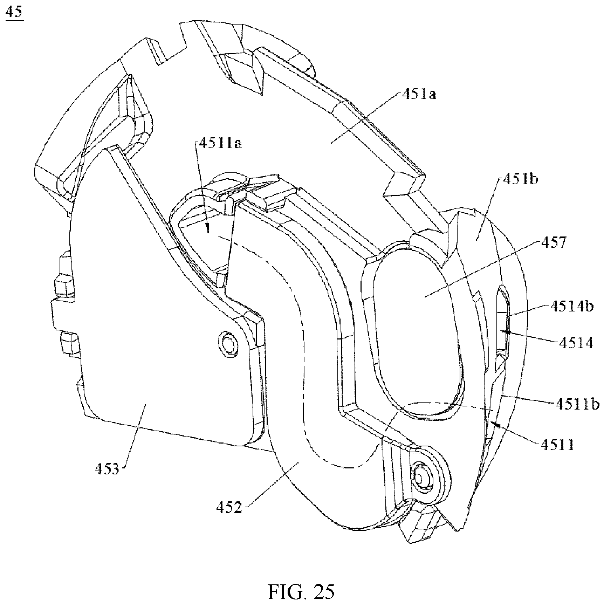

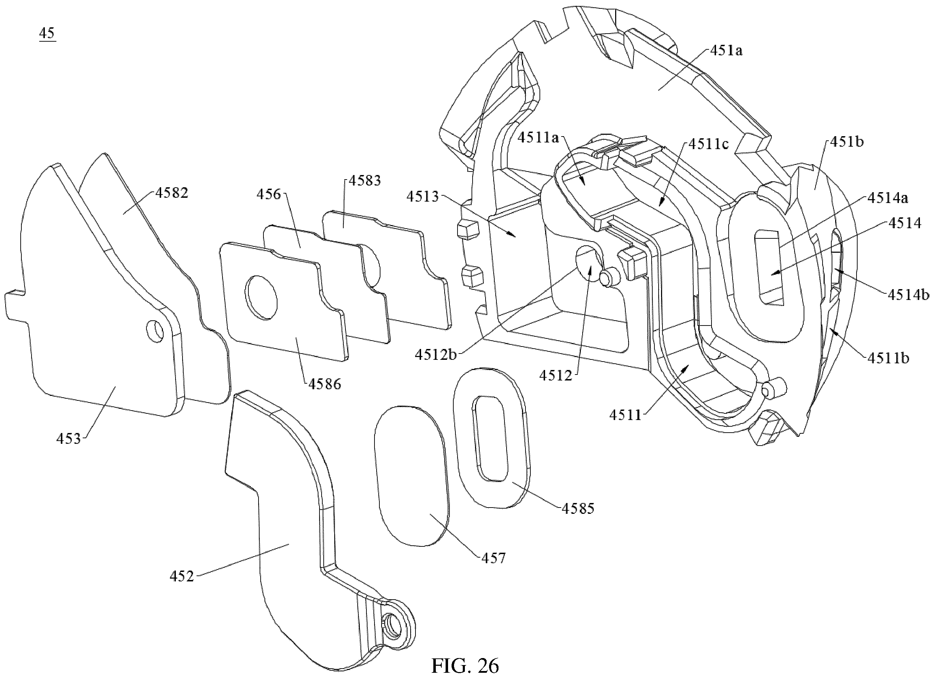

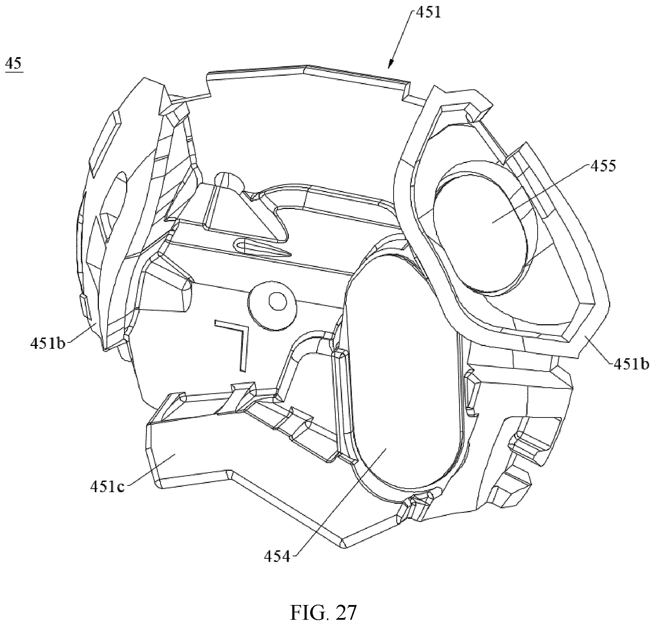

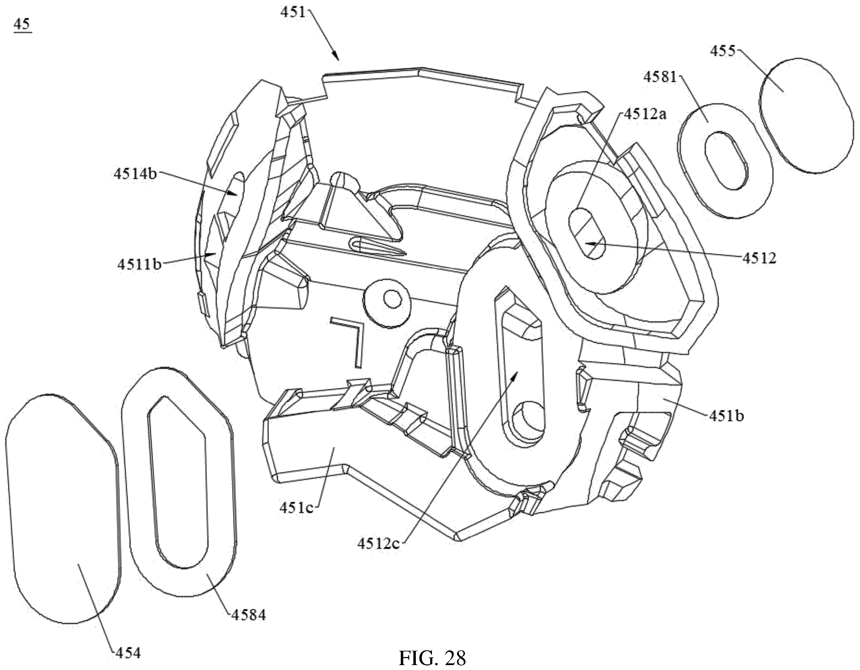

Refer to FIG. 25 to FIG. 28. FIG. 25 is a diagram of a structure of the fifth assembly 45 in the audio auxiliary assembly 4 shown in FIG. 3, FIG. 26 is a diagram of a partial exploded structure of the fifth assembly 45 shown in FIG. 25, FIG. 27 is a diagram of a structure of the fifth assembly 45 shown in FIG. 25 at another angle, and FIG. 28 is a diagram of a partial exploded structure of the fifth assembly 45 shown in FIG. 27. A view in FIG. 27 is obtained by flipping a view in FIG. 25.

In some embodiments, the fifth assembly 45 in the audio auxiliary assembly 4 includes a support 451, a first cover plate 452, a second cover plate 453, a third cover plate 454, a fifth mesh fabric 455, a sixth mesh fabric 456, a seventh mesh fabric 457, and a plurality of adhesive layers.

For example, the support 451 has a front side 451a and a rear side 451b that are disposed to face away from each other, and further has a peripheral side 451c that is circumferentially located between the front side 451a and the rear side 451b. With reference to FIG. 4, the front side 451a of the support 451 is disposed to face the speaker 31, the rear cavity 14b is formed between the support 451 and the speaker 31, and the front side 451a of the support 451 is disposed to face the rear cavity 14b; the rear side 451b of the support 451 is disposed to face away from the speaker 31, and is disposed to face the main circuit board 21, that is, disposed to face the main board cavity 14c; and the peripheral side of the support 451 is disposed to face the housing 1. The fifth assembly 45 may be fixedly connected to the inner wall of the main housing member 113 by using the peripheral side 451c of the support 451, to be fastened in the housing 1.

In some embodiments, as shown in FIG. 25 and FIG. 26, the support 451 is provided with a bass tube channel 4511, and the bass tube channel 4511 is formed with two openings on the support 451, to communicate with different space located in different orientations of the support 451. When the fifth assembly 45 is mounted in the housing 1, one end of the bass tube channel 4511 communicates with the rear cavity 14b, and the other end communicates with the first through hole 1135 of the main housing member 113, so that air in the rear cavity 14b of the earphone 10 can be propagated to external space of the earphone 10 through the bass tube channel 4511 and the first through hole 1135. For example, the bass tube channel 4511 is formed with a first opening 4511a on the front side 451a of the support 451, and is formed with a second opening 4511b on the peripheral side 451c of the support 451, and the second opening 4511b communicates with the first through hole 1135. In this case, the bass tube channel 4511 can communicate with the rear cavity 14b and the external space of the earphone 10.

A region that is of the support 451 and that is located around the second opening 4511b is hermetically connected to an inner wall of the housing 1. For example, a gap between the region that is of the support 451 and that is located around the second opening 4511b and the inner wall of the main housing member 113 may be hermetically connected by using an adhesive layer, to improve sealing performance of the bass tube channel 4511.

The bass tube channel 4511 may have a plurality of implementation structures. For example, the bass tube channel 4511 may be formed with a strip-shaped groove 4511c on the front side 451a of the support 451, the first cover plate 452 is fastened on the front side 451a of the support 451, and covers one part of an opening of the strip-shaped groove 4511c, and the other part of the opening of the strip-shaped groove 4511c forms the first opening 4511a. In this case, the bass tube channel 4511 is jointly enclosed by the support 451 and the first cover plate 452. The first cover plate 452 may be first positioned with the support 451 by using a positioning structure (for example, a positioning post, a protrusion, or the like) on the support 451, and then fastened to the support 451 in an ultrasonic soldering manner, to ensure sealing reliability of a bass tube. In some other embodiments, the first cover plate 452 may alternatively be fixedly connected to the support 451 by using an adhesive material such as a glue dispensing material or double-sided adhesive tape.

In this embodiment of this application, when the speaker 31 of the earphone 10 works, air resonance is formed in the bass tube channel 4511, to drive air in the rear cavity 14b to form resonance. Therefore, vibration of the diaphragm of the speaker 31 is affected, to improve bass performance of the earphone 10.

A simplified formula for calculating a resonance frequency in an acoustic system is $f = \frac{1}{2\pi\sqrt{MC}}$, where $C = C_{\mathrm{ms}} * S_{\mathrm{D}}^2$, $M = \rho\frac{L+1.7R}{S}$, $C_{\mathrm{ms}}$ is a mechanical compliance coefficient of a speaker, $S_{\mathrm{D}}$ is a diaphragm area of the speaker, $\rho$ is air density, $L$ is a length of a bass tube channel, $R$ is an equivalent radius of a cross-sectional area of the bass tube channel, and S is the cross-sectional area of the bass tube channel.

It may be learned that a dimension of the bass tube channel 4511 of the earphone 10 affects a frequency response result, and a length and/or a cross-sectional area of the bass tube channel 4511 may be adjusted to improve low-frequency sensitivity based on a sound quality/noise reduction consideration. A dashed line in FIG. 25 briefly shows an extension direction of the bass tube channel 4511. A dimension of the bass tube channel 4511 in the extension direction of the bass tube channel 4511 is the length, and a cross section of the bass tube channel 4511 is perpendicular to the extension direction of the bass tube channel 4511. The cross-sectional area of the bass tube channel 4511 is an area of the cross section of the bass tube channel 4511.

In addition, the cross-sectional area of the bass tube channel 4511 is limited and cannot be excessively large or excessively small. If the cross-sectional area of the bass tube channel 4511 is excessively small, acoustic viscous damping is increased and resonance effect is affected. If the cross-sectional area of the bass tube channel 4511 is excessively large, the earphone 10 has an excessively large volume.

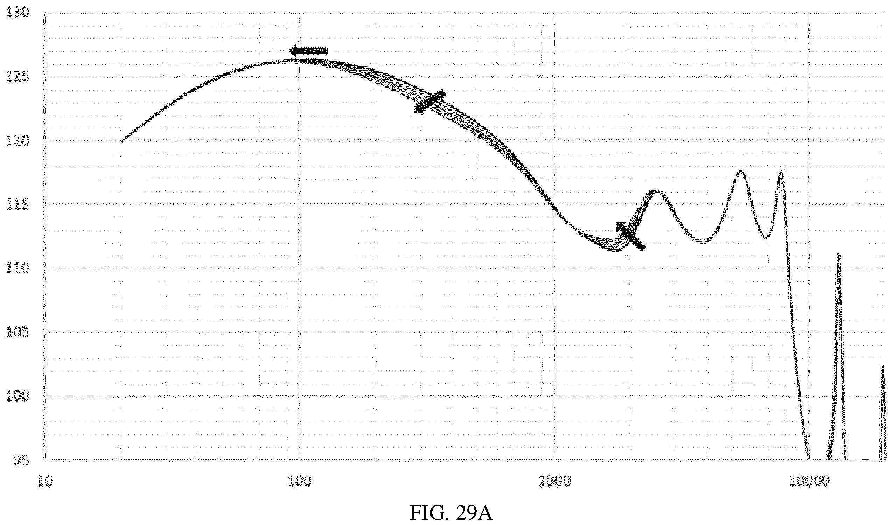

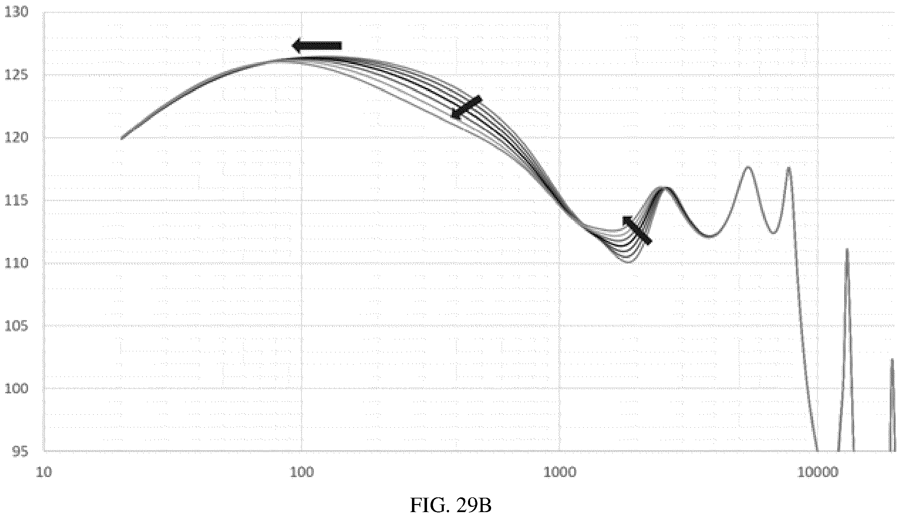

Refer to FIG. 29A and FIG. 29B. FIG. 29A is a simulation diagram of a relationship between the length of the bass tube channel 4511 of the fifth assembly 45 shown in FIG. 25 and a frequency response of the earphone 10 in a possible implementation, and FIG. 29B is a simulation diagram of a relationship between the cross-sectional area of the bass tube channel 4511 of the fifth assembly 45 shown in FIG. 25 and a frequency response of the earphone 10 in a possible implementation. In FIG. 29A and FIG. 29B, a horizontal coordinate is a frequency in a unit of hertz (Hz), and a vertical coordinate is a sound pressure level in a unit of decibel (dB).

A plurality of curves in FIG. 29A correspond to frequency response curves when the length of the bass tube channel 4511 is 9.8 mm, 10.8 mm, 11.8 mm, 12.8 mm, and 13.8 mm, and an arrow in the figure corresponds to a change trend of the frequency response of the earphone 10 when the length of the bass tube channel 4511 is increased. A plurality of curves in FIG. 29B correspond to frequency response curves when the cross-sectional area of the bass tube channel 4511 is 1.54 mm², 1.44 mm², 1.34 mm², 1.24 mm², 1.14 mm², 1.04 mm², and 0.94 mm², and an arrow in the figure corresponds to a change trend of the frequency response of the earphone 10 when the cross-sectional area of the bass tube channel 4511 is decreased. As shown in FIG. 29A and FIG. 29B, when the length of the bass tube channel 4511 is increased or the cross-sectional area is decreased, a resonance peak frequency near 100 Hz is moved forward, a resonance valley depth near 1.5 kHz is decreased, and sensitivity on a frequency band from 100 Hz to 1 kHz is reduced.

In this embodiment of this application, for example, the cross-sectional area of the bass tube channel 4511 may range from 0.8 mm² to 1.7 mm², for example, may range from 0.94 mm² to 1.54 mm², for example, 1.126 mm², 1.20 mm², 1.24 mm², 1.28 mm², or the like. The length of the bass tube channel 4511 may range from 7 mm to 16 mm, for example, may range from 9.8 mm to 13.8 mm, for example, 9.8 mm, 10.4 mm, 11.2 mm, or the like, to obtain good low-frequency sensitivity.

In this embodiment of this application, for example, the cross section of the bass tube channel 4511 may be in a shape of a rectangle or a circle, or another shape. The bass tube channel 4511 may include a straight extension part and/or a curved extension part, to meet a length requirement and a space arrangement requirement of the bass tube channel 4511. A specific structural shape of the bass tube channel 4511 is not strictly limited in this embodiment of this application.

In some embodiments, the first cover plate 452 may be made of a plastic material. In this case, a weight of the first cover plate 452 is light, to facilitate weight reduction of the earphone 10. In addition, when the support 451 is also made of a plastic material, the first cover plate 452 and the support 451 may be fastened to each other by using an ultrasonic soldering technology. In this way, requirements for fastening and sealing can be met, and no additional space is occupied due to a connection requirement, to facilitate miniaturization. Certainly, the first cover plate 452 may alternatively be fixedly connected to the support 451 by using an adhesive material such as a glue dispensing material or double-sided adhesive tape.

In some other embodiments, the first cover plate 452 may alternatively be made of a metal material. In this case, a hermetical connection relationship is still maintained between the first cover plate 452 and a main body. For example, the first cover plate 452 and the main body may be fastened by using an adhesive material such as a glue dispensing material or double-sided adhesive tape. In addition, the fifth assembly 45 is located between the speaker 31 and the main circuit board 21. Therefore, when the first cover plate 452 is made of the metal material, the first cover plate 452 may also be used as a magnetic isolation member, and can isolate a magnetic field, to reduce adverse impact of an induced magnetic field generated by a component on the main circuit board 21 on the speaker 31, and further lower a risk that current noise occurs. For example, the first cover plate 452 may be made of an SPCC material, that is, a cold-rolled carbon steel sheet and a steel strip are usually used, where S represents steel (Steel), P represents plate (Plate), C represents cold-rolled (cold), and C at a fourth position represents common (common).

In some other embodiments, the first cover plate 452 may further include a plurality of plate bodies disposed in a stacked manner, and at least one of the plurality of plate bodies is made of a metal material. In this case, the first cover plate 452 may be reused as a magnetic isolation member. At least one of the plurality of plate bodies may be further made of a plastic material. In this case, the first cover plate 452 is a composite cover plate. For example, the first cover plate 452 may include a plastic plate and a metal plate that are disposed in a stacked manner, the plastic plate is disposed on a side close to the support 451, and the first cover plate 452 can be soldered to the support 451 through the plastic plate in an ultrasonic soldering manner. In addition, the first cover plate 452 can further implement magnetic isolation by using the metal plate, to lower a risk that current noise occurs in the speaker 31.

In some other embodiments, the bass tube channel 4511 may alternatively have another implementation structure. Correspondingly, the audio auxiliary assembly 4 may not include the first cover plate 452, or may further include another structure.

In some embodiments, as shown in FIG. 25 to FIG. 28, the support 451 is further provided with a sound pickup channel 4512 and a sound pickup cavity 4513.

The sound pickup channel 4512 and the bass tube channel 4511 are separately disposed, one end of the sound pickup channel 4512 communicates with the sound pickup cavity 4513, and the other end is formed with an opening on the support 451, to communicate with the sound pickup cavity 4513 and space located outside the support 451. When the fifth assembly 45 is mounted in the housing 1, an end that is of the sound pickup channel 4512 and that is far away from the sound pickup cavity 4513 communicates with the second through hole 1136 of the main housing member 113, so that a sound outside the earphone 10 can enter the sound pickup cavity 4513 through the second through hole 1136 and the sound pickup channel 4512. The sound pickup cavity 4513 is configured to accommodate the second microphone 33. The second microphone 33 in the audio assembly 3 is mounted in the sound pickup cavity 4513, and the second microphone 33 can collect an external sound entering the sound pickup cavity 4513.

The sound pickup channel 4512 is formed with a third opening 4512a on the peripheral side 451c of the support 451, the third opening 4512a is disposed at an interval from the second opening 4511b, and the third opening 4512a communicates with the second through hole 1136. The third opening 4512a and the second opening 4511b are located on different sides of the support 451, to correspond to positions of the first through hole 1135 and the second through hole 1136 of the main housing member 113, so as to match an appearance of the earphone 10.

The fifth mesh fabric 455 may be fastened on the peripheral side 451c of the support 451 and cover the third opening 4512a. The fifth mesh fabric 455 allows a sound to pass through, and is configured to prevent external dust from entering the sound pickup channel 4512 through the third opening 4512a, so that sound pickup accuracy of the second microphone 33 is high. The fifth mesh fabric 455 may be fastened to the support 451 by using an adhesive layer 4581, and the adhesive layer 4581 may be an adhesive material such as a glue dispensing material or double-sided adhesive tape. The fifth mesh fabric 455 may alternatively be fastened to the support 451 in another manner. This is not strictly limited in this embodiment of this application.

A region that is of the support 451 and that is located around the third opening 4512a is hermetically connected to the inner wall of the housing 1. For example, the region that is of the support 451 and that is located around the third opening 4512a may be hermetically connected to the inner wall of the main housing member 113 by using an adhesive layer, to improve sealing performance of the sound pickup channel 4512.

For example, the sound pickup cavity 4513 is formed on the front side 451a of the support 451, and the second cover plate 453 is fastened on the front side 451a of the support 451 and covers the sound pickup cavity 4513. The second cover plate 453 may be fastened to the support 451 by using an adhesive layer 4582, and the adhesive layer 4582 may be an adhesive material such as a glue dispensing material or double-sided adhesive tape. In some other embodiments, the second cover plate 453 may alternatively be fastened to the support 451 through ultrasonic soldering or in another manner.

The second cover plate 453 is hermetically connected to the support 451, to seal the sound pickup cavity 4513 and isolate the rear cavity 14b from the sound pickup cavity 4513, so as to avoid a problem that self-excitation and squealing are caused when the second microphone 33 located in the sound pickup cavity 4513 picks up a sound of the speaker 31. Isolation of the second cover plate 453 is greater than 30 dB, to meet an isolation requirement between the second microphone 33 and the speaker 31. In some examples, a thickness of the second cover plate 453 may range from 0.15 mm to 0.45 mm, for example, 0.23 mm, 0.3 mm, 0.35 mm, or the like.

In some embodiments, the second cover plate 453 may be made of a plastic material. In this case, a weight of the second cover plate 453 is light, to facilitate weight reduction of the earphone 10. In addition, when the support 451 is also made of a plastic material, the second cover plate 453 and the support 451 may be fastened to each other by using an ultrasonic soldering technology. In this way, requirements for fastening and sealing can be met, and no additional space is occupied due to a connection requirement, to facilitate miniaturization. Certainly, the second cover plate 453 may alternatively be fixedly connected to the support 451 by using an adhesive material such as a glue dispensing material or double-sided adhesive tape.

In some other embodiments, the second cover plate 453 may alternatively be made of a metal material. In this case, a hermetical connection relationship is still maintained between the second cover plate 453 and a main body. For example, the second cover plate 453 and the main body may be fastened by using an adhesive material such as a glue dispensing material or double-sided adhesive tape. In addition, the fifth assembly 45 is located between the speaker 31 and the main circuit board 21. Therefore, when the second cover plate 453 is made of the metal material, the second cover plate 453 may also be used as a magnetic isolation member, and can isolate a magnetic field, to reduce adverse impact of an induced magnetic field generated by a component on the main circuit board 21 on the speaker 31, and further lower a risk that current noise occurs. For example, the second cover plate 453 may be made of an SPCC material, that is, a cold-rolled carbon steel sheet and a steel strip are usually used, where S represents steel (Steel), P represents plate (Plate), C represents cold-rolled (cold), and C at a fourth position represents common (common).

In some other embodiments, the second cover plate 453 may further include a plurality of plate bodies disposed in a stacked manner, and at least one of the plurality of plate bodies is made of a metal material. In this case, the second cover plate 453 may be reused as a magnetic isolation member. At least one of the plurality of plate bodies may be further made of a plastic material. In this case, the second cover plate 453 is a composite cover plate. For example, the second cover plate 453 may include a plastic plate and a metal plate that are disposed in a stacked manner, the plastic plate is disposed on a side close to the support 451, and the second cover plate 453 can be soldered to the support 451 through the plastic plate in an ultrasonic soldering manner. In addition, the second cover plate 453 can further implement magnetic isolation by using the metal plate, to lower a risk that current noise occurs in the speaker 31.

The sound pickup channel 4512 may be formed with an opening 4512b on a bottom wall of the sound pickup cavity 4513, to communicate with the sound pickup cavity 4513. The sixth mesh fabric 456 is located in the sound pickup cavity 4513, is fastened on the bottom wall of the sound pickup cavity 4513, and covers the opening 4512b that is of the sound pickup channel 4512 and that is on the bottom wall of the sound pickup cavity 4513. The sixth mesh fabric 456 may be fastened to the bottom wall of the sound pickup cavity 4513 by using an adhesive layer 4583 or in another manner, and the adhesive layer 4583 may be an adhesive material such as a glue dispensing material or double-sided adhesive tape.

For example, the sound pickup channel 4512 may be disposed as a curved channel. For example, the sound pickup channel 4512 includes at least one curved part, to prevent a sound (for example, a wind sound) outside the earphone 10 from directly entering the sound pickup cavity 4513, so as to improve windproof effect, reduce wind noise, and improve sound pickup accuracy of the second microphone 33. For example, the sound pickup channel 4512 may be formed with a connection groove 4512c on the rear side 451b of the support 451. One end of the connection groove 4512c communicates with the sound pickup cavity 4513, and the other end of the connection groove 4512c communicates with the third opening 4512a. The third cover plate 454 is fastened on the rear side 451b of the support 451, and covers the connection groove 4512c. In this case, the sound pickup channel 4512 is formed with a curved part at either end of the connection groove 4512c. From the sound pickup cavity 4513 to the third opening 4512a, the sound pickup channel 4512 first extends from the front side 451a of the support 451 to the rear side 451b of the support 451, then extends on the rear side 451b of the support 451 for a distance, and then is wound from the rear side 451b of the support 451 to the peripheral side 451c of the support 451, to form a curved channel. In some other embodiments, the sound pickup channel 4512 may alternatively have another implementation structure. This is not strictly limited in this embodiment of this application.

The third cover plate 454 may be fixedly connected to the support 451 by using an adhesive layer 4584, and the adhesive layer 4584 may be an adhesive material such as a glue dispensing material or double-sided adhesive tape. In some other embodiments, the third cover plate 454 may be fixedly connected to the support 451 in an ultrasonic soldering manner, to ensure sealing reliability of the sound pickup channel 4512. The third cover plate 454 may be made of a plastic material, a metal material, or a composite plate structure.

In some embodiments, as shown in FIG. 25 and FIG. 26, the support 451 may be further provided with a rear discharge channel 4514, and the rear discharge channel 4514 is disposed separately from the bass tube channel 4511 and the sound pickup channel 4512. The rear discharge channel 4514 is formed with two openings on the support 451, to communicate with different space located in different orientations of the support 451. When the fifth assembly 45 is mounted in the housing 1, one end of the rear discharge channel 4514 communicates with the rear cavity 14b, and the other end communicates with the first through hole 1135 of the main housing member 113, so that air in the rear cavity 14b of the earphone 10 can be propagated to external space of the earphone 10 through the rear discharge channel 4514 and the first through hole 1135. For example, the rear discharge channel 4514 is formed with a fourth opening 4514a on the front side 451a of the support 451, and is formed with a fifth opening 4514b on the peripheral side 451c of the support 451, and the fifth opening 4514b communicates with the first through hole 1135. In this case, the rear discharge channel 4514 can communicate with the rear cavity 14b and the external space of the earphone 10.

The fifth opening 4514b and the second opening 4511b are disposed adjacent to each other, that is, openings of the bass tube channel 4511 and the rear discharge channel 4514 on the peripheral side 451c of the support 451 are disposed adjacent to each other, to reduce an opening area of the first through hole 1135 when both the fifth opening 4514b and the second opening 4511b communicate with the first through hole 1135, so as to avoid forming a hole with a large area on an appearance of the housing 1. This helps improve visual appearance integrity of the earphone 10. In some other embodiments, the fifth opening 4514b and the second opening 4511b may communicate with each other and combined into one opening. This is not strictly limited in this embodiment of this application.

A region that is of the support 451 and that is located around the fifth opening 4514b is hermetically connected to the inner wall of the housing 1. For example, the region that is of the support 451 and that is located around the fifth opening 4514b may be hermetically connected to the inner wall of the main housing member 113 by using an adhesive layer, to improve sealing performance of the sound pickup channel 4512. The adhesive layer may surround both the fifth opening 4514b and the second opening 4511b, so that the regions that are of the support 451 and that are located around the fifth opening 4514b and the second opening 4511b are hermetically connected to a region that is of the inner wall of the main housing member 113 and that is located around the first through hole 1135.

The seventh mesh fabric 457 is fastened on the front side 451a of the support 451 and covers the fourth opening 4514a. The seventh mesh fabric 457 may be fastened to the support 451 by using an adhesive layer 4585, or may be fastened to the support 451 in another manner.

For example, there is a specific distance between the fifth opening 4514b and the third opening 4512a. For example, a distance between the fifth opening 4514b and the third opening 4512a on the peripheral side 451c of the support 451 is greater than or equal to 10 mm, to meet an isolation requirement between the sound pickup channel 4512 and the rear discharge channel 4514, for example, to meet a requirement that isolation is greater than or equal to 30 dB, so as to improve sound pickup accuracy of the second microphone 33. The first through hole 1135 of the main housing member 113 and the fifth opening 4514b are correspondingly disposed, and the second through hole 1136 and the third opening 4512a are correspondingly disposed. A distance between the first through hole 1135 and the second through hole 1136 also needs to meet a specific requirement. For example, a distance on an outer surface of the main housing member 113 is greater than or equal to 10 mm.

In this embodiment, in this application, the bass tube channel 4511, the sound pickup channel 4512, and the rear discharge channel 4514 are integrated into the support 451. Integration of the fifth assembly 45 is high, and utilization of the internal space of the earphone 10 is high, to facilitate miniaturization of the earphone 10. A design solution of an integrated support is used for the fifth assembly 45. Therefore, assembly difficulty can be reduced, a production yield can be improved, cost advantages can be brought, and product competitiveness can be further improved. In addition, some or all of the cover plates in the fifth assembly 45 may be used as magnetic isolation members, so that the fifth assembly 45 can lower a risk that current noise occurs in the speaker 31, and improve sound quality of the earphone 10.

In some embodiments, the support 451 may be an integrally formed structural member. In this case, the support 451 has high structural strength, and overall structural stability of the fifth assembly 45 is good. In some other embodiments, the support 451 may alternatively be assembled by using a plurality of structures to form an integrated structure, so that the fifth assembly 45 meets a modular assembly requirement.

In some embodiments, the support 451 may be made of a plastic material, to implement a light weight. In some other embodiments, the support 451 may alternatively be made of a magnetic conductive material (for example, metal or the like), or at least a part of a region is covered with a magnetic isolation sheet, to implement magnetic isolation and lower a risk that current noise occurs in the speaker 31.

In some other embodiments, the rear discharge channel 4514 may alternatively be implemented by another structural member. This is not strictly limited in this application.

Mounting of the separation assembly 8 of the earphone 10:

In some embodiments, as shown in FIG. 4, the separation assembly 8 is located in the top space 111a of the main housing 11, and is fixedly connected to the main housing 11. The magnetic attraction member 81 is located on a bottom side of the support 451 of the fifth assembly 45, and a volume and a position of the magnetic attraction member 81 can meet a requirement for magnetic attraction force required for placing the earphone 10 in the case. In an assembly process of the earphone 10, the third assembly 43 and the fourth assembly 44 are first mounted in the main housing member 113, then the fifth assembly 45 in which the second microphone 33 is mounted is mounted in the main housing member 113, then the magnetic attraction member 81 is mounted, and finally, fastening and sealing between the separation assembly 8 and the main housing member 113 are implemented through glue dispensing.

The separation assembly 8 may include a magnetic isolation member, to lower a risk that current noise occurs in the speaker 31. As described above, the magnetic isolation member may be implemented by the support 451, the first cover plate 452, the second cover plate 453, and/or the third cover plate 454 of the fifth assembly 45. In addition, the magnetic attraction member 81 may be a soft magnet (for example, a metal block such as an iron block). In this case, the magnetic attraction member 81 may also be used as a magnetic isolation member.

For example, as shown in FIG. 6 and FIG. 24, at least two adhesive storage ribs are disposed on the inner side of the main housing member 113, for example, including a first adhesive storage rib 11310 and a second adhesive storage rib 11320. The first adhesive storage rib 11310 is disposed close to and half around the first through hole 1135. The second adhesive storage rib 11320 is disposed close to and half around the second through hole 1136. After the third assembly 43 is assembled to the main housing member 113, the first adhesive storage rib 11310 half surrounds the third assembly 43. After the fourth assembly 44 is assembled to the main housing member 113, the second adhesive storage rib 11320 half surrounds the fourth assembly 44.

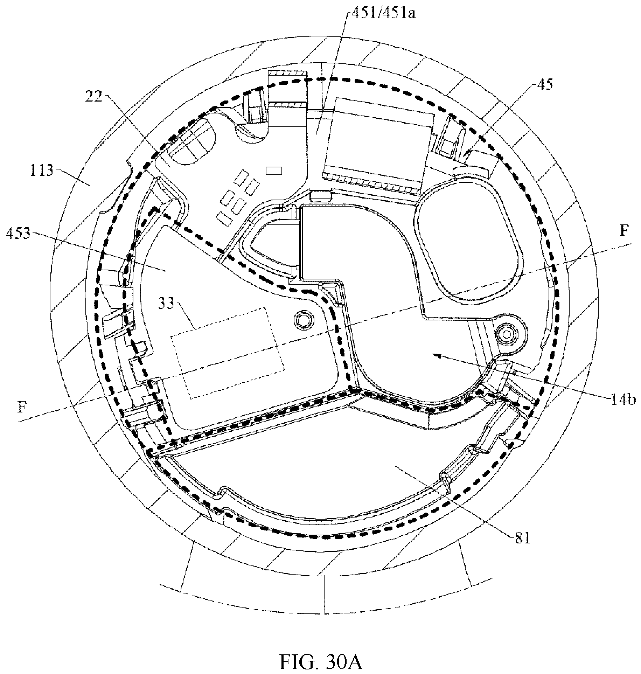

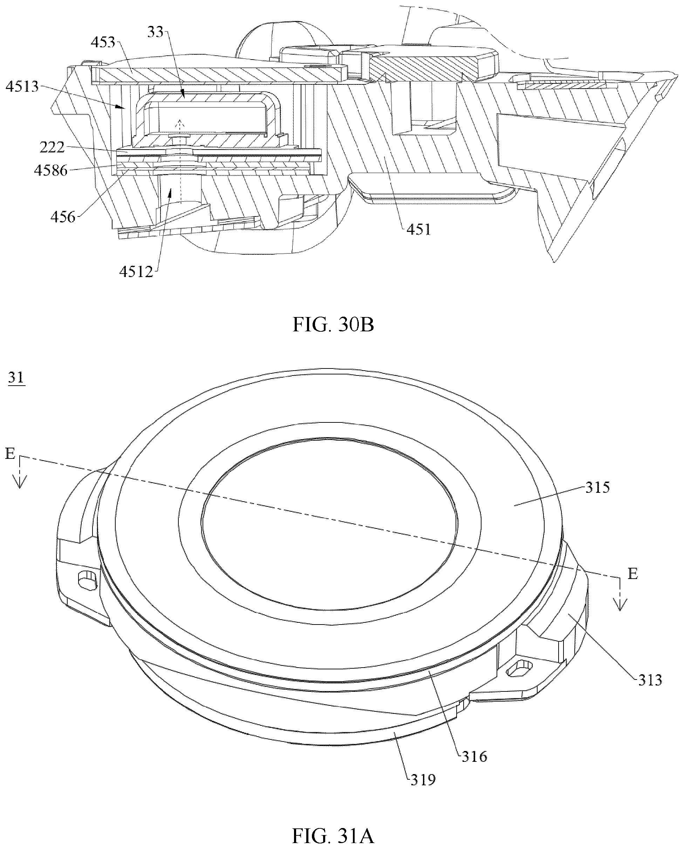

Refer to FIG. 26, FIG. 30A, and FIG. 30B. FIG. 30A is a diagram of a partial internal structure of the earphone 10 shown in FIG. 1A, and FIG. 30B is a diagram of a cross-sectional structure of the partial structure shown in FIG. 30A along F-F. A view in FIG. 30A is obtained by flipping a view in FIG. 1A.

In some embodiments, a part of the first flexible circuit board 22 extends into the sound pickup cavity 4513 from the front side 451a of the support 451, and the second microphone 33 is fastened and electrically connected to the first flexible circuit board 22. As shown in FIG. 16, the second microphone 33 is fastened to the first part 222 of the first flexible circuit board 22. In FIG. 30A, the first flexible circuit board 22 may be wound from the rear side 451b of the support 451 to the front side 451a of the support 451, the first part 222 of the first flexible circuit board 22 may be located in the sound pickup cavity 4513, and the second microphone 33 is located in the sound pickup cavity 4513, to collect a sound entering the sound pickup cavity 4513. As shown in FIG. 30B, the first part 222 of the first flexible circuit board 22 may be fastened on a side that is of the sixth mesh fabric 456 and that faces away from the sound pickup channel 4512 by using an adhesive layer 4586. The first flexible circuit board 22 may further have a partial structure fastened on the front side 451a of the support 451, so that a relative position between the first flexible circuit board 22 and the support 451 is stable and reliable.

For example, a sound pickup direction of the second microphone 33 may be set to face away from the speaker 31. As shown in FIG. 30B, the first part 222 of the first flexible circuit board 22 is provided with a through hole, and a sound pickup hole of the second microphone 33 communicates with the sound pickup channel 4512 through the through hole, so that a sound can enter the second microphone 33 from the sound pickup hole of the second microphone 33 through the sound pickup channel 4512 and the through hole of the first part 222, and the second microphone 33 implements sound pickup. As shown in FIG. 30A and FIG. 30B, the sound pickup direction of the second microphone 33 faces away from the second cover plate 453, that is, faces away from the rear cavity 14b of the earphone 10. With reference to FIG. 4, because the rear cavity 14b of the earphone 10 is located between the speaker 31 and the fifth assembly 45, the sound pickup direction of the second microphone 33 faces away from the speaker 31. In this case, isolation effect between the second microphone 33 and the speaker 31 is good, to help improve a sound pickup signal-to-noise ratio of the second microphone 33.

For example, in a process of assembling the fifth assembly 45 into the main housing member 113, glue may be first dispensed at the first adhesive storage rib 11310 and the second adhesive storage rib 11320 (as shown by a bold dashed line in FIG. 24), then the fifth assembly 45 is mounted in the main housing member 113, and then glue is continuously dispensed at positions surrounding the third assembly 43 and the fourth assembly 44, so that two colloids formed by the two times of glue dispensing respectively surround the third assembly 43 and the fourth assembly 44, and hermetically connect the support 451 of the fifth assembly 45 to the inner wall of the main housing member 113, to ensure that a channel provided by the fifth assembly 45 is reliably sealed. In this case, in the two colloids, one colloid can hermetically connect the regions that are of the support 451 and that are located around the second opening 4511b and the fifth opening 4514b to the inner wall of the main housing member 113, and the other colloid can hermetically connect the region that is of the support 451 and that is located around the third opening 4512a to the inner wall of the main housing member 113.

After the fifth assembly 45 is mounted in the main housing member 113, the magnetic attraction member 81 is mounted in the main housing member 113, the magnetic attraction member 81 is positioned with the main housing member 113 and the support 451, and finally, glue is dispensed at a fitting position between the support 451 and the main housing member 113, a fitting position between the support 451 and the magnetic attraction member 81, a fitting position between the magnetic attraction member 81 and the main housing member 113, and a fitting position between the second cover plate 453 and the main housing member 113 for sealing (as shown by a bold dashed line in FIG. 30A), to assemble the separation assembly 8 and the main housing member 113. In this case, a hermetical connection between the separation assembly 8 and the main housing 11 is reliable, and the separation assembly 8 can well separate the rear cavity 14b from the main board cavity 14c, so that the main board cavity 14c is reliably sealed.

A plurality of limiting structures or guide structures may be disposed on the inner wall of the main housing member 113, so that when being mounted in the main housing member 113, the fifth assembly 45 may be directly mounted to an accurate position under guidance of the limiting structure or the guide structure, to reduce assembly difficulty of the earphone 10 and improve assembly accuracy and a product yield of the earphone 10.

Speaker 31 of the earphone 10:

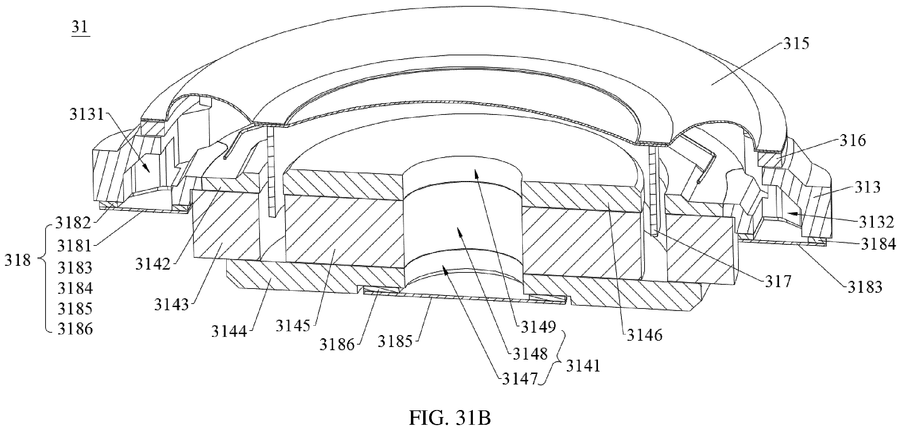

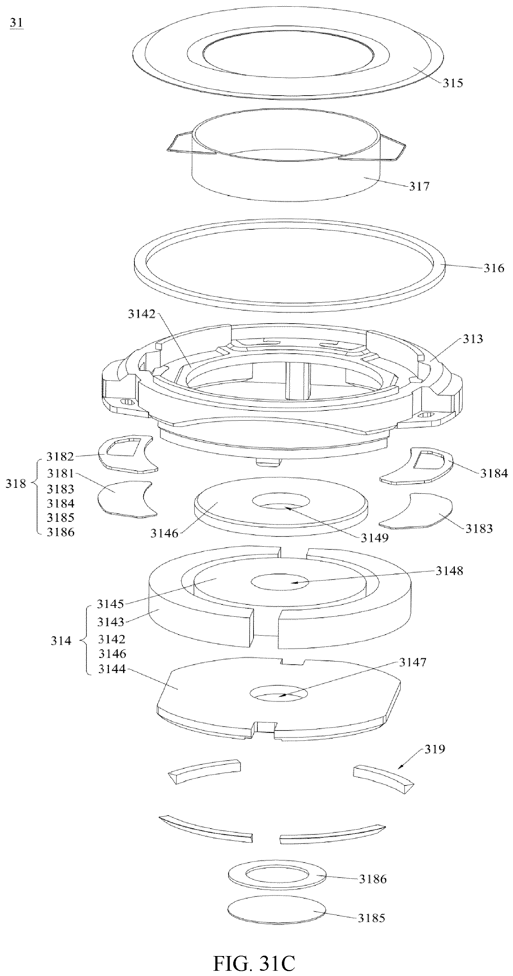

Refer to FIG. 31A to FIG. 31C. FIG. 31A is a diagram of a structure of the speaker 31 shown in FIG. 3, FIG. 31B is a diagram of a cross-sectional structure of the speaker 31 shown in FIG. 31A along E-E, and FIG. 31C is a diagram of an exploded structure of the speaker 31 shown in FIG. 31A.

In some embodiments, the speaker 31 includes a basin frame 313, a magnetic circuit assembly 314, a diaphragm 315, an adapter ring 316, and a voice coil 317.

The basin frame 313 may be approximately ring-shaped. The basin frame 313 may be provided with a first through hole 3131 and a second through hole 3132. The first through hole 3131 and the second through hole 3132 are disposed at an interval from each other. For example, the first through hole 3131 and the second through hole 3132 may be respectively formed on two sides of the basin frame 313.

The magnetic circuit assembly 314 is fixedly connected to the basin frame 313. The magnetic circuit assembly 314 covers inner side space of the basin frame 313, and the magnetic circuit assembly 314 may be partially located in the inner side space of the basin frame 313. A third through hole 3141 is disposed at a middle part of the magnetic circuit assembly 314, and the third through hole 3141 communicates with space on two sides of the magnetic circuit assembly 314. For example, the magnetic circuit assembly 314 may include a first magnetic conductive sheet 3142, a first magnet 3143, a second magnetic conductive sheet 3144, a second magnet 3145, and a third magnetic conductive sheet 3146. The first magnetic conductive sheet 3142 may be approximately ring-shaped, and the first magnetic conductive sheet 3142 is fastened to the basin frame 313, and is at least partially exposed to the inner side space of the basin frame 313. For example, the first magnetic conductive sheet 3142 may be built into the basin frame 313, and the first magnetic conductive sheet 3142 and the basin frame 313 may form an integrally formed structural member through in-mold injection molding or in another manner. The first magnet 3143 may be approximately ring-shaped, and the first magnet 3143 is fastened on one side of the first magnetic conductive sheet 3142. The second magnetic conductive sheet 3144 is fastened on a side that is of the first magnet 3143 and that faces away from the first magnetic conductive sheet 3142, and a first hole 3147 is disposed at a middle part of the second magnetic conductive sheet 3144. The second magnet 3145 is fastened on a side that is of the second magnetic conductive sheet 3144 and that faces the first magnet 3143. The second magnet 3145 is located on an inner side of the first magnet 3143, and forms a first gap with the first magnet 3143. The second magnet 3145 is further provided with a second hole 3148, and the second hole 3148 communicates with the first hole 3147. The third magnetic conductive sheet 3146 is fastened on a side that is of the second magnet 3145 and that faces away from the second magnetic conductive sheet 3144. The third magnetic conductive sheet 3146 is located on an inner side of the first magnetic conductive sheet 3142, and forms a second gap with the first magnetic conductive sheet 3142, and the second gap communicates with the first gap. The third magnetic conductive sheet 3146 is provided with a third hole 3149. The third hole 3149 communicates with the second hole 3148, and the third hole 3149, the second hole 3148, and the first hole 3147 jointly form the third through hole 3141. The magnetic circuit assembly 314 may be fixedly connected to the basin frame 313 by using an adhesive member 319. There may be one or more adhesive members 319.

The diaphragm 315 is fixedly connected to the basin frame 313. The diaphragm 315 covers the inner side space of the basin frame 313. For example, a peripheral edge of the diaphragm 315 may be fixedly connected to the basin frame 313 by using the adapter ring 316. The voice coil 317 is located in the inner side space of the basin frame 313, one end of the voice coil 317 is fixedly connected to the diaphragm 315, and the other end of the voice coil 317 is located in the second gap and the first gap.

For example, the speaker 31 may further include a mesh fabric assembly 318, and the mesh fabric assembly 318 includes a first mesh fabric 3181, a first adhesive layer 3182, a second mesh fabric 3183, a second adhesive layer 3184, a third mesh fabric 3185, and a third adhesive layer 3186. The first mesh fabric 3181 is fastened on a side that is of the basin frame 313 and that faces away from the diaphragm 315 by using the first adhesive layer 3182, and covers the first through hole 3131. The second mesh fabric 3183 is fastened on the side that is of the basin frame 313 and that faces away from the diaphragm 315 by using the second adhesive layer 3184, and covers the second through hole 3132. The third mesh fabric 3185 is fastened on a side that is of the second magnetic conductive sheet 3144 and that faces away from the diaphragm 315 by using the third adhesive layer 3186, and covers the third through hole 3141. In some other embodiments, the first mesh fabric 3181, the second mesh fabric 3183, and/or the third mesh fabric 3185 may be fastened in another manner. This is not strictly limited in this embodiment of this application.

In this embodiment, first space is formed on a side that is of the diaphragm 315 and that faces away from the magnetic circuit assembly 314, second space is formed between the diaphragm 315 and the magnetic circuit assembly 314, and third space is formed on a side that is of the magnetic circuit assembly 314 and that faces away from the diaphragm 315. When the speaker 31 is mounted in the earphone 10, the first space corresponds to the front cavity 14a, and the third space corresponds to the rear cavity 14b. All of the first through hole 3131, the second through hole 3132, and the third through hole 3141 communicate with the second space and the third space, and the first through hole 3131, the second through hole 3132, and the third through hole 3141 form a rear discharge hole of the speaker. In this embodiment of this application, the third through hole 3141 is additionally disposed on the speaker 31, so that a hole area of the rear discharge hole of the speaker 31 is greatly increased. This helps reduce overall acoustic impedance of the earphone 10, so that resonance effect between the speaker 10 and the bass tube channel 4511 is better, and low-frequency performance of the earphone 10 is better.

The overall acoustic impedance of the earphone 10 includes mechanical acoustic impedance of the diaphragm 315 of the speaker 31, acoustic impedance of the rear discharge hole of the speaker 31, acoustic impedance of the bass tube channel 4511, and acoustic impedance of a sound hole. The mechanical acoustic impedance of the diaphragm 315 is resistance received when the diaphragm 315 vibrates. The acoustic impedance of the rear discharge hole of the speaker 31 is acoustic impedance of a mesh fabric covering the rear discharge hole of the speaker 31, and is acoustic impedance of the first mesh fabric 3181, the second mesh fabric 3183, and the third mesh fabric 3185 in this embodiment. The acoustic impedance of the bass tube channel 4511 is acoustic impedance of a mesh fabric at an opening of the bass tube channel 4511, and in this embodiment, is acoustic impedance of a mesh fabric (that is, the fourth mesh fabric 431, referring to FIG. 24) at a position at which the bass tube channel 4511 communicates with the outside. The acoustic impedance of the sound hole is acoustic impedance of a mesh fabric at a position at which the front cavity 14a of the earphone 10 communicates with the outside, that is, acoustic impedance of the second mesh fabric 422 (referring to FIG. 23) covering the second communication hole 123.

When the speaker 31 is not provided with the third through hole 3141, and only the first through hole 3131 and the second through hole 3132 are disposed as rear discharge holes, because the first through hole 3131 and the second through hole 3132 are formed on the basin frame 313, a structural dimension of the basin frame 313 is limited, hole areas of the first through hole 3131 and the second through hole 3132 are limited, and it is difficult to increase the hole areas. Therefore, the overall acoustic impedance of the earphone 10 is high. However, by disposing the third through hole 3141 in the magnetic circuit assembly 314, a hole size of the third through hole 3141 may be controlled, to effectively increase the hole area of the rear discharge hole of the speaker 31 while considering magnetic field strength of the magnetic circuit assembly 314, so as to reduce the overall acoustic impedance of the earphone 10.

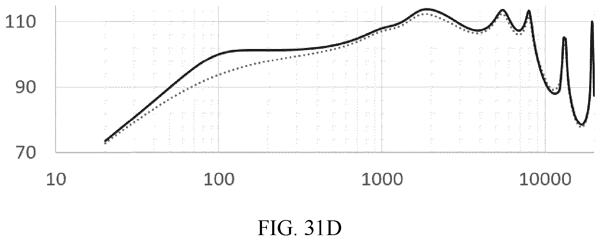

Refer to FIG. 31D. FIG. 31D is a diagram of an overall frequency response curve of the earphone 10 shown in FIG. 1A in some possible implementations. In FIG. 31D, a horizontal coordinate is a frequency in a unit of hertz (Hz), and a vertical coordinate is a sound pressure level in a unit of decibel (dB). In FIG. 31D, a solid line corresponds to a frequency response curve when the speaker 31 of the earphone 10 is provided with the first through hole 3131, the second through hole 3132, and the third through hole 3141, and a dotted line corresponds to a frequency response curve when the speaker 31 of the earphone 10 is provided with the first through hole 3131 and the second through hole 3132, and is not provided with the third through hole 3141. In some possible implementations, when the speaker 31 is not provided with the third through hole 3141, the overall acoustic impedance is $2.5*10^7$ pa*s/mm$^3$. When the speaker 31 is provided with the third through hole 3141, the third through hole 3141 is a round hole, and a hole diameter is 2 mm, the overall acoustic impedance is $9*10^6$ pa*s/mm$^3$. There is a significant reduction in overall acoustic impedance of the speaker 31, and the overall frequency response curve shows a resonance peak characteristic on a frequency band from 20 Hz to 200 Hz, so that low-frequency resonance is enhanced around 100 Hz, and the low-frequency performance of the earphone 10 is better.

For example, the overall acoustic impedance of the earphone 10 is less than or equal to $10^7$ pa*s/mm$^3$, to ensure good resonance effect between the speaker 10 and the bass tube channel 4511.

For example, a hole area of the third through hole 3141 is less than or equal to 3.14 mm$^2$, to ensure that

the magnetic field strength of the magnetic circuit assembly 314 of the speaker 31 is sufficient when the overall acoustic impedance is reduced. The third through hole 3141 may be a round hole, a square hole, or a hole in another shape. When the third through hole 3141 is a round hole, a diameter of the third through hole 3141 is less than or equal to 2 mm.

It may be understood that the speaker 31 may alternatively be of another structure different from that described above. For example, the basin frame 313 may be of a different structure, the magnetic circuit assembly 314 may be of a different structure, there may be a different connection structure between the magnetic circuit assembly 314 and the basin frame 313, and there may be a different connection structure between the basin frame 313 and the diaphragm 315. A specific structure of the speaker 31 is not strictly limited in this embodiment of this application.

In some other embodiments, only one through hole may be disposed on the basin frame 313 of the speaker 31, for example, the first through hole 3131 or the second through hole 3132 is not disposed, or three or more through holes may be disposed on the basin frame 313. This is not strictly limited in this embodiment of this application. In some other embodiments, when the area of the rear discharge hole of the speaker 31 is large enough because the hole areas of the first through hole 3131 and the second through hole 3132 are large enough, the speaker 31 may not be provided with the third through hole 3141.

Antenna 6 of the earphone 10:

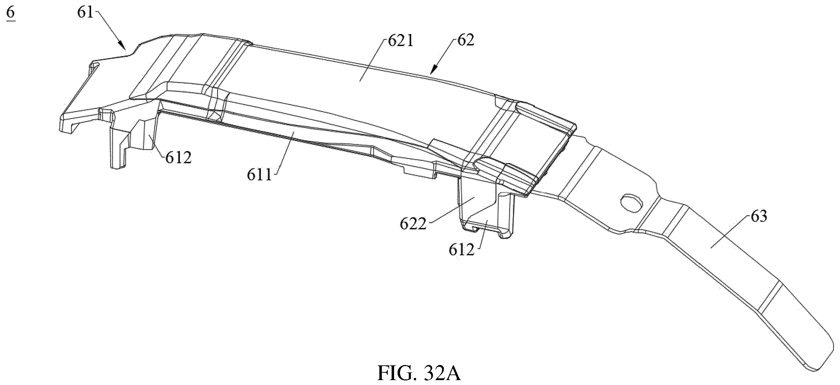

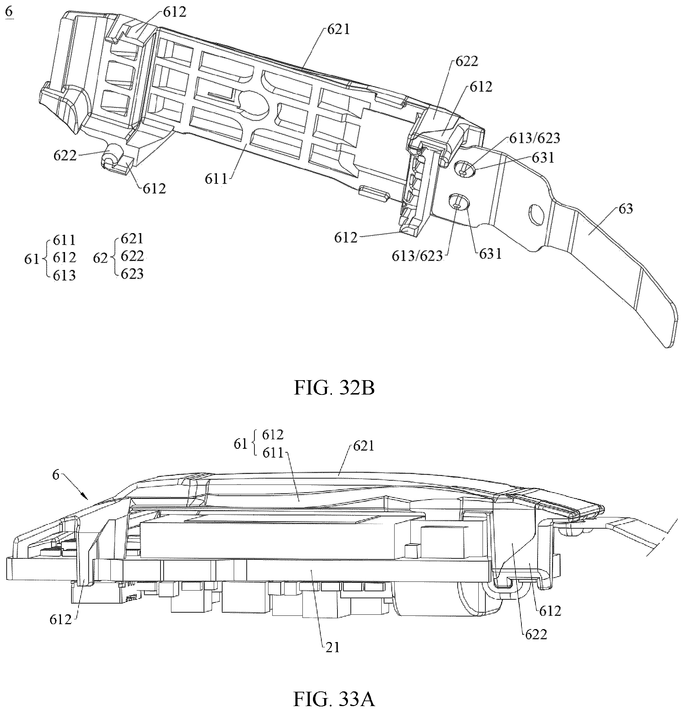

Refer to FIG. 32A and FIG. 32B. FIG. 32A is a diagram of a structure of the antenna 6 of the earphone 10 shown in FIG. 3, and FIG. 32B is a diagram of a structure of the antenna 6 shown in FIG. 32A at another angle.

In some embodiments, the antenna 6 includes an antenna support 61, a first metal piece 62, and a second metal piece 63.

The antenna support 61 includes a plate body 611, and a support foot 612 and a protrusion 613 that are fastened to the plate body 611. The support foot 612 and the protrusion 613 are located on a same side of the plate body 611 and are disposed at an interval from each other. There may be a plurality of support feet 612, the plurality of support feet 612 are disposed at an interval from each other, and the plurality of support feet 612 may be fastened around the plate body 611. There may be one or more protrusions 613, and the protrusions 613 may be fastened to one end of the plate body 611. The antenna support 61 may be an integrally formed structural member.

The first metal piece 62 is a patterned metal layer, and the first metal piece 62 may be formed on the antenna support 61 by using an LDS (Laser Direct Structuring, laser direct structuring) process, to be fastened to the antenna support 61. In this case, a dimension and a shape of the first metal piece 62 are less constrained, and a pattern of the first metal piece 62 is easy to adjust. The first metal piece 62 includes a main body part 621, a connection part 622, and an extension part 623. The main body part 621 is fastened on a top side of the plate body 611 of the antenna support 61. The connection part 622 is connected to the main body part 621, and extends to at least one support foot 612 of the plurality of support feet 612 of the antenna support 61. For example, there may be a plurality of connection parts 622, and the plurality of connection parts 622 are connected to different positions of the main body part 621 and are fastened to different support feet 612 of the antenna support 61. Alternatively, there is one connection part 622, and the connection part 622 is fastened to one support foot 612 of the plurality of support feet 612. A quantity of connection parts 622 may be the same as or different from a quantity of support feet 612 of the antenna support 61. This is not strictly limited in this embodiment of this application. The connection part 622 may partially or completely wrap the corresponding support foot 612 of the antenna support 61. The extension part 623 is connected to the main body part 621, and extends to the protrusion 613 of the antenna support 61. The extension part 623 may partially or completely wrap the protrusion 613 of the antenna support 61.

The second metal piece 63 is fastened and electrically connected to the first metal piece 62. For example, one end of the second metal piece 63 is fastened and electrically connected to one end of the first metal piece 62, and the other end of the second metal piece 63 extends in a direction far away from the first metal piece 62. For example, the second metal piece 63 may be provided with a through hole 631, the second metal piece 63 is positioned with the protrusion 613 of the antenna support 61 by using the through hole 631, and the second metal piece 63 may be fastened and electrically connected to the extension part 623 of the first metal piece 62 through soldering.

In this embodiment, the first metal piece 62 and the second metal piece 63 may jointly form a radiation part of the antenna 6, and the radiation part of the antenna 6 has a large dimension. This increases a radiation area of the antenna 6, and improves transmit/receive performance of the antenna 6, so that the earphone 10 has good wireless communication performance. For example, all of the antenna support 61, the first metal piece 62, and the second metal piece 63 may be approximately strip-shaped, and the entire antenna 6 is approximately strip-shaped, to better match a shape of the housing 1 of the earphone 10 in a case of a large radiation area, so as to reduce mounting difficulty.

In some examples, the antenna 6 may include an extended circuit board. The extended circuit board is connected to the antenna support 61 and the first metal piece 62, and the extended circuit board includes the second metal piece 63. The second metal piece 63 may be formed by a conductive layer of the extended circuit board. The extended circuit board may be a flexible circuit board. In this embodiment, the second metal piece 63 is formed by the extended circuit board, and the extended circuit board is small in thickness, can be bent and deformed, has a low requirement for mounting space, and can be easily arranged in narrow space, for example, internal space of the stem 10b, to achieve an objective of extending the radiation area of the antenna 6 in the narrow space.

In some other examples, the second metal piece 63 may alternatively be made of a metal sheet material, for example, a metal plate such as a steel sheet or a structural member such as a metal support 451. Similarly, the antenna 6 may also achieve, by using the small thickness and easy bending performance of the second metal piece 63, an objective of extending the radiation area of the antenna 6 in narrow space.

In some other embodiments, the antenna support 61 may not be provided with the protrusion 613, the extension part 623 of the first metal piece 62 is adaptively changed, and the second metal piece 63 may be fastened and electrically connected to the first metal piece 62 by using another structure. This is not strictly limited in this embodiment of this application.

In some other embodiments, the antenna 6 may not be provided with the second metal piece 63, the antenna 6 includes the antenna support 61 and the first metal piece 62, and the first metal piece 62 forms the radiation part of the antenna 6.

In some other embodiments, the antenna 6 may alternatively have another implementation structure. For example, the antenna 6 may include a circuit board, and a conductive layer on the circuit board forms the radiation part of the antenna 6. The circuit board may be a flexible circuit board, a rigid-flex board, or a rigid board. This is not strictly limited in this embodiment of this application.

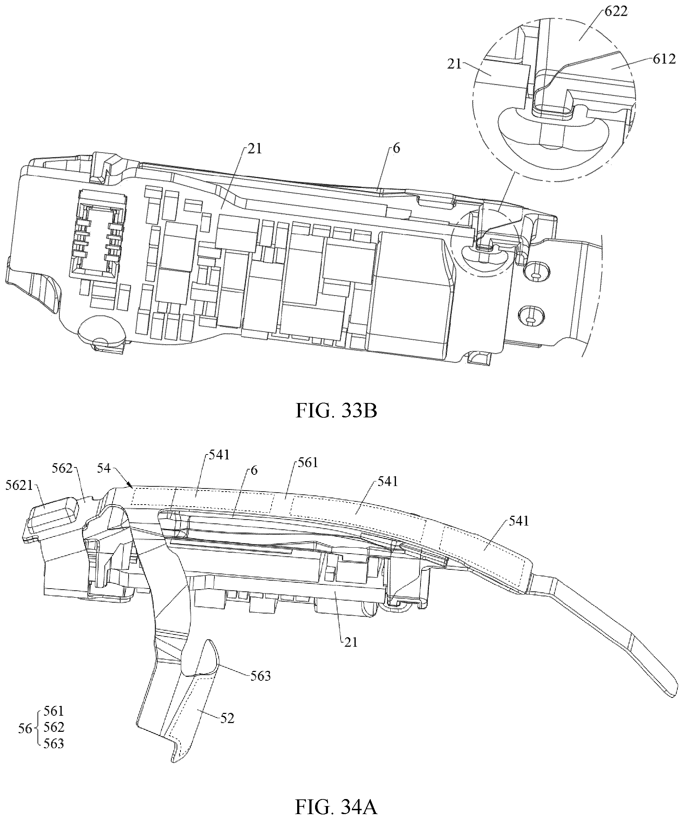

Refer to FIG. 33A and FIG. 33B. FIG. 33A is a diagram of an assembly structure of the antenna 6 and the main circuit board 21 shown in FIG. 3, and FIG. 33B is a diagram of a structure of the structure shown in FIG. 33A at another angle.

In some embodiments, the antenna 6 is fixedly connected to the main circuit board 21. The antenna 6 is located on one side of the main circuit board 21, the plate body 611 of the antenna support 61 is disposed at an interval from the main circuit board 21, and the plurality of support feet 612 of the antenna support 61 are fastened to the main circuit board 21, so that the antenna 6 is fastened relative to the main circuit board 21. Space is formed between the plate body 611 of the antenna support 61 and the main circuit board 21, and a component may be arranged on the main circuit board 21 by using the space.

The main body part 621 of the first metal piece 62 is located on a side that is of the plate body 611 of the antenna support 61 and that faces away from the main circuit board 21, and the connection part 622 of the first metal piece 62 is soldered to the main circuit board 21. In this case, the connection part 622 of the first metal piece 62 is fastened and electrically connected to the main circuit board 21 through tin soldering, so that the main circuit board 21 can feed the antenna 6. A radio frequency circuit is disposed on the main circuit board 21. The radio frequency circuit is electrically connected to the antenna 6, and the radio frequency circuit is further electrically connected to the processor.

In this embodiment, the first metal piece 62 forms the radiation part of the antenna 6 or a part of the radiation part, the first metal piece 62 and the main circuit board 21 share the support foot 612 of the antenna support 61, and the support foot 612 of the antenna support 61 is not only used to implement a structural connection function, but also used as a feed point of the antenna 6. Therefore, a conventional spring plate structure used as a feed point is omitted, and a large amount of plate arrangement space is saved, to facilitate arrangement of the antenna 6 in small space. In addition, a signal is transmitted between the antenna 6 and the main circuit board 21 without passing through an electrical connector. Therefore, signal noise of the antenna 6 is reduced, and wireless communication quality of the earphone 10 is improved.

There may be a plurality of support feet 612 of the antenna support 61 and connection parts 622 of the first metal piece 62, to implement a multi-point feeding solution of the antenna, so that a MIMO (Multiple-Input Multiple-Output, multiple-input multiple-output) solution of the antenna can be implemented in some embodiments.

In some other embodiments, an electrical connection relationship between the first metal piece 62 and the main circuit board 21 may alternatively be implemented by using another structure. That is, the main circuit board 21 may alternatively use another feeding structure to feed the antenna 6. For example, a conductive spring plate may be mounted on the main circuit board 21, and the first metal piece 62 and/or the second metal piece 63 are/is elastically pressed through the conductive spring plate; the first metal piece 62 and/or the second metal piece 63 are/is used to elastically press the main circuit board 21 through the conductive spring plate; or the second metal piece 63 is soldered to the main circuit board 21. A feeding structure of the antenna 6 is not strictly limited in this embodiment of this application.

Touch sensor 54 of the earphone 10:

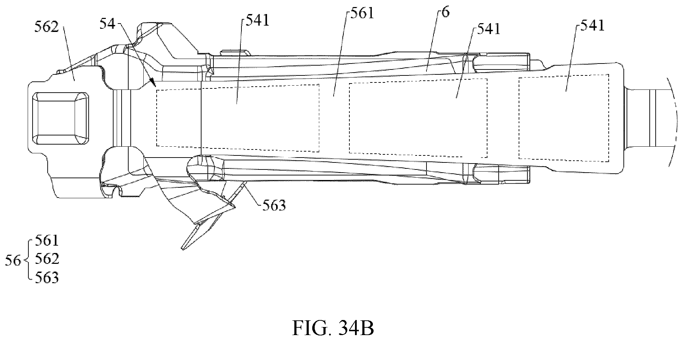

Refer to FIG. 34A and FIG. 34B. FIG. 34A is a diagram of an assembly structure of the main circuit board 21, the antenna 6, and the detection circuit board 56 shown in FIG. 3, and FIG. 34B is a diagram of a structure of the structure shown in FIG. 34A at another angle.

In some embodiments, the detection circuit board 56 includes a first circuit board 561, a second circuit board 562, and a third circuit board 563, and both the first circuit board 561 and the third circuit board 563 are electrically connected to the second circuit board 562. The first circuit board 561, the second circuit board 562, and the third circuit board 563 may be integrally formed structural members, and each is a part of the detection circuit board 56. The detection circuit board 56 may be a flexible circuit board, so that the first circuit board 561, the second circuit board 562, and the third circuit board 563 may be deformed, for example, bent, to meet assembly and connection requirements. The detection circuit board 56 and the antenna 6 are structural members independent of each other.

There may be the touch sensor 54 on the first circuit board 561, and the touch sensor 54 may be electrically connected to another structure by using the second circuit board 562. The wearing detection sensor 52 may be formed on the third circuit board 563, and the wearing detection sensor 52 may be electrically connected to another structure by using the second circuit board 562.

For example, the first circuit board 561 and the antenna 6 are structural members independent of each other. The first circuit board 561 may be disposed on a side that is of the antenna 6 and that faces away from the main circuit board 21, and is disposed in a stacked manner with the antenna 6, and there is a specific overlapping region between the first circuit board 561 and the antenna 6. For example, the first circuit board 561 is disposed in a stacked manner with the first metal piece 62 and/or the second metal piece 63 (referring to FIG. 32A) of the antenna 6, and there is a specific overlapping region. In this case, the antenna 6 is located between the first circuit board 561 and the main circuit board 21. One end of the third circuit board 563 may be connected to the first circuit board 561 or the second circuit board 562, and the other end of the third circuit board 563 is bent to a side that is of the main circuit board 21 and that faces away from the first circuit board 561. In this case, the third circuit board 563 is located on a side that is of the antenna 6 and that faces away from the first circuit board 561.

In some other embodiments, the third circuit board 563 and the first circuit board 561 may alternatively be circuit boards independent of each other, that is, different circuit boards, and the wearing detection sensor 52 on the third circuit board 563 may alternatively be electrically connected to the main circuit board 21 in another manner. This is not strictly limited in this embodiment of this application.

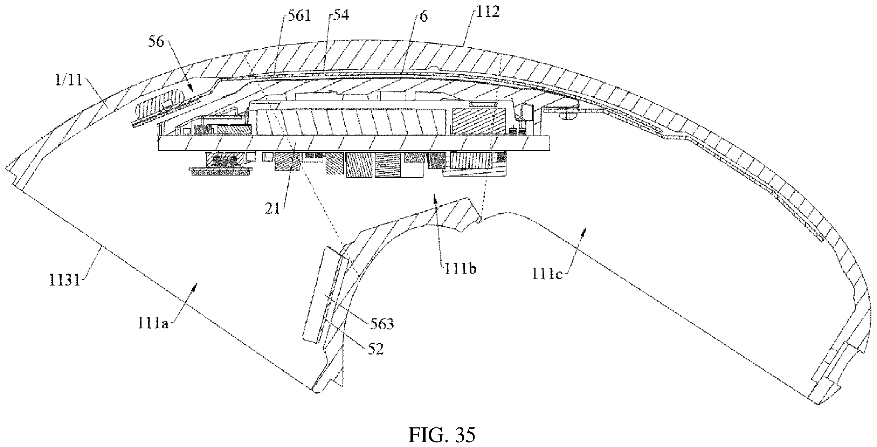

Refer to FIG. 35. FIG. 35 is a diagram of a partial structure of the earphone 10 shown in FIG. 4.

In some embodiments, all of the main circuit board 21, the antenna 6, and the detection circuit board 56 are located in the housing 1. The first circuit board 561 of the detection circuit board 56 is located between the antenna 6 and the housing 1. There is the touch sensor 54 on a side that is of the first circuit board 561 and that faces the housing 1, and the touch sensor 54 is configured to detect a touch action performed on the housing 1.

The first circuit board 561 may be fastened to the inner wall of the main housing 11 of the housing 1, and the first circuit board 561 is disposed to face the dorsal line 112 of the main housing 11. That is, when the earphone is being worn, the first circuit board 561 faces away from the user ear. In this embodiment, the touch sensor 54 is a capacitive sensor (cap sensor). The first circuit board 561 is disposed close to the inner wall of the main housing 11 of the housing 1, and is at a position close to the dorsal line 112 of the main housing 11, and therefore when the earphone is being worn, faces away from the user ear and is exposed relative to the user ear. When the user approaches or touches a back of the main housing 11, the touch sensor 54 may detect a touch action of the user, to implement man-machine interaction.

The first circuit board 561 may extend from the top space 111a of the main housing 11 to the bottom space 111c of the main housing 11. The first circuit board 561 has a large area, so that the touch sensor has a large arrangement area, and more diversified touch actions can be detected.

For example, the third circuit board 563 may be located in the top space 111a of the main housing 11, the third circuit board 563 may be fastened to the main housing 11, and the wearing detection sensor 52 is formed on a side that is of the third circuit board 563 and that faces the main housing 11. In this embodiment, the wearing detection sensor 52 is a capacitive sensor (cap sensor). When the user wears the earphone 10, the incisura intertragica of the ear corresponds to a position of the wearing detection sensor 52, and the wearing detection sensor 52 may detect whether skin of the user is in contact with the earphone 10, to cooperate in detecting whether the earphone 10 is being worn. Detection accuracy of the wearing detection sensor 52 is high.

The earphone 10 cooperates, through detection by the proximity sensor 51 and the wearing detection sensor 52, in determining whether the earphone 10 is being worn. For example, when both the proximity sensor 51 and the wearing detection sensor 52 of the earphone 10 detect that the earphone 10 approaches or is in contact with the user, the earphone 10 determines that the earphone 10 is being worn; or if one of the proximity sensor 51 and the wearing detection sensor 52 detects that the user does not approach or is not in contact with the user, the earphone 10 determines that the earphone 10 is not being worn. Wearing detection of the earphone 10 may be a prerequisite for the touch sensor 54 to detect a touch operation of the user. The touch sensor 54 senses the touch operation of the user only when the earphone 10 determines that the earphone 10 is being worn.

With reference to FIG. 34A to FIG. 35, a side that is of the touch sensor 54 and that is used to detect a touch operation of the user is a touch side, and the other side of the touch sensor 54 is a non-touch side. In this embodiment, a side that is of the touch sensor 54 and that faces the main housing 11 is the touch side, and a side that is of the touch sensor 54 and that faces away from the main housing 11 is the non-touch side. The antenna 6 is located on the non-touch side of the touch sensor 54, and the antenna 6 is of a conductor structure. Therefore, the antenna 6 may be used as a reference ground of the touch sensor 54, to shield a cluttered signal (for example, a signal generated by the component on the main circuit board 21) from the non-touch side of the touch sensor 54, so as to reduce or eliminate signal interference caused by the cluttered signal to the touch sensor 54, and improve accuracy of touch detection of the touch sensor 54. In addition, the antenna 6 radiates a high-frequency current, and the touch sensor 54 senses a low-frequency current. Therefore, the antenna 6 exerts no impact on touch detection of the touch sensor 54.

For example, a projection of the antenna 6 on the first circuit board 561 covers the touch sensor 54, to better provide a reference ground for the touch sensor 54, and improve detection accuracy of the touch sensor 54. It may be understood that a case in which the projection of the antenna 6 on the first circuit board 561 covers the touch sensor 54 includes a case of complete coverage and a case of basic coverage. When the projection of the antenna 6 covers more than 80% of the touch sensor 54, it is considered that there is the case of basic coverage. Specifically, coverage of the touch sensor 54 by the antenna 6 is mainly coverage of the touch sensor 54 by the radiation part of the antenna 6. At a position at which the touch sensor 54 may be interfered with by concentrated interference sources, the radiation part of the antenna 6 covers the touch sensor 54 as completely as possible.

In this embodiment, the antenna 6 is configured to transmit/receive a radio frequency signal, and the antenna 6 is further configured to provide a reference ground for the touch sensor 54. In this case, based on a relative position relationship between the main housing 11, the touch sensor 54, and the antenna 6, the antenna 6 in this embodiment of this application is compatible with two functions by using a same structure, and is not only used to implement wireless communication of the earphone 10, but also used as a reference ground of the touch sensor 54, to shield a cluttered signal and improve accuracy of touch detection.

In this embodiment, the touch sensor 54 and the antenna 6 of the earphone 10 coexist in a same space region, and occupied space is minimized, to facilitate miniaturization of the earphone 10. Furthermore, a radiation region of the antenna 6 and a touch control region of the touch sensor 54 may be implemented by using a same region of the main housing 11. When the main housing 11 has a fixed volume, both the radiation region of the antenna 6 and the touch control region of the touch sensor 54 may have a large area, so that the earphone 10 can obtain better transmit/receive performance of the antenna 6, and more diversified touch operations can be detected.

For example, the touch sensor 54 includes at least three touch blocks 541, and the at least three touch blocks 541 are arranged into a strip-shaped touch region and are disposed at an interval from each other. An extension direction of the strip-shaped touch region corresponds to an extension direction of the antenna 6. In this case, the touch sensor 54 is of a slider sensing structure. When capacitance of the at least three touch blocks 541 sequentially changes, it may be determined that the user performs a sliding action. The touch sensor 54 may further detect actions, for example, tap, double tap, touch and hold, and the like, of the user.

The at least three touch blocks 541 are disposed, to avoid incorrectly determining that a sliding action is generated when the user simultaneously touches two touch blocks 541. For example, a spacing between two adjacent touch blocks 541 may range from 0.5 mm to 2 mm. On the contrary, when the spacing between two adjacent touch blocks 541 is excessively small, an accidental touch is likely to occur. If the spacing between two adjacent touch blocks 541 is excessively large, the user possibly cannot touch the touch block 541, resulting in low touch efficiency.

When the touch sensor 54 includes a plurality of touch blocks 541, and the projection of the antenna 6 on the first circuit board 561 basically covers the touch sensor 54, more than 80% of an area of each touch block 541 should be covered.

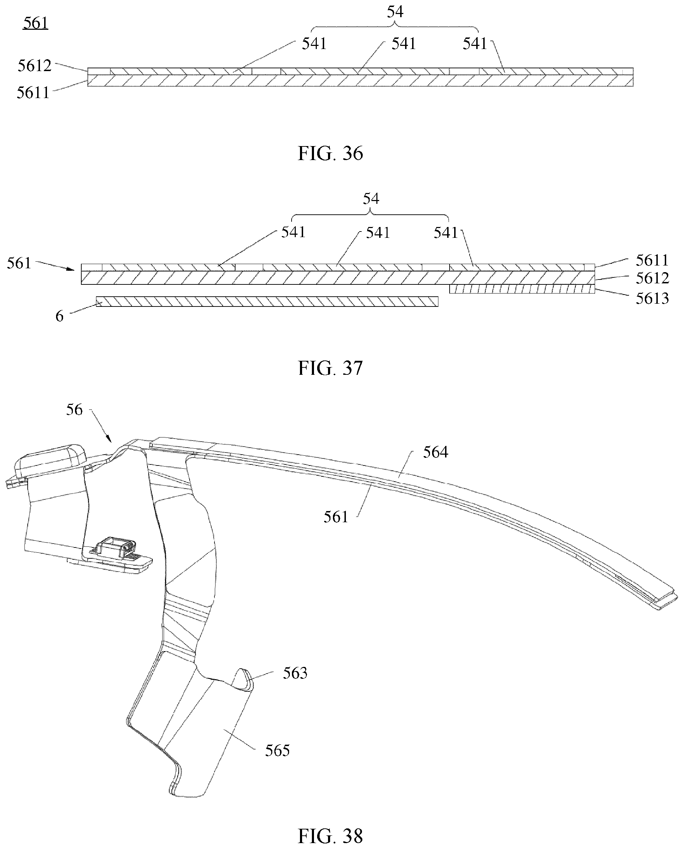

Refer to FIG. 36. FIG. 36 is a diagram of a partial structure of the first circuit board 561 shown in FIG. 34A.

In some embodiments, the first circuit board 561 includes an insulation layer 5611 and a conductive layer 5612 that are disposed in a stacked manner. The conductive layer 5612 is located on a side that is of the insulation layer 5611 and that faces the housing 1 (referring to FIG. 35), that is, on a side that faces away from the antenna 6. The conductive layer 5612 includes the touch sensor 54, and the conductive layer 5612 may include the at least three touch blocks 541. The insulation layer 5611 may be a polyimide (Polyimide, PI) layer, and the conductive layer 5612 may be a copper foil layer.

For example, the first circuit board 561 may be of a single-layer board structure, that is, there is one conductive layer on the first circuit board 561, so that there is a small thickness when the touch sensor 54 is formed. In some other embodiments, positions of the insulation layer 5611 and the conductive layer 5612 on the first circuit board 561 may be interchanged. In some other embodiments, the first circuit board 561 may include two insulation layers that are respectively located on two sides of the conductive layer 5612.

For example, as shown in FIG. 34A, the main circuit board 21 is located on a side that is of the antenna 6 and that faces away from the first circuit board 561, and the processor (which may be integrated into the main control chip 211) on the main circuit board 21 is electrically connected to the plurality of touch blocks 541 of the touch sensor 54. One end of the second circuit board 562 is connected to the first circuit board 561, and the other end is connected to the main circuit board 21. The plurality of touch blocks 541 may be electrically connected to the main circuit board 21 through the second circuit board 562. The processor may determine the touch operation of the user based on changes of capacitance values corresponding to the plurality of touch blocks 541. In some other embodiments, a detection circuit may be disposed on the main circuit board 21. The detection circuit is connected in series between the plurality of touch blocks 541 and the processor, and the detection circuit is configured to perform preliminary processing on electrical signals of the plurality of touch blocks 541, to reduce an operation amount of the processor.

The earphone 10 further includes a high-frequency blocking circuit 5621, and the high-frequency blocking circuit 5621 is connected in series between the plurality of touch blocks 541 and the processor. For example, the high-frequency blocking circuit 5621 may be fastened and electrically connected to the second circuit board 562. An inductive choke (choke) circuit is usually used for the high-frequency blocking circuit 5621. Each touch block 541 passes through the high-frequency blocking circuit 5621 and then is connected to the main circuit board 21. A low-frequency signal formed by the touch sensor 54 in a touch detection process may be transmitted to the processor through the high-frequency blocking circuit 5621. The antenna 6 of the earphone 10 usually works on a high-frequency Bluetooth frequency band. Therefore, the high-frequency blocking circuit 5621 can block a signal of the antenna 6 from forming a path on the plurality of touch blocks 541, to eliminate coupling impact of the plurality of touch blocks 541 on the antenna 6, so as to ensure that transmit/receive performance of the antenna 6 is not affected or is slightly affected.

Refer to FIG. 37. FIG. 37 is a diagram of structures of the first circuit board 561 and the antenna 6 shown in FIG. 34A in some other embodiments.

In some embodiments, when the antenna 6 does not include the second metal piece 63, or when an area of the radiation part of the antenna 6 is not large enough, the projection of the antenna 6 on the first circuit board 561 possibly cannot cover some touch blocks 541 of the touch sensor 54. In this case, a second conductive layer 5613 that corresponds to the some touch blocks 541 and that is used as a reference ground may be disposed on the first circuit board 561. In this case, the second conductive layer 5613 and the antenna 6 are approximately arranged in a staggered manner.

For example, the first circuit board 561 includes a conductive layer 5612, an insulation layer 5611, and the second conductive layer 5613 that are disposed in a stacked manner. The conductive layer 5612 is located on a side that is of the insulation layer 5611 and that faces the housing 1, the conductive layer 5612 includes the touch sensor 54, and the second conductive layer 5613 is located on a side that is of the insulation layer 5611 and that faces away from the housing 1. A projection of the antenna 6 on the first circuit board 561 covers one part of the touch sensor 54, and the second conductive layer 5613 covers the other part of the touch sensor 54. In this case, the second conductive layer 5613 can provide a reference ground for the touch sensor 54. In this embodiment, there is one second conductive layer 5613, and an area of the second conductive layer 5613 is significantly less than an area of the insulation layer 5611. An overall thickness of the first circuit board 561 is still very small, and mounting difficulty is low.

Refer to FIG. 35 and FIG. 38. FIG. 38 is a diagram of structures of the detection circuit board 56 and a related adhesive layer shown in FIG. 35.

In some embodiments, the first circuit board 561 of the detection circuit board 56 may be fixedly connected to the inner wall of the main housing 11 by using a hot melt adhesive membrane 564, the third circuit board 563 may be fixedly connected to the inner wall of the main housing 11 by using double-sided adhesive tape 565, and another part of the detection circuit board 56 may also be fixedly connected to the inner wall of the main housing 11 by using the double-sided adhesive tape. A region that is of the main housing 11 and that is used for the third circuit board 563 is located at a position close to the first opening 1131, an opening area of the first opening 1131 is large, and it is easy to implement adhesion, so that the third circuit board 563 can be easily and tightly bonded to the main housing 11 at a time by using the double-sided adhesive tape 565. The first circuit board 561 has a long length, and needs to extend from the top space 111a of the main housing 11 to the bottom space 111c of the main housing 11 during assembly. In a fastening manner of using the hot melt adhesive membrane 564, the first circuit board 561 may first extend into the main housing 11 in an assembly process. In this process, there is no incorrect adhesion. After the first circuit board 561 extends in place, the hot melt adhesive membrane 564 is heated (for example, heated to 80 degrees or 90 degrees), so that the first circuit board 561 is adhered to the main housing 11, and a gap between the first circuit board 561 and the main housing 11 can be better absorbed by using a semi-melted state of the hot melt adhesive membrane 564, to obtain a better bonding state between the first circuit board 561 and the main housing 11. In an assembly process of the earphone 10, the detection circuit board 56 may be first mounted in the main housing 11, then the main circuit board 21 is mounted, and then the detection circuit board 56 is snap-fitted with the main circuit board 21 to implement an electrical connection.

Main housing member 113, first contact 71, second contact 72, sixth assembly 46 in the audio auxiliary assembly 4, and third microphone 34 of the earphone 10:

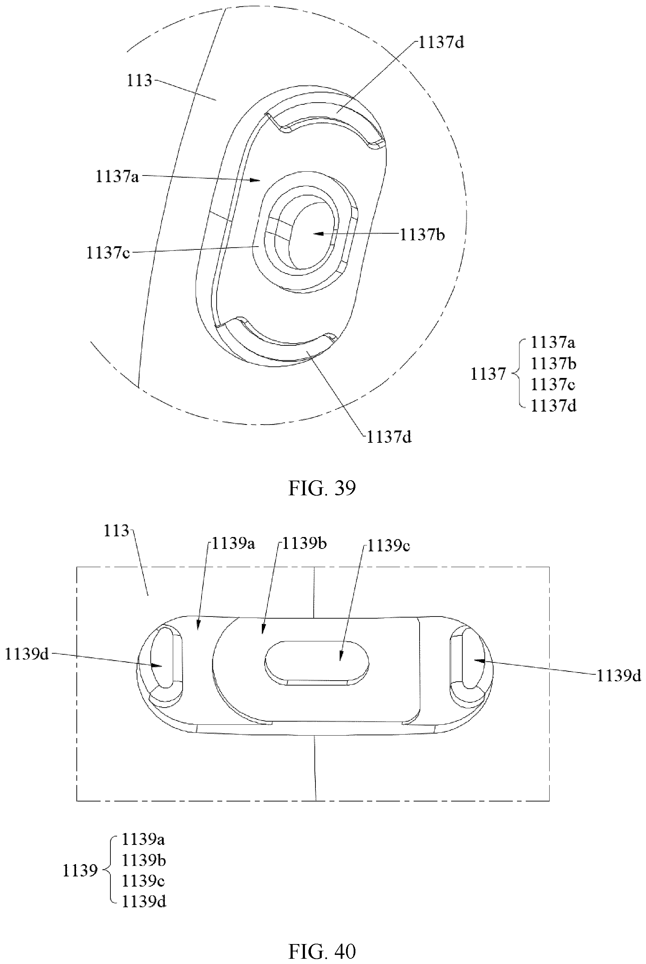

Refer to FIG. 6, FIG. 39, and FIG. 40. FIG. 39 is a diagram of a partial structure of the main housing member 113 shown in FIG. 6, and FIG. 40 is a diagram of the other partial structure of the main housing member 113 shown in FIG. 6.

In some embodiments, the main housing member 113 of the main housing 11 further has a first mounting groove 1137, a second mounting groove 1138, and a third mounting groove 1139. The third mounting groove 1139 is located at the bottom part 113c of the main housing member 113, and may be located at a middle position or close to a middle position. The first mounting groove 1137 and the second mounting groove 1138 are located at the bottom part 113c of the main housing member 113, and are respectively located on two sides of the third mounting groove 1139. The first mounting groove 1137 and the second mounting groove 1138 may be symmetrically disposed relative to the central surface 10c of the earphone 10.

As shown in FIG. 39, for example, the first mounting groove 1137 may include a recessed portion 1137a and a communication portion 1137b. An opening of the recessed portion 1137a is located on the outer surface of the main housing member 113. The communication portion 1137b communicates with the recessed portion 1137a and inner side space of the main housing member 113. A shape of the recessed portion 1137a may be approximately a round waist shape (which may also be referred to as a runway shape). A first protrusion 1137c and a second protrusion 1137d may be disposed on a bottom wall of the recessed portion 1137a. The first protrusion 1137c is disposed around the communication portion 1137b. The second protrusion 1137d and the first protrusion 1137c are disposed at an interval. There may be two second protrusions 1137d, and the two second protrusions 1137d are respectively located on two sides of the first protrusion 1137c. A shape of the second mounting groove 1138 may be the same as a shape of the first mounting groove 1137. Details are not described herein.

As shown in FIG. 40, the third mounting groove 1139 may be provided with a first recessed portion 1139a, a second recessed portion 1139b, and a communication portion 1139c that sequentially communicate with each other. A shape of the first recessed portion 1139a may be approximately a round waist shape (which may also be referred to as a runway shape). The third mounting groove 1139 may be further provided with two third recessed portions 1139d, and both the two third recessed portions 1139d communicate with the first recessed portion 1139a, and are respectively located on two sides of the first recessed portion 1139a.

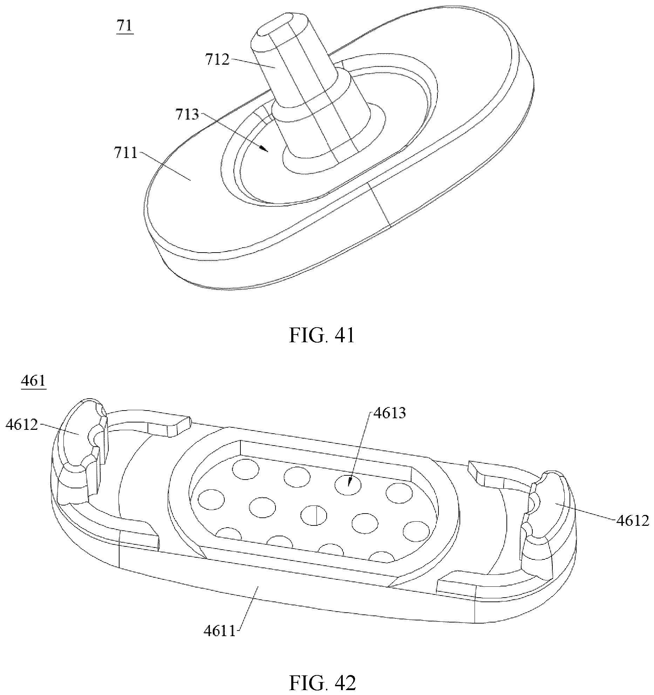

Refer to FIG. 41. FIG. 41 is a diagram of a structure of the first contact 71 of the earphone 10 shown in FIG. 3.

In some embodiments, the first contact 71 includes a main body portion 711 and an ejector pin portion 712, and the ejector pin portion 712 protrudes from one side of the main body portion 711. The main body portion 711 may be approximately in a round waist shape (which may also be referred to as a runway shape). A groove 713 may be disposed on a side that is of the main body portion 711 and that faces the ejector pin portion 712, and the groove 713 is disposed close to the ejector pin portion 712 and around the ejector pin portion 712.

The first contact 71 is made of a conductive material. The first contact 71 may be an integrally formed structural member.

Refer to FIG. 3 and FIG. 42. FIG. 42 is a diagram of a partial structure of the sixth assembly 46 of the earphone 10 shown in FIG. 3.

In some embodiments, the sixth assembly 46 includes a fourth appearance mesh 461. The fourth appearance mesh 461 may include a main body 4611 and two protrusions 4612. The main body 4611 is provided with a plurality of through holes 4613, to form a mesh structure. The main body 4611 may be approximately in a round waist shape (which may also be referred to as a runway shape). The two protrusions 4612 are fastened on a same side of the main body 4611, and are respectively located at two ends of the main body 4611.

The fourth appearance mesh 461 may be a metal mesh, to improve a fashion sense and mechanical reliability of the earphone 10, and lower a risk that a part located on a rear side of the fourth appearance mesh 461 is damaged by external force, for example, prevent penetration of an external sharp object, so as to extend a service life of the earphone 10. The fourth appearance mesh 461 may be an integrally formed structural member. For example, the fourth appearance mesh 461 may be formed by stamping a metal mesh member. In some other embodiments, the fourth appearance mesh 461 may alternatively be made of a plastic material or another material.

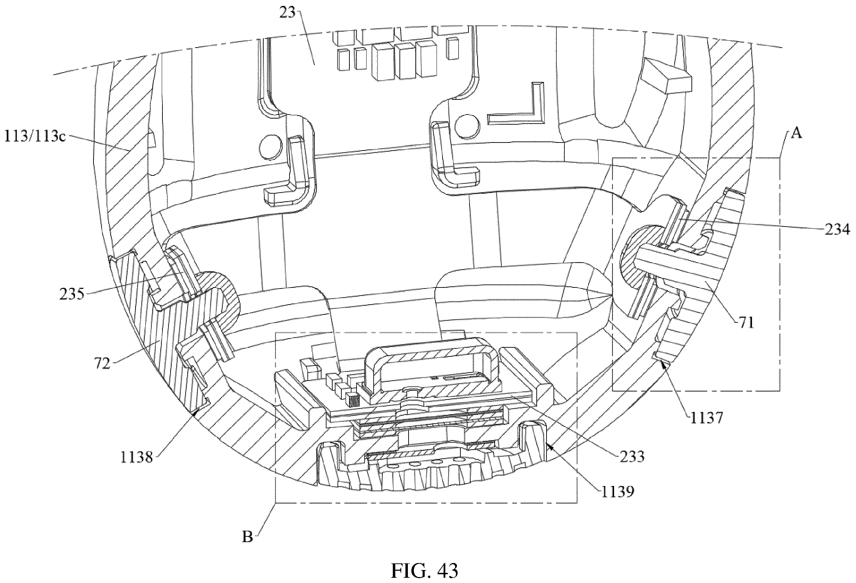

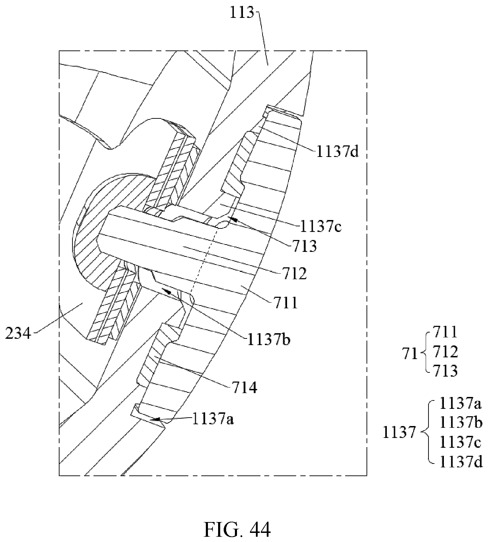

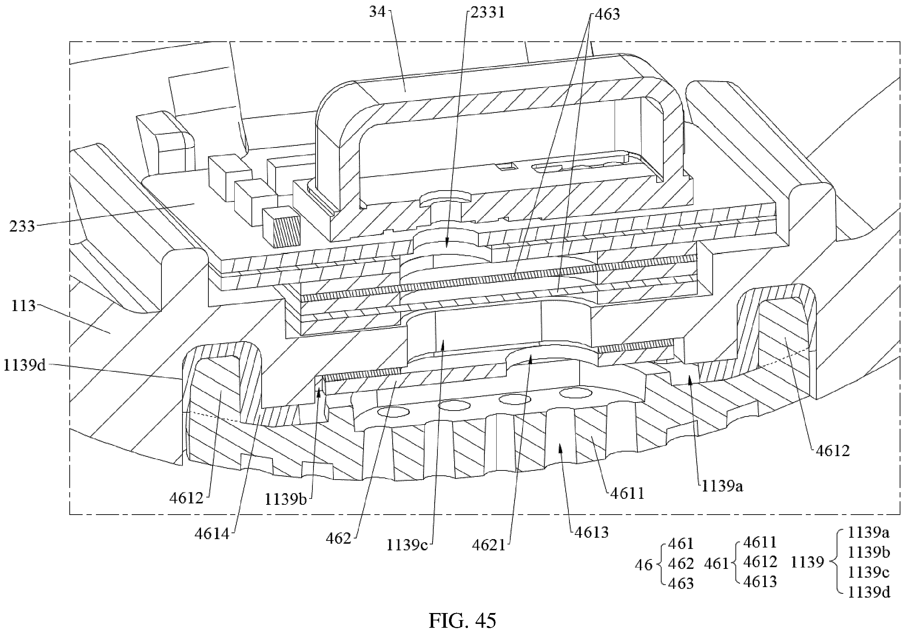

Refer to FIG. 43 to FIG. 45. FIG. 43 is a diagram of an internal structure of a partial structure of the earphone 10 shown in FIG. 1A, FIG. 44 is an enlarged view of a structure at A shown in FIG. 43, and FIG. 45 is an enlarged view of a structure at B shown in FIG. 43.

In some embodiments, a partial structure of the second flexible circuit board 23 is fastened to the bottom part 113c of the main housing member 113. For example, the second part 233 of the second flexible circuit board 23 is fastened to a region that is of the inner wall of the main housing member 113 and that corresponds to the third mounting groove 1139, the third part 234 of the second flexible circuit board 23 is fastened to a region that is of the inner wall of the main housing member 113 and that corresponds to the first mounting groove 1137, and the fourth part 235 of the second flexible circuit board 23 is fastened to a region that is of the inner wall of the main housing member 113 and that corresponds to the second mounting groove 1138.

For example, as shown in FIG. 43 and FIG. 44, the first contact 71 is mounted in the first mounting groove 1137 of the main housing member 113 and is exposed relative to the main housing member 113, and the first contact 71 is fastened and electrically connected to the third part 234 of the second flexible circuit board 23. The main body portion 711 of the first contact 71 is located in the recessed portion 1137a of the first mounting groove 1137, and the main body portion 711 of the first contact 71 may abut against the second protrusion 1137d in the first mounting groove 1137. The ejector pin portion 712 of the first contact 71 extends into the inner side space of the main housing member 113 through the communication portion 1137b of the first mounting groove 1137, and is soldered to the third part 234 of the second flexible circuit board 23, to implement fastening and an electrical connection.

The bottom wall of the recessed portion 1137a of the first mounting groove 1137 and the main body portion 711 of the first contact 71 may be fastened and hermetically connected by using an adhesive layer 714. The first protrusion 1137c in the first mounting groove 1137 may directly or partially extend into the groove 713 of the first contact 71, to form a sealing path with a curved portion. This improves sealing performance between the first contact 71 and the main housing member 113, and prevents external water vapor from entering the inner side space of the main housing member 113 through the first mounting groove 1137, to ensure sealing performance of the main board cavity 14c of the earphone 10.

The second contact 72 is mounted in the second mounting groove 1138 of the main housing member 113 and is exposed relative to the main housing member 113, and the second contact 72 is fastened and electrically connected to the fourth part 235 of the second flexible circuit board 23. For a connection structure between the second contact 72 and each of the main housing member 113 and the fourth part 235 of the second flexible circuit board 23, refer to a connection structure between the first contact 71 and each of the main housing member 113 and the third part 234 of the second flexible circuit board 23. Details are not described herein.

In this embodiment, the earphone 10 may be electrically connected to the charging case by using the first contact 71 and the second contact 72, to implement communication and charging.

For example, as shown in FIG. 43 and FIG. 45, the fourth appearance mesh 461 is mounted in the third mounting groove 1139 and is exposed relative to the main housing member 113. The main body 4611 of the fourth appearance mesh 461 is located in the first recessed portion 1139a of the third mounting groove 1139, and the two protrusions 4612 of the fourth appearance mesh 461 respectively extend into the third recessed portion 1139d of the third mounting groove 1139. The fourth appearance mesh 461 and the third mounting groove 1139 may be fastened and hermetically connected by using an adhesive layer 4614. The adhesive layer 4614 may be partially located between the main body 4611 of the fourth appearance mesh 461 and a wall surface of the first recessed portion 1139a of the third mounting groove 1139, or may be partially located between the two protrusions 4612 of the fourth appearance mesh 461 and a wall surface of the third recessed portion 1139d of the third mounting groove 1139. A sealing path is long and has a curved part, and sealing effect is better. The plurality of through holes 4613 on the main body 4611 of the fourth appearance mesh 461 may be disposed to directly face the second recessed portion 1139b of the third mounting groove 1139.

For example, the sixth assembly 46 may further include a baffle 462, one or more eighth mesh fabrics 463, and a plurality of adhesive layers. The baffle 462 may be mounted on the second recessed portion 1139b of the third mounting groove 1139, and is fastened to a bottom wall of the second recessed portion 1139b of the third mounting groove 1139 by using an adhesive layer. The baffle 462 covers the communication portion 1139c of the third mounting groove 1139. The baffle 462 is provided with a through hole 4621, and the through hole 4621 communicates with the first recessed portion 1139a of the third mounting groove 1139 and the communication portion 1139c of the third mounting groove 1139.

The one or more eighth mesh fabrics 463 are fastened to the inner wall of the main housing member 113, and cover the communication portion 1139c of the third mounting groove 1139. When there are a plurality of eighth mesh fabrics 463, the plurality of eighth mesh fabrics 463 are disposed in a stacked manner, and may be fastened to each other by using an adhesive layer. The eighth mesh fabric 463 may be fixedly connected to the inner wall of the main housing member 113 by using an adhesive layer. The eighth mesh fabric 463 is configured to prevent dust outside the earphone 10 from entering the inside of the earphone 10 through the third mounting groove 1139.

The second part 233 of the second flexible circuit board 23 is fastened on a side that is of the eighth mesh fabric 463 and that faces away from the main housing member 113, and the third microphone 34 is fastened on a side that is of the second part 233 of the second flexible circuit board 23 and that faces away from the eighth mesh fabric 463. The second part 233 of the second flexible circuit board 23 is provided with a communication hole 2331, the communication hole 2331 communicates with the inside of the third microphone 34, and the eighth mesh fabric 463 covers the communication hole 2331. The eighth mesh fabric 463 is configured to prevent dust from entering the third microphone 34.

The communication hole 2331 of the second flexible circuit board 23 and the through hole 4621 of the baffle 462 are distributed in a staggered manner, and projections of the communication hole 2331 and the through hole 4621 on the eighth mesh fabric 463 at least partially do not overlap. The through hole 4613 of the fourth appearance mesh 461, the through hole 4621 of the baffle 462, the communication portion 1139c of the third mounting groove 1139, the eighth mesh fabric 463, and the communication hole 2331 of the second flexible circuit board 23 form a continuous and curved sound pickup channel. A sound outside the earphone 10 can enter the third microphone 34 through the sound pickup channel, and the third microphone 34 implements sound pickup.

In this embodiment, because the sound pickup channel is curved, a sound (for example, a wind sound) outside the earphone 10 can be prevented from directly entering the third microphone 34, to improve windproof effect, and improve sound pickup accuracy of the third microphone 34.

For example, a peripheral edge of the second part 233 of the second flexible circuit board 23 and the inner wall of the main housing member 113 may be hermetically connected, for example, may be hermetically connected by using an adhesive layer, to prevent external water vapor from entering the inside of the main housing member 113, so as to ensure sealing performance of the main board cavity 14c of the earphone 10.

With reference to FIG. 3 and FIG. 6 again, the earphone 10 may further include a battery support 9, and the battery support 9 may be mounted in the bottom space 111c of the main housing 11. The battery support 9 fits with the main housing member 113, and is configured to fasten the battery 73, to improve assembly stability of the battery 73. The battery support 9 may be further configured to support and/or fasten the second flexible circuit board 23. The battery support 9 may be further configured to provide a support surface. The support surface faces the front side of the earphone 10, and the support surface and the main housing member 113 may jointly support and be connected to the sealing cover member 114, to improve connection stability and strength of the sealing cover member 114.

In the foregoing embodiment, the earphone 10 has ultimate space utilization and matches a brand new appearance. This can not only meet requirements of the user for product exquisiteness, wearing comfort, and a brand new appearance, but also meet requirements of the user for sound quality, noise reduction, and battery life extension of the wireless earphone 10.

This application further provides an earphone assembly. The earphone assembly includes a charging case and an earphone. The charging case is configured to accommodate the earphone. The charging case may also be referred to as a charging compartment or an earphone case. The charging case includes a battery that can charge the earphone accommodated in the case, to meet a long-term use requirement of a user.

Regular horizontal display surfaces are used for an upper cover and a lower cover of a conventional charging case, and an earphone is vertically placed in the charging case. A process of taking out the earphone from the charging case is affected by an exposed height of the earphone, magnetic attraction force of the earphone, and a form of the earphone, which becomes a major disadvantage in a use process of a user. For example, to meet a requirement for magnetic attraction force required for placing the earphone in the case, a specific magnetic attraction force requirement needs to be met between the earphone and the charging case. Therefore, convenience of taking out the earphone is severely affected, and user experience is poor. To improve the convenience of taking out the earphone, the magnetic attraction force usually needs to be strictly controlled in a production line, resulting in an increase in costs of an earphone assembly. In addition, in the conventional earphone assembly, an excessively small part of the earphone is exposed to the charging case, and a region that can be held by the user is small. Consequently, it is difficult for the user to take out the earphone.

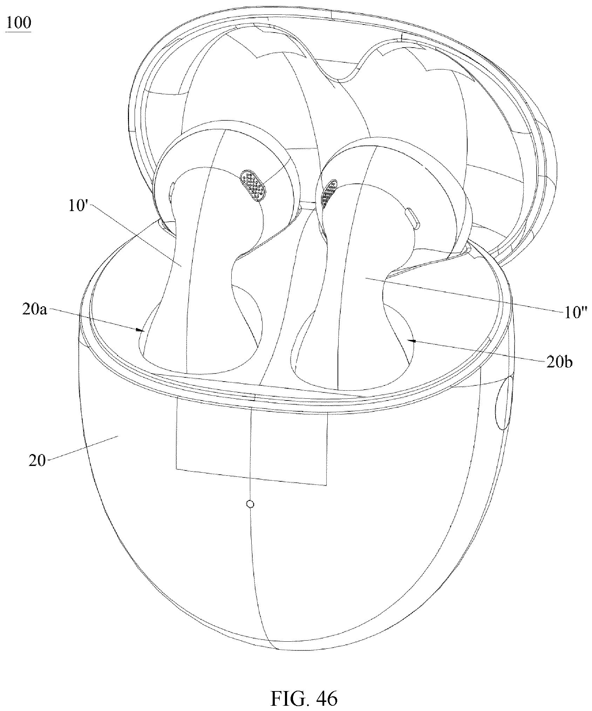

Refer to FIG. 46, FIG. 47, FIG. 48A, and FIG. 48B. FIG. 46 is a diagram of a structure of an earphone assembly 100 in some embodiments according to an embodiment of this application,

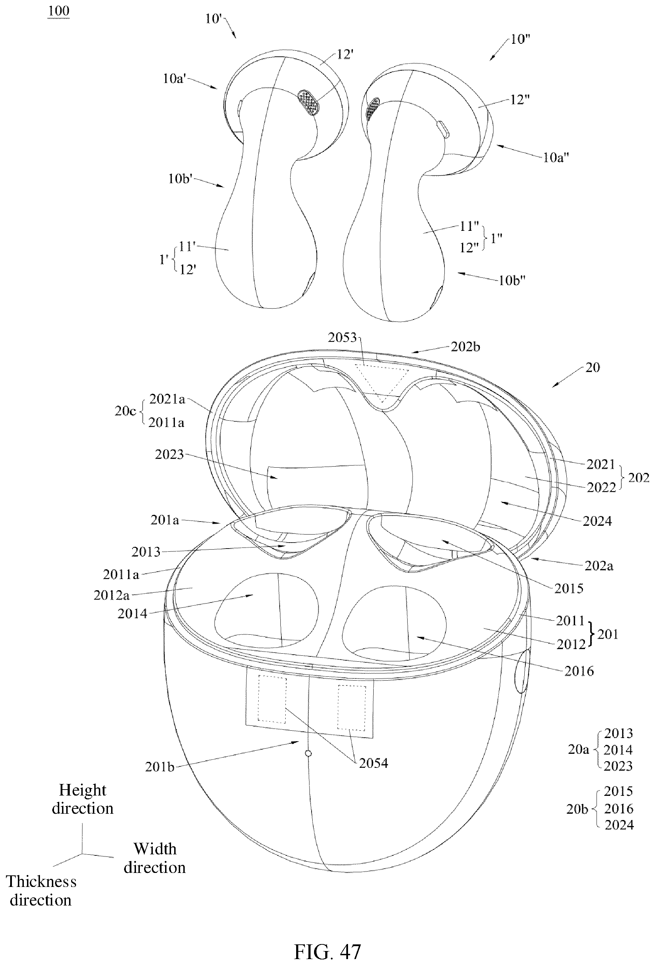

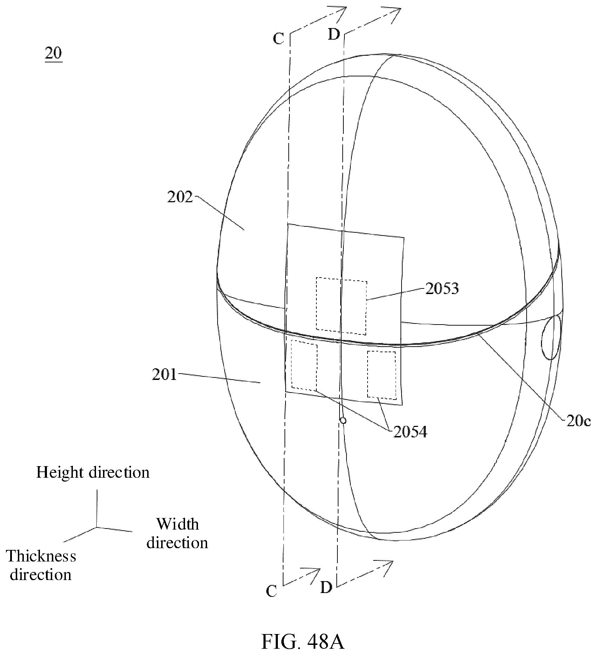

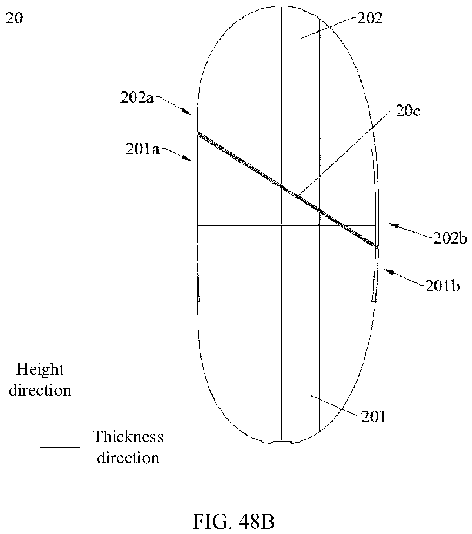

FIG. 47 is a diagram of a structure of the earphone assembly 100 shown in FIG. 46 in another use state, FIG. 48A is a diagram of a structure of a charging case 20 of the earphone assembly 100 shown in FIG. 47 in another use state, and FIG. 48B is a diagram of a structure of the charging case 20 shown in FIG. 48A at another angle.

In some embodiments, the earphone assembly 100 includes the charging case 20, a first earphone 10', and a second earphone 10". The charging case 20 has a first earphone slot 20a and a second earphone slot 20b that are disposed at an interval. The first earphone slot 20a and the second earphone slot 20b are configured to accommodate the earphones. The first earphone 10' can be detachably accommodated in the first earphone slot 20a, and the second earphone 10" can be detachably accommodated in the second earphone slot 20b. In the first earphone 10' and the second earphone 10", one is a left earphone, and the other is a right earphone. In this embodiment, an example in which the first earphone 10' is the left earphone and the second earphone 10" is the right earphone is used for description. In some other embodiments, the first earphone 10' and the second earphone 10" may be interchanged. Both the first earphone 10' and the second earphone 10" use all or most of the structures of the earphone in the foregoing embodiments.

A housing 1' of the first earphone 10' and a housing 1" of the second earphone 10" are of mutually symmetric structures, and the first earphone slot 20a and the second earphone slot 20b are of mutually symmetric structures. The housing 1' of the first earphone 10' is of an asymmetric structure, the first earphone slot 20a is of an asymmetric structure, and a shape of the first earphone slot 20a is the same as a shape of the housing 1' of the first earphone 10'. The housing 1" of the second earphone 10" is of an asymmetric structure, the second earphone slot 20b is of an asymmetric structure, and a shape of the second earphone slot 20b is the same as a shape of the housing 1" of the second earphone 10". Briefly, the first earphone slot 20a is adapted to the first earphone 10', and the second earphone slot 20b is adapted to the second earphone 10". In some examples, when the first earphone 10' is placed in the first earphone slot 20a and the second earphone 10" is placed in the second earphone slot 20b, the two earphones are correctly placed, and the charging case 20 may be closed; or when the first earphone 10' is placed in the second earphone slot 20b and the second earphone 10" is placed in the first earphone slot 20a, the two earphones are incorrectly placed, and the charging case 20 cannot be closed.

For example, the charging case 20 has a width direction, a thickness direction, and a height direction that are perpendicular to each other, the first earphone slot 20a and the second earphone slot 20b are arranged in the width direction of the charging case 20, and a dimension of the charging case 20 in the height direction is greater than a dimension of the charging case 20 in the thickness direction. The charging case 20 includes a case body 201 and a case cover 202, and the case cover 202 is rotatably connected to the case body 201.

For example, as shown in FIG. 48B, the case body 201 has a first end 201a and a second end 201b that are disposed opposite to each other, and the case cover 202 has a first end 202a and a second end 202b that are disposed opposite to each other. The first end 202a of the case cover 202 is rotatably connected to the first end 201a of the case body 201, and a rotation center is parallel to the width direction of the charging case 20. The second end 202b of the case cover 202 is far away from the second end 201b of the case body 201, to open the case cover 202 relative to the case body 201, or the second end 202b of the case cover 202 is close to the second end 201b of the case body 201, to close the case cover 202 relative to the case body 201. The first end 201a of the case body 201 is higher than the second end 201b of the case body 201. That is, in the height direction of the charging case 20, a dimension of the first end 201a of the case body 201 is greater than a dimension of the second end 201b of the case body 201. In this case, an entire top part of the case body 201 is inclined.

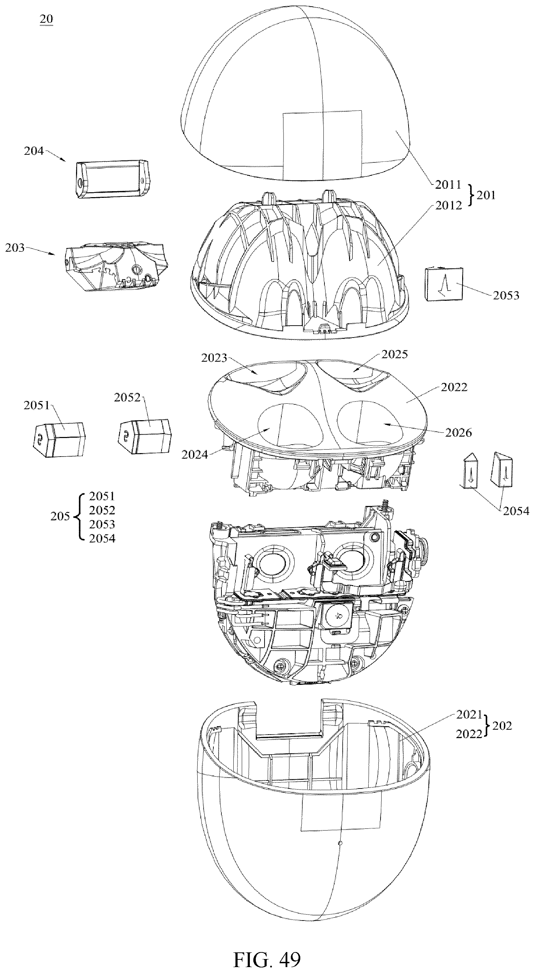

Refer to FIG. 47 and FIG. 49. FIG. 49 is a diagram of a partial exploded structure of the charging case 20 shown in FIG. 47.

In some embodiments, the case body 201 includes a case body housing 2011 and a case body lining 2012, and the case body lining 2012 is fastened on an inner side of the case body housing 2011; and the case cover 202 includes a case cover housing 2021 and a case cover lining 2022, and the case cover lining 2022 is fastened on an inner side of the case cover housing 2021. Both the first earphone slot 20a and the second earphone slot 20b are partially formed on the case body lining 2012 and partially formed on the case cover lining 2022.

With reference to FIG. 47 to FIG. 48B again, the case body 201 includes a top surface facing the case cover 202, and the top surface of the case body 201 includes a top surface 2011a of the case body housing 2011 and a top surface 2012a of the case body lining 2012; and the case cover 202 includes a bottom surface facing the case body 201, and the bottom surface of the case cover 202 includes a bottom surface 2021a of the case cover housing 2021 and a bottom surface of the case cover lining 2022. When the charging case 20 is closed, the top surface of the case body 201 is opposite to the bottom surface of the case cover 202, the top surface 2011a of the case body housing 2011 is opposite to the bottom surface 2021a of the case cover housing 2021, and the top surface 2012a of the case body lining 2012 is opposite to the bottom surface of the case cover lining 2022.

A connection between the top surface 2011a of the case body housing 2011 and the bottom surface 2021a of the case cover housing 2021 may be seen from an outside of the charging case 20, to form a parting surface 20c of the charging case 20. That is, the parting surface 20c of the charging case 20 includes the top surface 2011a of the case body housing 2011 and the bottom surface 2021a of the case cover housing 2021. The parting surface 20c of the charging case 20 is inclined to the thickness direction of the charging case 20 and inclined to the height direction of the charging case 20. In the height direction of the charging case 20, the dimension of the first end 201a of the case body 201 is greater than the dimension of the second end 201b of the case body 201.

The top surface 2011a of the case body housing 2011 may be a plane, and the bottom surface 2021a of the case cover housing 2021 may be a plane, so that processing difficulty of the case body housing 2011 and the case cover housing 2021 is reduced, and the case body housing 2011 and the case cover housing 2021 are easily closed, and the parting surface 20c of the charging case 20 is a plane. In this case, an appearance of the charging case 20 is exquisite and concise. In some other embodiments, the parting surface of the charging case 20 may alternatively be a curved surface. This is not strictly limited in this embodiment of this application.

As shown in FIG. 46, when the charging case 20 is opened, the first earphone 10' and the second earphone 10" are placed on the case body lining 2012, the first earphone 10' and the second earphone 10" are exposed relative to the top surface 2012a of the case body lining 2012, and the top surface 2012a of the case body lining 2012 forms a display surface of the charging case 20.

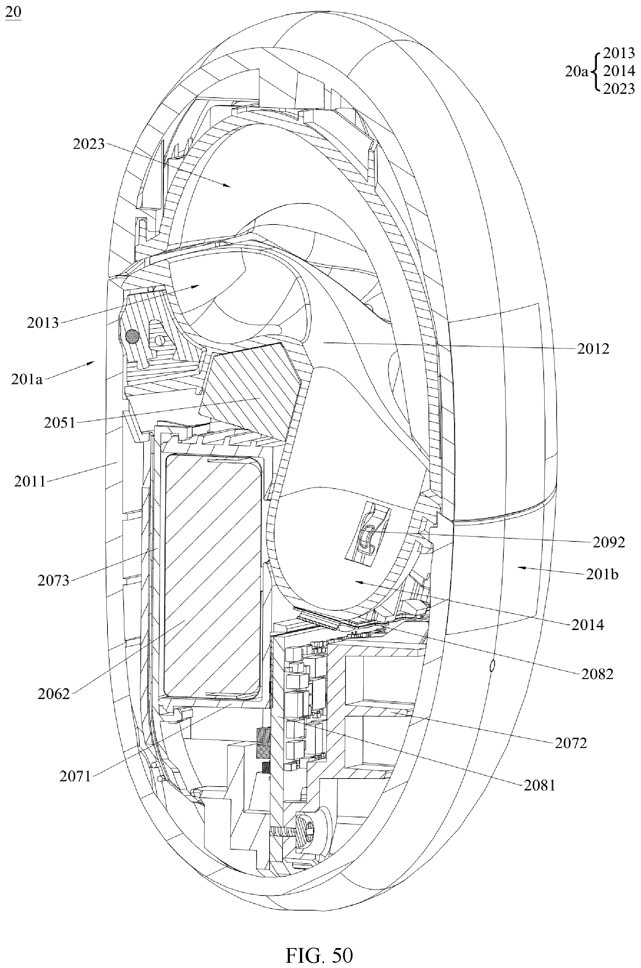

Refer to FIG. 47, FIG. 49, and FIG. 50. FIG. 50 is a diagram of a cross-sectional structure of FIG. 48A along C-C. For ease of illustration, a view in FIG. 50 is obtained by rotating a view in FIG. 48A.

In some embodiments, the first earphone slot 20a includes a first top slot 2013, a first bottom slot 2014, and a first fitting slot 2023, the first top slot 2013 and the first bottom slot 2014 are formed on the case body lining 2012, and the first fitting slot 2023 is formed on the case cover lining 2022. As shown in FIG. 50, when the charging case 20 is closed, the first top slot 2013, the first bottom slot 2014, and the first fitting slot 2023 jointly form the first earphone slot 20a, and the shape of the first earphone slot 20a is adapted to a shape of the first earphone 10'.

As shown in FIG. 47 and FIG. 50, the first top slot 2013 is closer to the first end 201a of the case body 201 than the first bottom slot 2014, a slot depth of the first top slot 2013 is less than a slot depth of the first bottom slot 2014, the first top slot 2013 is configured to accommodate an earbud 10a' of the first earphone 10', and the first bottom slot 2014 is configured to accommodate a stem 10b" of the first earphone 10'. In the first earphone 10', a main housing 11' of the housing 1' includes a first part that is close to a front housing 12' and a second part that is far away from the front housing 12', the front housing 12' and the first part of the main housing 11' form the earbud 10a' of the first earphone 10', and the second part of the main housing 11' forms the stem 10b" of the first earphone 10'.

Both an opening of the first top slot 2013 and an opening of the first bottom slot 2014 are located on the top surface of the case body lining 2012, and the opening of the first bottom slot 2014 is lower than the opening of the first top slot 2013. A lowest edge of the opening of the first top slot 2013 is not lower than a highest edge of the opening of the first bottom slot 2014. In this case, the display surface of the charging case 20 is an inclined surface. When the first earphone 10' is placed in the first earphone slot 20a, a large part of the first earphone 10' is exposed relative to the charging case 20, so that a user can easily take out the earphone, to improve user experience of taking out the earphone from the charging case 20, ensure specific aesthetics, and improve product appearance exquisiteness.

The opening of the first top slot 2013 may be disposed at an interval from the opening of the first bottom slot 2014. In this case, an end that is of the opening of the first bottom slot 2014 and that is close to the opening of the first top slot 2013 is lower than an end that is of the opening of the first top slot 2013 and that is close to the opening of the first bottom slot 2014. In this embodiment, the opening of the first bottom slot 2014 may be significantly lower than the opening of the first top slot 2013, so that when the first earphone 10' is placed in the first earphone slot 20a, a larger part of the first earphone 10' is exposed relative to the charging case 20.

A lowest part of a bottom wall of the first top slot 2013 is not lower than a lowest edge of the opening of the first bottom slot 2014. In this embodiment, when the first earphone 10' is placed in the first earphone slot 20a, a larger part of the first earphone 10' is exposed relative to the charging case 20.

For example, when the first earphone 10' is placed in the first earphone slot 20a, a bottom part of a main housing member of the main housing 11' is located in the first bottom slot 2014, both the front housing 12' and a top part of the main housing member are partially located in the first top slot 2013 and partially located outside the case body 201, and a middle part of the main housing member is located outside the case body 201. For a diagram of a structure and descriptions of the main housing member of the main housing 11', refer to the foregoing related content of the main housing member 113 of the earphone 10.

Similarly, the second earphone slot 20b includes a second top slot 2015, a second bottom slot 2016, and a second fitting slot 2024, the second top slot 2015 and the second bottom slot 2016 are formed on the case body lining 2012, and the second fitting slot 2024 is formed on the case cover lining 2022. When the charging case 20 is closed, the second top slot 2015, the second bottom slot 2016, and the second fitting slot 2024 jointly form the second earphone slot 20b, and the shape of the second earphone slot 20b is adapted to a shape of the second earphone 10".

The second top slot 2015 is closer to the first end 201a of the case body 201 than the second bottom slot 2016, a slot depth of the second top slot 2015 is less than a slot depth of the second bottom slot 2016, the second top slot 2015 is configured to accommodate an earbud 10a" of the second earphone 10", and the second bottom slot 2016 is configured to accommodate a stem 10b" of the second earphone 10". In the second earphone 10", a main housing 11" includes a first part that is close to a front housing 12" and a second part that is far away from the front housing 12", the front housing 12" and the first part of the main housing 11" form the earbud 10a" of the second earphone 10", and the second part of the main housing 11" forms the stem 10b" of the second earphone 10".

Both an opening of the second top slot 2015 and an opening of the second bottom slot 2016 are located on the top surface of the case body lining 2012, and the opening of the second bottom slot 2016 is lower than the opening of the second top slot 2015. A lowest edge of the opening of the second top slot 2015 is not lower than a highest edge of the opening of the second bottom slot 2016. In this case, the display surface of the charging case 20 is an inclined surface. When the second earphone 10" is placed in the second earphone slot 20b, a large part of the second earphone 10" is exposed relative to the charging case 20, so that a user can easily take out the earphone, to improve user experience of taking out the earphone from the charging case 20, ensure specific aesthetics, and improve product appearance exquisiteness.

The opening of the second top slot 2015 may be disposed at an interval from the opening of the second bottom slot 2016. In this case, an end that is of the opening of the second bottom slot 2016 and that is close to the opening of the second top slot 2015 is lower than an end that is of the opening of the second top slot 2015 and that is close to the opening of the second bottom slot 2016. In this embodiment, the opening of the second bottom slot 2016 may be significantly lower than the opening of the second top slot 2015, so that when the second earphone 10" is placed in the second earphone slot 20b, a larger part of the second earphone 10" is exposed relative to the charging case 20.

A lowest part of a bottom wall of the second top slot 2015 is not lower than a lowest edge of the opening of the second bottom slot 2016. In this embodiment, when the second earphone 10" is placed in the second earphone slot 20b, a larger part of the second earphone 10" is exposed relative to the charging case 20.

For example, when the second earphone 10" is placed in the second earphone slot 20b, a bottom part of a main housing member of the main housing 11" is located in the second bottom slot 2016, both the front housing 12" and a top part of the main housing member are partially located in the second top slot 2015 and partially located outside the case body 201, and a middle part of the main housing member is located outside the case body 201. For a diagram of a structure and descriptions of the main housing member of the main housing 11", refer to the foregoing related content of the main housing member 113 of the earphone 10.

For example, a top part of the case body lining 2012 may protrude relative to the case body housing 2011, that is, the top surface 2011a of the case body housing 2011 protrudes relative to the top surface 2012a of the case body lining 2012. In this case, the user can more conveniently take out the earphone placed in the charging case 20, to improve user experience.

The top surface 2011a of the case body housing 2011 may be a curved surface, so that shapes of the opening of the first top slot 2013 and the opening of the first bottom slot 2014 better match and support the first earphone 10', and shapes of the opening of the second top slot 2015 and the opening of the second bottom slot 2016 may better match and support the second earphone 10". In this case, the two earphones are stably and reliably placed in the charging case 20, and are convenient for the user to take out. In addition, the display surface of the charging case 20 is beautiful and exquisite. In some other embodiments, the top surface 2011a of the case body housing 2011 may alternatively be a plane. This is not strictly limited in this embodiment of this application.

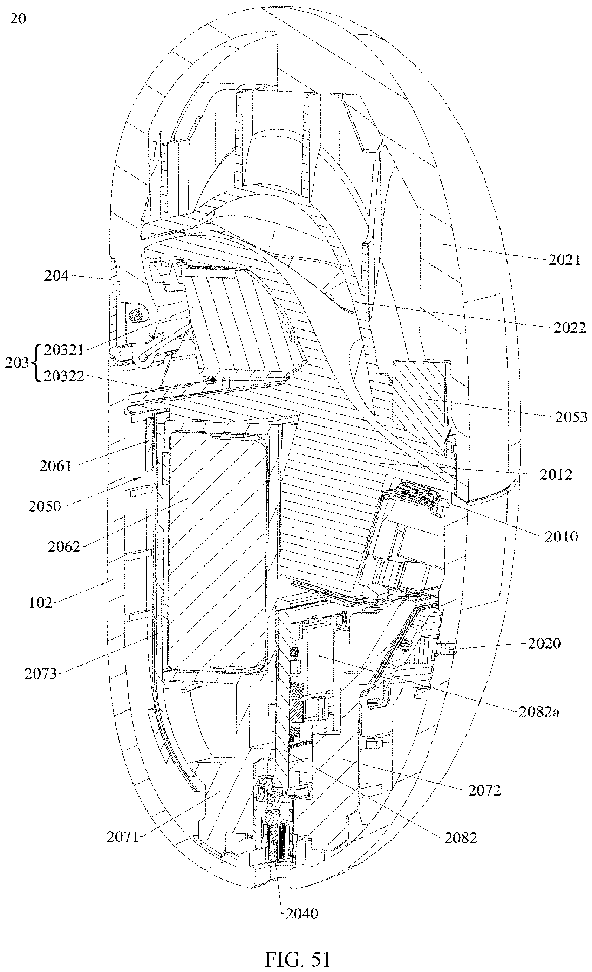

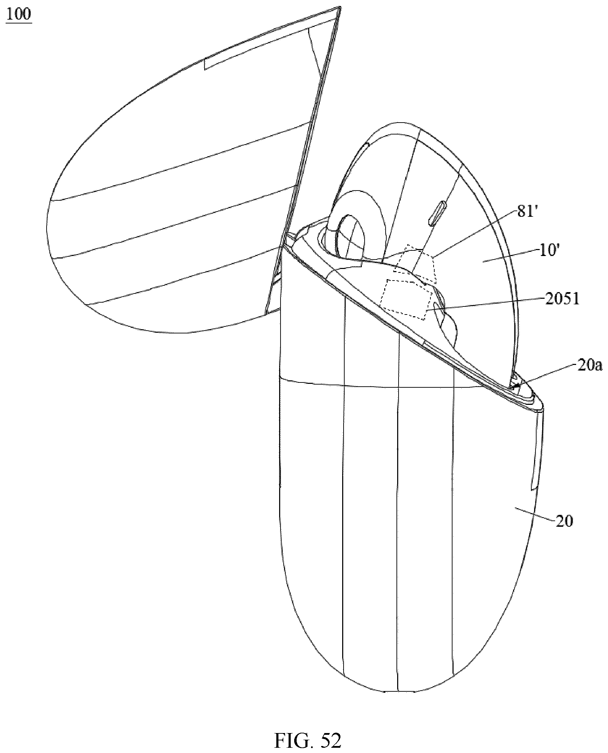

Refer to FIG. 49 to FIG. 52. FIG. 51 is a diagram of a cross-sectional structure of FIG. 48A along D-D, and FIG. 52 is a diagram of a structure of the earphone assembly 100 shown in FIG. 46 at another angle. For ease of illustration, a view in FIG. 51 is obtained by rotating a view in FIG. 48A.

In some embodiments, as shown in FIG. 49 and FIG. 51, the charging case 20 further includes a hinge assembly 203 and a decorative part 204. The hinge assembly 203 is mounted on the case body 201, and the case cover 202 may be rotatably connected to the case body 201 by using the hinge assembly 203. The decorative part 204 is mounted on an outer side of the hinge assembly 203, and is configured to cover and decorate the hinge assembly 203, to improve appearance exquisiteness of the charging case 20.

In some embodiments, as shown in FIG. 49 and FIG. 50, the charging case 20 further includes a magnetic attraction assembly 205, and the magnetic attraction assembly 205 includes a first magnet 2051, a second magnet 2052, a third magnet 2053, and a fourth magnet 2054.

The first magnet 2051 is fastened to the case body lining 2012, and the first magnet 2051 is located below the top surface of the case body lining 2012, and is located between the first top slot 2013 and the first bottom slot 2014. In this embodiment, there is large space between the first top slot 2013 and the first bottom slot 2014, so that the first magnet 2051 with a large volume can be placed, to increase magnetic attraction force used to attract the first earphone 10'. As shown in FIG. 52, when the first earphone 10' is placed in the first earphone slot 20a, a magnetic attraction member 81' of the first earphone 10' and the first magnet 2051 of the charging case 20 are disposed opposite to each other, and the magnetic attraction member 81' and the first magnet 2051 are close to each other and have a small spacing, to generate sufficient magnetic attraction force, so that the first earphone 10' is stably placed in the charging case 20.

The second magnet 2052 is fastened to the case body lining 2012, and the second magnet 2052 is located below the top surface of the case body lining 2012, and is located between the second top slot 2015 and the second bottom slot 2016. When the second earphone 10" is placed in the second earphone slot 20b, a magnetic attraction member of the second earphone 10" and the second magnet 2052 of the charging case 20 are disposed opposite to each other, and the magnetic attraction member and the second magnet 2052 are close to each other and have a small spacing.

As shown in FIG. 47 and FIG. 51, the third magnet 2053 is fastened to the case cover lining 2022, the third magnet 2053 is located between the case cover lining 2022 and the case cover housing 2021, and the third magnet 2053 is located at a middle position of the second end 202b of the case cover 202, and is disposed close to a bottom part of the case cover 202.

With reference to FIG. 47, FIG. 48A, and FIG. 49, there may be two fourth magnets 2054. The fourth magnet 2054 is fastened to the case body lining 2012, and is located between the case body lining 2012 and the case body housing 2011. The fourth magnet 2054 is located at a middle position of the second end 201b of the case body 201, and is disposed close to the top part of the case body 201. When the charging case 20 is closed, magnetic attraction force is generated between the third magnet 2053 and the fourth magnet 2054, so that the charging case 20 is stably closed.

Hinge assembly 203 and decorative part 204 of the charging case 20:

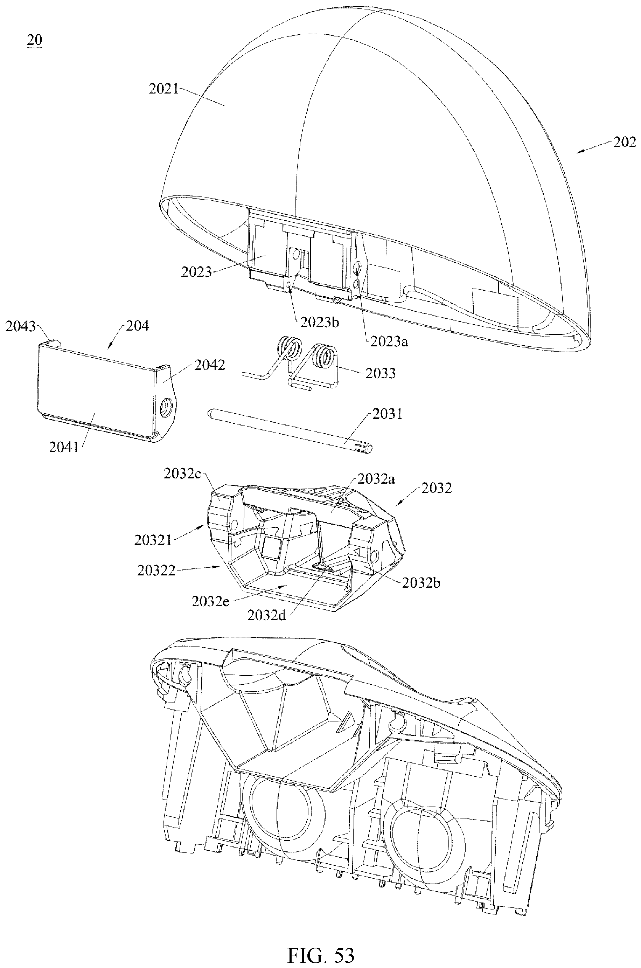

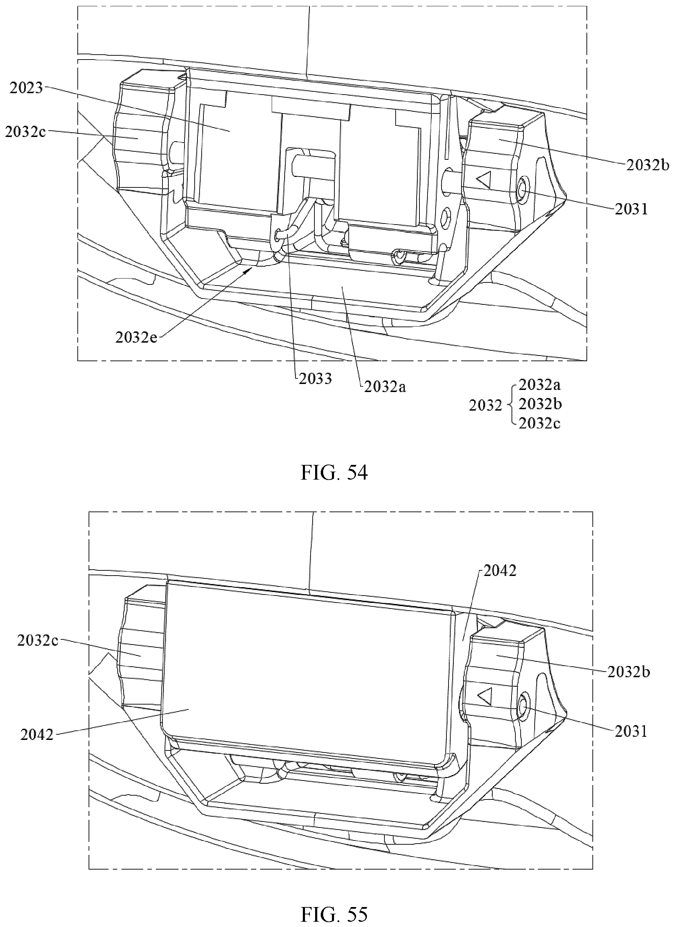

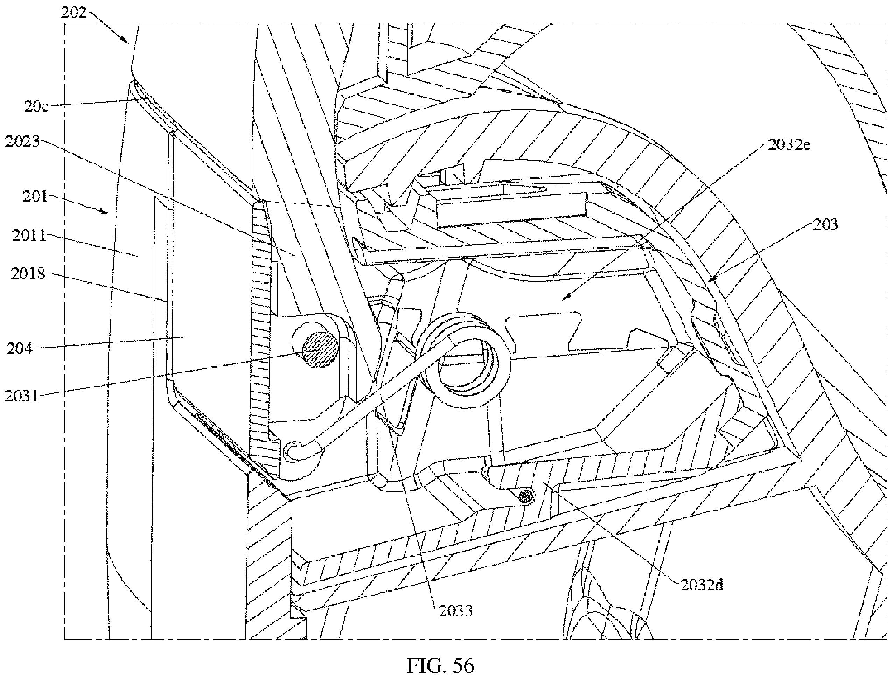

Refer to FIG. 53 to FIG. 56. FIG. 53 is a diagram of a partial structure of the charging case 20 shown in FIG. 49, FIG. 54 is a diagram 1 of an assembly structure of the partial structure in FIG. 53, FIG. 55 is a diagram 2 of an assembly structure of the partial structure in FIG. 53, and FIG. 56 is a diagram of a partial structure of the charging case 20 shown in FIG. 51. For ease of illustration, a view in FIG. 55 is obtained by rotating a view in FIG. 51.

In some embodiments, the hinge assembly 203 may include a rotating shaft 2031, a hinge bracket 2032, and a torsion spring 2033. The hinge bracket 2032 is fastened to the case body 201, and the case cover 202 is rotatably connected to the hinge bracket 2032 by using the rotating shaft 2031, to be rotatably connected to the case body 201. Specifically, the case body lining 2012 is provided with a mounting groove 2017, and the hinge bracket 2032 is mounted in the mounting groove 2017, to be fixedly connected to the case body lining 2012. The rotating shaft 2031 is inserted into the hinge bracket 2032, and the rotating shaft 2031 is further inserted into the case cover 202.

The hinge bracket 2032 may include a main body 2032a, a first support arm 2032b, a second support arm 2032c, and a clamping block 2032d. Movable space 2032e is formed on an inner side of the main body 2032a, and the first support arm 2032b and the second support arm 2032c are respectively fastened to two ends of the main body 2032a and located on two sides of the movable space 2032e. Both the first support arm 2032b and the second support arm 2032c are provided with rotating shaft holes. The clamping block 2032d is located in the movable space 2032e and is fastened to the main body 2032a. One end of the rotating shaft 2031 is inserted into the rotating shaft hole of the first support arm 2032b, and the other end passes through the movable space 2032e and then is inserted into the rotating shaft hole of the second support arm 2032c.

The case cover 202 may further include an adapter block 2025, and the adapter block 2025 may be fastened to the case cover housing 2021. The adapter block 2025 is rotatably connected to the hinge bracket 2032 by using the rotating shaft 2031, and the rotating shaft 2031 is inserted into the adapter block 2025. The adapter block 2025 is provided with a rotating shaft hole 2025a and a clamping hole 2025b. The rotating shaft hole 2025a is disposed at an interval from the clamping hole 2025b, and the clamping hole 2025b is located on a side that is of the rotating shaft hole 2025a and that is far away from the case cover housing 2021. The adapter block 2025 is located in the movable space 2032e of the hinge bracket 2032, and the rotating shaft 2031 passes through the rotating shaft hole 2025a of the adapter block 2025.

The torsion spring 2033 is located in the movable space 2032e of the hinge bracket 2032, one end of the torsion spring 2033 is connected to the hinge bracket 2032, and the other end of the torsion spring 2033 is connected to the adapter block 2025. For example, one end of the torsion spring 2033 may abut against or be clamped to the clamping block 2032d of the hinge bracket 2032, and the other end of the torsion spring 2033 may be inserted into the clamping hole of the adapter block 2025. In this embodiment, the torsion spring 2033 is disposed, so that a feel of opening and closing the cover is achieved for the charging case 20.

For example, the decorative part 204 includes a first plate 2041, a second plate 2042, and a third plate 2043. The second plate 2042 and the third plate 2043 are respectively connected to two ends of the first plate 2041, and are both bent to the first plate 2041. Both the second plate 2042 and the third plate 2043 are provided with rotating shaft holes. The first plate 2041 is located on an outer side of the adapter block 2025, and covers an outer side surface of the adapter block 2025. The second plate 2042 is located between the adapter block 2025 and the first support arm 2032b of the hinge bracket 2032. The third plate 2043 is located between the adapter block 2025 and the second support arm 2032c of the hinge bracket 2032. The rotating shaft 2031 is inserted into the rotating shaft hole of the second plate 2042 and the rotating shaft hole of the third plate 2043, to be inserted into the second plate 2042 and the third plate 2043.

As shown in FIG. 56, the case body 201 is provided with a notch 2018. The notch 2018 may be formed on the case body housing 2011, and the notch 2018 is disposed to correspond to the adapter block 2025 of the case cover 202, to provide movable space for the adapter block 2025. When the case cover 202 is closed relative to the case body 201, the adapter block 2025 is located on a side that is of the parting surface 20c and that is close to the case body 201, and covers the notch 2018. The case body 201 blocks one part of the hinge assembly 203, and the decorative part 204 blocks the other part of the hinge assembly 203, so that an appearance of the charging case 20 is complete.

In this embodiment, the decorative part 204 covers the outer side surface of the adapter block 2025. When the charging case 20 is closed, the decorative part 204 covers the notch 2018 of the case body 201, and jointly forms the appearance of the charging case 20 with the case body 201. A structure in which two ends pass through the shaft is designed for the decorative part 204. Therefore, a problem of uneven gaps between the decorative part and both a conventional rear-mounted decorative part and the case body is resolved, and aesthetics is improved. In addition, support for the rotating shaft 2031 is increased, so that structural strength of the hinge assembly 203 is high, to improve reliability.

With reference to FIG. 51 and FIG. 53, in some embodiments, the charging case 20 further includes a wireless charging coil 2061 and a battery 2062. Both the wireless charging coil 2061 and the battery 2062 are fastened in the case body 201, and are located below the hinge assembly 203. The charging case 20 may charge the battery 2062 by using the wireless charging coil 2061.

For example, the hinge bracket 2032 may include a metal part 20321 and a plastic part 20322, the metal part 20321 and the plastic part 20322 are fastened to each other, and the rotating shaft 2031 is inserted into the metal part 20321. That is, both the rotating shaft hole of the first support arm 2032b and the rotating shaft hole of the second support arm 2032c are formed on the metal part 20321. The metal part 20321 may be made of a metal material such as stainless steel. The hinge bracket 2032 may be an integrally formed structural member, to have high structural strength. For example, the hinge bracket 2032 may be formed by using a metal injection molding (Metal injection Molding, MIM) process, a metal insert injection molding process, or the like. The plastic part 20322 is located between the metal part 20321 and the wireless charging coil 2061.

In this embodiment, the hinge bracket 2032 may reduce adverse impact of a metal piece on the charging case 20 in a wireless charging process while ensuring strength of a connection structure, to ensure wireless charging performance of the earphone assembly 100.

For example, the decorative part 204 may be made of an aluminum alloy material. In this case, the decorative part 204 is beautiful and has high structural strength, and impact on the wireless charging process of the charging case 20 can be reduced. The decorative part 204 may be formed by bending a plate, has high structural strength, is easy to process, and has low costs.

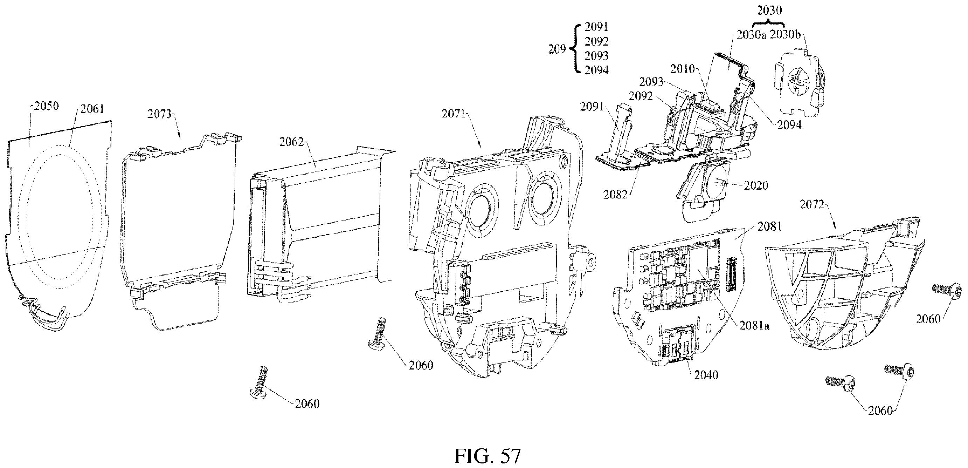

Refer to FIG. 50, FIG. 51, and FIG. 57. FIG. 57 is a diagram of an exploded structure of the partial structure of the charging case 20 shown in FIG. 49.

In some embodiments, the charging case 20 further includes a plurality of parts mounted between the case body housing 2011 and the case body lining 2012. The plurality of parts may include a first housing member 2071, a second housing member 2072, a third housing member 2073, a circuit board 2081, a connection circuit board 2082, an electrode assembly 209, a Hall sensor 2010, an indicator 2020, a key assembly 2030, an electrical connector 2040, a wireless charging assembly 2050, the battery 2062, and a plurality of fasteners 2060.

The second housing member 2072 and the third housing member 2073 are respectively located on two sides of the first housing member 2071, and are fixedly connected to the first housing member 2071. The second housing member 2072 may be fastened to the first housing member 2071 by using the fastener 2060. In some other embodiments, the second housing member 2072 may alternatively be fastened to the first housing member 2071 through snap-fitting or adhesion, or in another manner. The third housing member 2073 may be fastened to the first housing member 2071 through snap-fitting. In some other embodiments, the second housing member 2072 may alternatively be fastened to the first housing member 2071 by using the fastener 2060, through adhesion, or in another manner.

The circuit board 2081 is located between the first housing member 2071 and the second housing member 2072, and is fixedly connected to the first housing member 2071. The circuit board 2081 may be located below the first bottom slot 2014 and the second bottom slot 2016. A plurality of components may be disposed on the circuit board 2081, and include but are not limited to a main control chip 2081a, a fitting component of the main control chip 2081a, a connection port, and the like. The plurality of components are electrically connected to the circuit board 2082. The circuit board 2081 may be a rigid printed circuit board.

The connection circuit board 2082 may be a flexible circuit board or a rigid-flex circuit board. Parts such as the electrode assembly 209, a key 2030a of the key assembly 2030, the Hall sensor 2010, and the indicator 2020 may be fastened and electrically connected to the connection circuit board 2082. The connection circuit board 2082 is electrically connected to the circuit board 2081, so that a part on the connection circuit board 2082 is electrically connected to the circuit board 2081. The connection circuit board 2082 may be partially located below the first bottom slot 2014 and the second bottom slot 2016, and partially located on a side that is of the second bottom slot 2016 and that is far away from the first bottom slot 2014.

The electrode assembly 209 may include a first electrode 2091, a second electrode 2092, a third electrode 2093, and a fourth electrode 2094. Both the first electrode 2091 and the second electrode 2092 are at least partially located in the first earphone slot 20a, and the first electrode 2091 and the second electrode 2092 are configured to be electrically connected to the first earphone 10' placed in the first earphone slot 20a. The first electrode 2091 and the second electrode 2092 are one positive electrode and one negative electrode. Both the third electrode 2093 and the fourth electrode 2094 are at least partially located in the second earphone slot 20b, and the third electrode 2093 and the fourth electrode 2094 are configured to be electrically connected to the second earphone 10" placed in the second earphone slot 20b. The third electrode 2093 and the fourth electrode 2094 are one positive electrode and one negative electrode. The second electrode 2092 and the third electrode 2093 are located between the first electrode 2091 and the fourth electrode 2094. For example, a spring plate structure may be used for the plurality of electrodes. In some other embodiments, an ejector pin structure or another structure may alternatively be used for the plurality of electrodes.

The Hall sensor 2010 is located between the first bottom slot 2014 and the second bottom slot 2016, and is disposed close to the top surface of the case body lining 2012. When the charging case 20 is closed, the Hall sensor 2010 is disposed to correspond to the third magnet 2053. The Hall sensor 2010 is configured to detect whether the charging case 20 is closed.

A keycap 2030b of the key assembly 2030 may be mounted on a housing of the housing 1, and is a movable part. The keycap 2030b abuts against the key 2030a when being pressed by the user.

The indicator 2020 may be located on a side that is of the second housing member 2072 and that faces away from the first housing member 2071, and is fastened to the second housing member 2072. Light emitted by the indicator 2020 may pass through the case body housing 2011, and be emitted to an outside of the charging case 20. The indicator 2020 may be configured to indicate a charging status, a battery level change, and the like.

The battery 2062 is located between the first housing member 2071 and the third housing member 2073, and the battery 2062 is fastened to the first housing member 2071. The battery 2062 is located below the first top slot 2013 and the second top slot 2015, and is located on one side of the first bottom slot 2014 and the second bottom slot 2016. A lead of the battery 2062 may bypass the first housing member 2071 and be connected to the circuit board 2081.

The wireless charging assembly 2050 is located on a side that is of the third housing member 2073 and that faces away from the first housing member 2071, and is fastened to the third housing member 2073. The wireless charging assembly 2050 includes the wireless charging coil 2061 and a lead, and the lead bypasses the third housing member 2073 and is connected to the circuit board 2081.

The electrical connector 2040 may be fastened and electrically connected to the circuit board 2082. The electrical connector 2040 is disposed to correspond to a charging port at a bottom part of the case body housing 2011. In this embodiment, the charging case 20 may be wirelessly charged by using the wireless charging coil 2061, or the charging case 20 may be charged in a wired manner by using the electrical connector 2040.

Electrical connection between the earphone in the earphone assembly 100 and the charging case 20:

In this embodiment of this application, a large part of each of the first earphone 10' and the second earphone 10" is exposed to the case body lining 2012. Therefore, in the first earphone 10' and the second earphone 10", there is a case in which the left earphone and the right earphone are reversely placed, and there may be further a case in which a single earphone is reversely placed. However, because the first bottom slot 2014 and the second bottom slot 2016 are shallow, and two contacts of each of the first earphone 10' and the second earphone 10" are distinguished by a positive electrode and a negative electrode, when the first earphone 10' and the second earphone 10" are placed in the charging case 20 at inaccurate positions, contacts of the first earphone 10' and the second earphone 10" are prone to be reversely connected to electrodes of the charging case 20. Consequently, circuits and/or components (referred to as next circuits below) that are of the first earphone 10' and the second earphone 10" and that are connected after the contacts are damaged.

Therefore, an anti-reverse connection solution is provided for the earphone assembly 100 in this application, to avoid component damage when the first earphone 10' and the second earphone 10" are placed in the case at incorrect positions, so as to extend a service life of the earphone assembly 100.

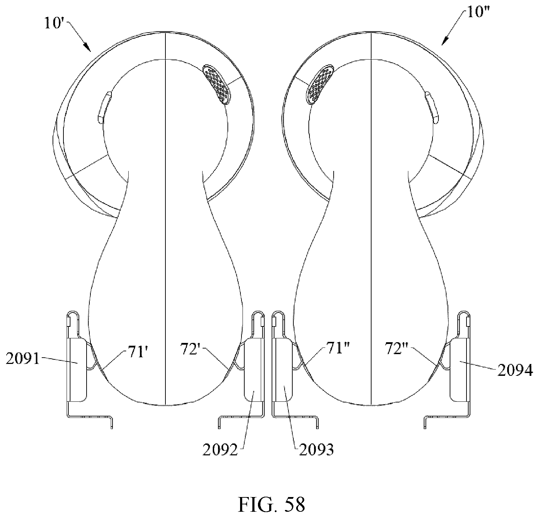

Refer to FIG. 46 and FIG. 58. FIG. 58 is a diagram of a partial structure of the earphone assembly 100 shown in FIG. 46.

In some embodiments, when the first earphone 10' is placed in the first earphone slot 20a, the earbud 10a' of the first earphone 10' is placed in the first top slot 2013, the stem 10b" of the first earphone 10' is placed in the first bottom slot 2014, the second earphone 10" is placed in the second earphone slot 20b, the earbud 10a" of the second earphone 10" is placed in the second top slot 2015, and the stem 10b" of the second earphone 10" is placed in the second bottom slot 2016, the first earphone 10' and the second earphone 10" are correctly placed in the charging case 20.

The first earphone 10' includes a first contact 71' and a second contact 72' that are disposed at an interval, and both the first contact 71' of the first earphone 10' and the second contact 72' of the first earphone 10' are fastened to the housing 1' of the first earphone 10', and are exposed relative to the housing 1' of the first earphone 10'. The second earphone 10" includes a first contact 71" and a second contact 72" that are disposed at an interval, and both the first contact 71" of the second earphone 10" and the second contact 72" of the second earphone 10" are fastened to the housing 1" of the second earphone 10", and are exposed relative to the housing 1" of the second earphone 10". A polarity of the first contact 71" of the second earphone 10" is the same as a polarity of the first contact 71' of the first earphone 10', and a polarity of the second contact 72" of the second earphone 10" is the same as a polarity of the second contact 72' of the first earphone 10'. The housing 1' of the first earphone 10' and the housing 1" of the second earphone 10" are of mutually symmetric structures, the first contact 71' of the first earphone 10' is symmetrically disposed with the second contact 72" of the second earphone 10", and the second contact 72' of the first earphone 10' is symmetrically disposed with the first contact 71" of the second earphone 10". When the first earphone 10' and the second earphone 10" are correctly placed in the charging case 20, the polarities of the plurality of contacts of the first earphone 10' and the second earphone 10" are sequentially arranged as positive, negative, positive, and negative, or negative, positive, negative, and positive.

For example, in the charging case 20, a polarity of the first electrode 2091 is the same as a polarity of the third electrode 2093, and a polarity of the second electrode 2092 is the same as a polarity of the fourth electrode 2094. That is, the polarities of the first electrode 2091 to the fourth electrode 2094 of the charging case 20 are sequentially arranged as positive, negative, positive, and negative, or negative, positive, negative, and positive.

When the first earphone 10' and the second earphone 10" are correctly placed in the charging case 20, the first contact 71' of the first earphone 10' is in contact with the first electrode 2091, the second contact 72' of the first earphone 10' is in contact with the second electrode 2092, the first contact 71" of the second earphone 10" is in contact with the third electrode 2093, and the second contact 72" of the second earphone 10" is in contact with the fourth electrode 2094. In this case, the polarities of the contacts of the first earphone 10' and the second earphone 10" correspond to the polarities of the plurality of electrodes of the charging case 20, there is a correct connection, and the first earphone 10' and the second earphone 10" can normally communicate with the charging case 20 and be charged.

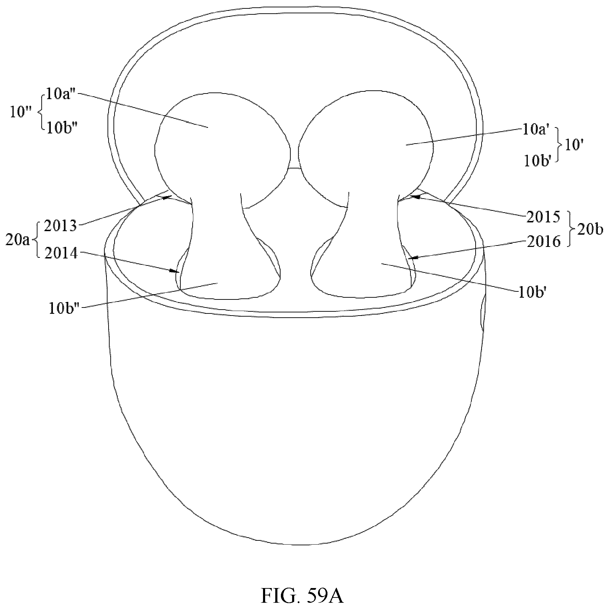

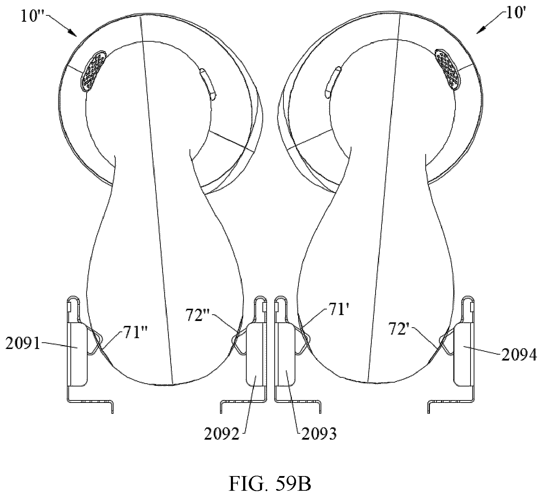

Refer to FIG. 59A and FIG. 59B. FIG. 59A is a diagram of a structure of the earphone assembly 100 shown in FIG. 46 in another use state, and FIG. 59B is a diagram of a partial structure of the earphone assembly 100 shown in FIG. 59A.

When the first earphone 10' is placed in the second earphone slot 20b, the earbud 10a' of the first earphone 10' is placed in the second top slot 2015, the stem 10b' of the first earphone 10' is placed in the second bottom slot 2016, the second earphone 10" is placed in the first earphone slot 20a, the earbud 10a" of the second earphone 10" is placed in the first top slot 2013, and the stem 10b" of the second earphone 10" is placed in the first bottom slot 2014, the first earphone 10' and the second earphone 10" are incorrectly placed in the charging case 20. This is a case in which the two earphones are reversely placed.

In this case, the first contact 71" of the second earphone 10" is in contact with the first electrode 2091, the second contact 72" of the second earphone 10" is in contact with the second electrode 2092, the first contact 71' of the first earphone 10' is in contact with the third electrode 2093, and the second contact 72' of the first earphone 10' is in contact with the fourth electrode 2094. The polarities of the contacts of the first earphone 10' and the second earphone 10" still correspond to the polarities of the plurality of electrodes of the charging case 20, and there is a correct connection. Therefore, damage to the next circuits of the first earphone 10' and the second earphone 10" can be effectively avoided.

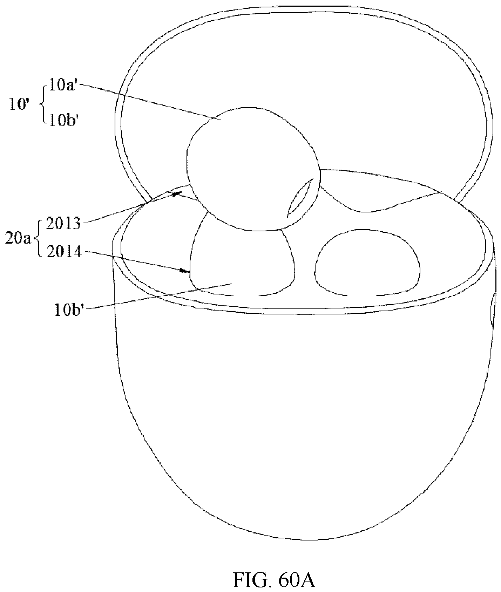

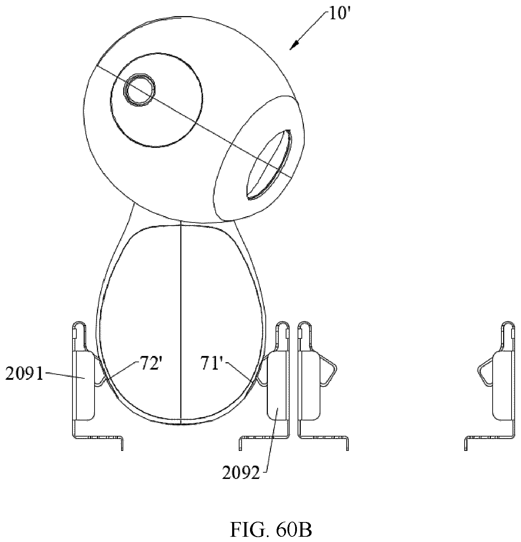

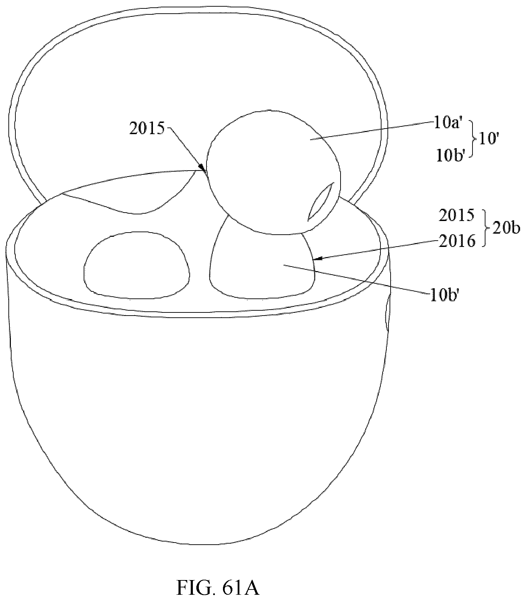

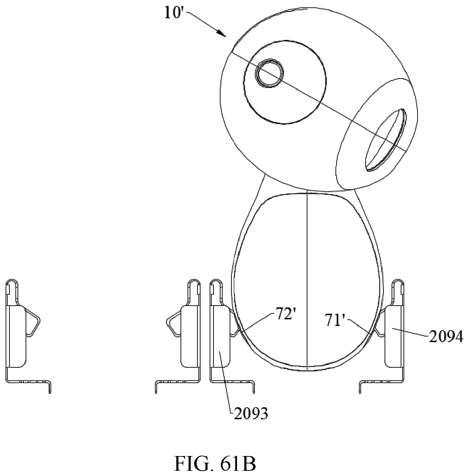

Refer to FIG. 60A to FIG. 61B. FIG. 60A is a diagram of a structure of the earphone assembly 100 shown in FIG. 46 in another use state, FIG. 60B is a diagram of a partial structure of the earphone assembly 100 shown in FIG. 60A, FIG. 61A is a diagram of a structure of the earphone assembly 100 shown in FIG. 46 in another use state, and FIG. 61B is a diagram of a partial structure of the earphone assembly 100 shown in FIG. 61A.

As shown in FIG. 60A and FIG. 60B, when the first earphone 10' is placed in the first earphone slot 20a, the stem 10b' of the first earphone 10' is placed in the first bottom slot 2014, and the earbud 10a' of the first earphone 10' faces away from the first top slot 2013, the first earphone 10' is incorrectly placed in the charging case 20. This is a case in which reverse placement is implemented through rotation. In this case, the first contact 71' of the first earphone 10' is in contact with the second electrode 2092, the second contact 72' of the first earphone 10' is in contact with the first electrode 2091, the polarities of the contacts of the first earphone 10' are opposite to the polarities of the plurality of electrodes of the charging case 20, and a reverse connection occurs.

As shown in FIG. 61A and FIG. 61B, when the first earphone 10' is placed in the second earphone slot 20b, the stem 10b' of the first earphone 10' is placed in the second bottom slot 2016, and the earbud 10a' of the first earphone 10' faces away from the second top slot 2015, the first earphone 10' is incorrectly placed in the charging case 20. This is a case in which reverse placement is implemented through rotation. In this case, the first contact 71' of the first earphone 10' is in contact with the fourth electrode 2094, the second contact 72' of the first earphone 10' is in contact with the third electrode 2093, the polarities of the contacts of the first earphone 10' are opposite to the polarities of the plurality of electrodes of the charging case 20, and a reverse connection occurs.

In the foregoing two cases of reverse connection, an anti-reverse connection circuit may be disposed in the first earphone 10' and the second earphone 10" in the earphone assembly 100. The anti-reverse connection circuit is connected in series between the first contact or the second contact and a charging circuit. The anti-reverse connection circuit is configured to: be turned on when the first earphone 10' or the second earphone 10" is correctly connected to the charging case 20, and be turned off when the first earphone 10' or the second earphone 10" is reversely connected to the charging case 20, to effectively avoid damage to the next circuits of the first earphone 10' and the second earphone 10" when the first earphone 10' or the second earphone 10" is incorrectly placed in the charging case 20. The anti-reverse connection circuit may include one or more of devices such as a MOS transistor, a resistor, a capacitor, a diode, and a magnetic bead. The MOS transistor is a metal-oxide semiconductor field-effect transistor, which is briefly referred to as a metal-oxide semiconductor field-effect transistor (Metal-Oxide Semiconductor Field-Effect Transistor, MOSFET).

A design solution of the anti-reverse connection circuit of the first earphone 10' is described below by using an example. The anti-reverse connection circuit of the second earphone 10" is the same as or similar to the anti-reverse connection circuit of the first earphone 10'. Details are not described below.

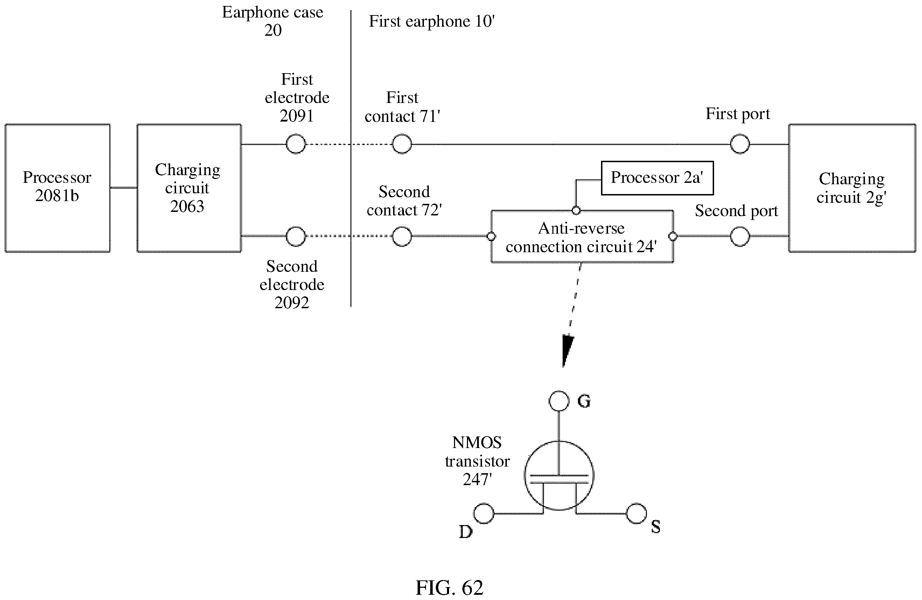

Refer to FIG. 62. FIG. 62 is a diagram of some circuits of the earphone assembly 100 shown in FIG. 46 in some embodiments.

In some embodiments, the charging case 20 further includes a charging circuit 2063, and the charging circuit 2063 is electrically connected to the first electrode 2091 and the second electrode 2092. In the first earphone 10', the first earphone 10' includes an anti-reverse connection circuit 24' and a charging circuit 2g', the anti-reverse connection circuit 24' is connected in series between the second contact 72' and the charging circuit 2g', and the anti-reverse connection circuit 24' is configured to be turned on when the first contact 71' is in contact with the first electrode 2091 and the second contact 72' is in contact with the second electrode 2092, and is further configured to be turned off when the first contact 71' is in contact with the second electrode 2092 and the second contact 72' is in contact with the first electrode 2091. For example, the first contact 71' of the first earphone 10' is electrically connected to a first port of the charging circuit 2g', and the second contact 72' is electrically connected to a second port of the charging circuit 2g' by using the anti-reverse connection circuit 24'.

In this embodiment, the anti-reverse connection circuit 24' is turned on when the first earphone 10' is correctly connected to the charging case 20, and is turned off when the first earphone 10' is reversely connected to the charging case 20, to effectively avoid a case in which the next circuit is damaged when the first earphone 10' is incorrectly placed in the charging case 20.

The anti-reverse connection circuit 24' may be turned on or off when the first contact 71' is in contact with the third electrode 2093 and the second contact 72' is in contact with the fourth electrode 2094. The anti-reverse connection circuit 24' is turned off when the first contact 71' is in contact with the fourth electrode 2094 and the second contact 72' is in contact with the third electrode 2093.

For example, a processor 2a' of the first earphone 10' is electrically connected to the anti-reverse connection circuit 24', and the processor 2a' is configured to control a working state of the anti-reverse connection circuit 24'. The processor 2a' may send an enable signal to the anti-reverse connection circuit 24'. The enable signal indicates the anti-reverse connection circuit 24' to work.

The anti-reverse connection circuit 24' may include an NMOS transistor 247', one end of the NMOS transistor 247' is electrically connected to the second contact 72', and the other end of the NMOS transistor 247' is electrically connected to the second port of the charging circuit 2g'. A drain (namely, drain, D) of the NMOS transistor 247' is electrically connected to the second contact 72', a source (namely, source, S) of the NMOS transistor 247' is electrically connected to the second port of the charging circuit 2g', and a gate (namely, gate, G) of the NMOS transistor 247' may be electrically connected to the processor 2a'. When the first earphone 10' is correctly connected to the charging case 20, Vgs of the NMOS transistor 247' is greater than Vth, and the NMOS transistor 247' is turned on. When the first earphone 10' is reversely connected to the charging case 20, Vgs of the NMOS transistor 247' is less than Vth, and the NMOS transistor 247' is turned off. In some other embodiments, a third port 244' is not connected to the processor 2a', but is connected to another circuit or power supply. This is not strictly limited in this embodiment of this application.

An equivalent circuit of the NMOS transistor 247' may include a MOS transistor part, a parasitic capacitor, and a body diode that are connected in parallel.

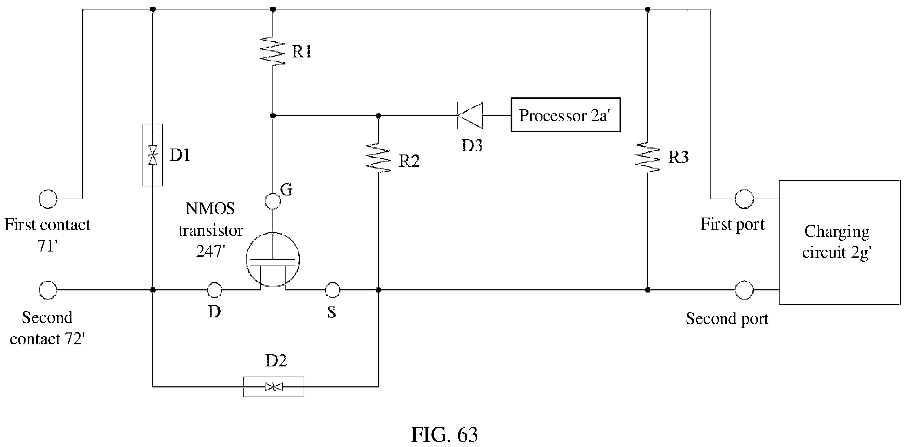

Refer to FIG. 63. FIG. 63 is a diagram of some circuits of the first earphone 10' shown in FIG. 62 in some other embodiments. The first earphone 10' in this embodiment may include most technical features of the first earphone 10' corresponding to FIG. 62. Same content of the two earphones is not described. The following mainly describes a difference between the two earphones.

In some embodiments, the first earphone 10' may further include a first resistor R1 and a second resistor R2, and the first resistor R1 and the second resistor R2 form a voltage divider circuit. The first resistor R1 and the second resistor R2 are connected in series between the first contact 71' and the second contact 72', and the gate G of the NMOS transistor 247' is further electrically connected between the first resistor R1 and the second resistor R2. When the first earphone 10' is correctly connected to the charging case 20, a first voltage (for example, 5 V) exists between the first contact 71' and the second contact 72', and the first resistor R1 and the second resistor R2 perform voltage division, so that a voltage exists at the gate G of the NMOS transistor 247', and the NMOS transistor 247' is turned on.

In some use scenarios, the first earphone 10' is correctly placed in the first earphone slot 20a in the charging case 20. When in-case presence detection is performed by using the first contact 71' and the second contact 72', a detection voltage exists between the first contact 71' and the second contact 72', and the first resistor R1 and the second resistor R2 perform voltage division, so that a voltage exists at the gate G of the NMOS transistor 247', and the NMOS transistor 247' is turned on. When the first earphone 10' communicates with the charging case 20, if the charging case 20 outputs a signal 1 (a high level), the first resistor R1 and the second resistor R2 perform voltage division, so that a voltage exists at the gate G of the NMOS transistor 247', and the NMOS transistor 247' is turned on; or if the charging case 20 outputs a signal 0 (a low level), the processor 2a' outputs the enable signal, so that a voltage exists at the gate G of the NMOS transistor 247', and the NMOS transistor 247' is turned on. When the charging case 20 charges the first earphone 10', a charging voltage exists between the first contact 71' and the second contact 72', and the first resistor R1 and the second resistor R2 perform voltage division, so that a voltage exists at the gate G of the NMOS transistor 247', and the NMOS transistor 247' is turned on.

Resistance values of the first resistor R1 and the second resistor R2 may be equal or may not be equal, and may be set based on a requirement in a specific case. This is not strictly limited in this embodiment of this application.

In some embodiments, the first earphone 10' may further include a third resistor R3, two ends of the third resistor R3 are respectively electrically connected to the first port and the second port of the charging circuit 2g', and the third resistor R3 is configured to implement impedance matching. In some other embodiments, the third resistor R3 may not be disposed on the first earphone 10'. This is not strictly limited in this embodiment of this application.

In some embodiments, the first earphone 10' may further include a first transient voltage suppressor D1 and/or a second transient voltage suppressor D2, two ends of the first transient voltage suppressor D1 are respectively electrically connected to the first contact 71' and the second contact 72', and two ends of the second transient voltage suppressor D2 are respectively electrically connected to the drain D and the source S of the NMOS transistor 247'. The transient voltage suppressor (Transient Voltage Suppressor, TVS) is a highly efficient protection device in a form of a diode. In this embodiment, the first transient voltage suppressor D1 and the second transient voltage suppressor D2 are disposed to prevent the first earphone 10' from generating static electricity, so as to improve reliability and user experience. In some other embodiments, the first transient voltage suppressor D1 and/or the second transient voltage suppressor D2 may not be disposed on the first earphone 10'. This is not strictly limited in this embodiment of this application.

In some embodiments, the first earphone 10' may further include a diode D3, a positive electrode of the diode D3 is connected to the processor 2a', and a negative electrode is connected to the gate G of the NMOS transistor 247', to prevent a voltage from flowing back into the processor 2a', and lower a risk that the processor 2a' is damaged. In some other embodiments, the diode D3 may not be disposed on the first earphone 10'. This is not strictly limited in this embodiment of this application.

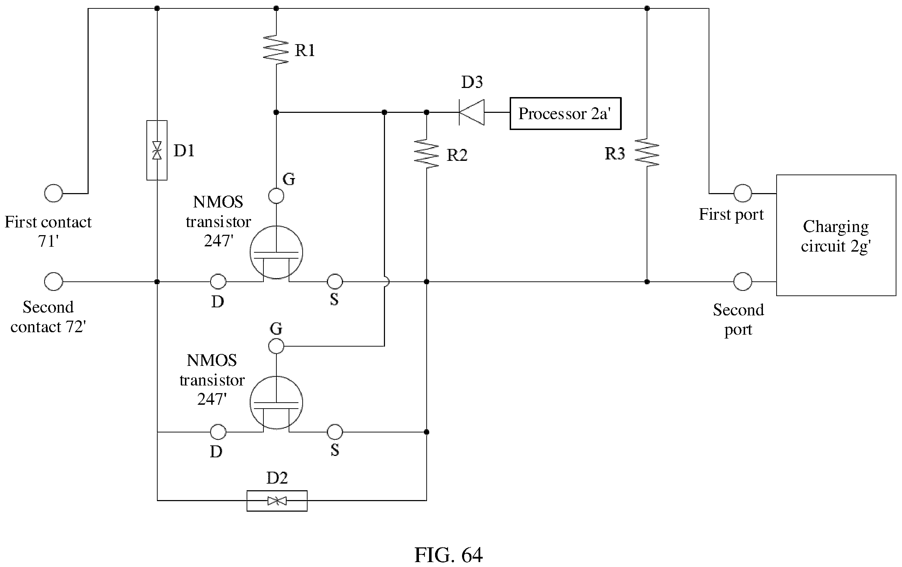

Refer to FIG. 64. FIG. 64 is a diagram of some circuits of the first earphone 10' shown in FIG. 62 in some other embodiments. The first earphone 10' in this embodiment may include most technical features of the first earphone 10' corresponding to FIG. 63. Same content of the two earphones is not described. The following mainly describes a difference between the two earphones.

In some embodiments, the anti-reverse connection circuit 24' may include a plurality of NMOS transistors 247' connected in parallel, to reduce impedance and increase a through current, so as to improve charging efficiency. In addition, a risk that the NMOS transistor 247' is damaged can be lowered. In FIG. 64, an example in which the anti-reverse connection circuit 24' includes two NMOS transistors 247' is used for illustration. In some other embodiments, the anti-reverse connection circuit 24' may alternatively include three or more NMOS transistors 247'.

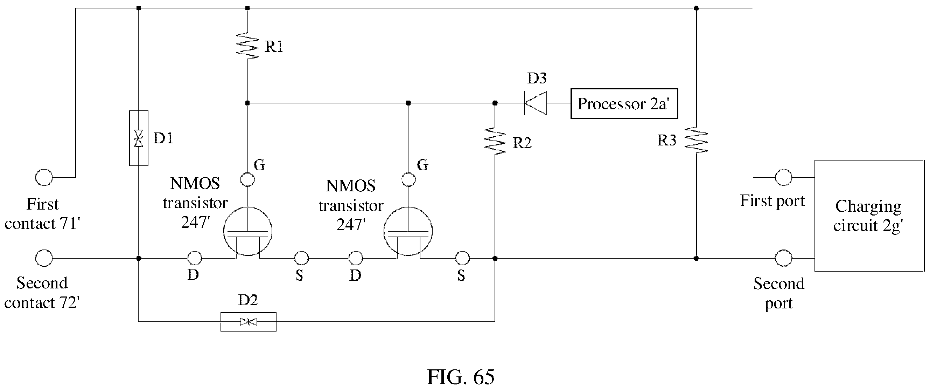

Refer to FIG. 65. FIG. 65 is a diagram of some circuits of the first earphone 10' shown in FIG. 62 in some other embodiments. The first earphone 10' in this embodiment may include most technical features of the first earphone 10' corresponding to FIG. 63. Same content of the two earphones is not described. The following mainly describes a difference between the two earphones.

In some embodiments, the anti-reverse connection circuit 24' may include a plurality of NMOS transistors 247' connected in series. In this case, reliability of the anti-reverse connection circuit 24' is high, to effectively prevent a risk that the next circuit of the first earphone 10' is damaged when the first earphone 10' is reversely connected to the charging case 20.

In the embodiments shown in FIG. 62 to FIG. 65, a first port of the first earphone 10' may be an input port (IN), the polarity of the first contact 71' is positive, a second port is an output port (OUT), and the polarity of the second contact 72' is negative. Correspondingly, the polarity of the first electrode 2091 of the charging case 20 is positive, and the polarity of the second electrode 2092 is negative. Alternatively, a first port of the first earphone 10' may be an output port (OUT), the polarity of the first contact 71' is negative, a second port is an input port (IN), and the polarity of the second contact 72' is positive. Correspondingly, the polarity of the first electrode 2091 of the charging case 20 is negative, and the polarity of the second electrode 2092 is positive.

In some other embodiments, the anti-reverse connection circuit 24' may alternatively be connected in series between the first contact 71' and the first port of the charging circuit 2g'. That is, the first contact 71' of the first earphone 10' is electrically connected to the first port of the charging circuit 2g' by using the anti-reverse connection circuit 24', and the second contact 72' is electrically connected to the output port of the charging circuit 2g'. In this case, in the circuit of the first earphone 10', the drain D of the NMOS transistor 247' is electrically connected to the first contact 71', and the source S of the NMOS transistor 247' is electrically connected to the first port of the charging circuit 2g'. For another circuit structure, refer to the related descriptions in the foregoing embodiments. Details are not described herein.

In the foregoing embodiment, the anti-reverse connection circuit 24' may further cooperate with software of the earphone, to ensure that when the first earphone 10' and the second earphone 10" are correctly connected to the charging case 20, normal communication and charging can be performed, and when the first earphone 10' and the second earphone 10" are reversely connected to the charging case 20, a component such as the charging circuit 2g' of the charging case 20 and the next circuit such as the charging circuit 2g' of the earphone are protected, so as to improve reliability of the earphone assembly 100.

In some embodiments, an anti-reverse connection function is enabled by default for software of the first earphone 10' and the second earphone 10". That is, the processor 2a' sends the enable signal to the anti-reverse connection circuit 24' by default, so that the anti-reverse connection circuit 24' is in the working state. In this case, when the first earphone 10' and the second earphone 10" are correctly connected to the charging case 20, charging and communication can be implemented; and when the first earphone 10' and the second earphone 10" are reversely connected to the charging case 20, the next circuits of the first earphone 10' and the second earphone 10" are normal.

In some other embodiments, an anti-reverse connection function is not enabled by default for software of the first earphone 10' and the second earphone 10", but the anti-reverse connection function is enabled in some scenarios. For example, the first earphone 10' and the second earphone 10" may determine, based on an in-case/out-case presence detection status, whether to enable the anti-reverse connection function. For example, the first earphone 10' includes an in-case presence detection component (for example, a Hall sensor), the in-case presence detection component is electrically connected to the processor 2a', the in-case presence detection component is configured to detect whether the first earphone 10' is accommodated in the first earphone slot 20a in the charging case 20, and the processor 2a' is configured to control the anti-reverse connection circuit 24' to work when the first earphone 10' is accommodated in the first earphone slot 20a. The first earphone 10' and the second earphone 10" may further determine, based on other status changes of the earphone, including but not limited to changes of status registers such as a sensor and the charging circuit 2g', whether to enable the anti-reverse connection function.

To prevent failure or low accuracy of software control of the first earphone 10' and the second earphone 10" in some use scenarios, the anti-reverse connection function may be enabled by default in some scenarios. For example, when the first earphone 10' is powered off or a battery level of the first earphone 10' is insufficient, the anti-reverse connection function is enabled by default. In this case, reliability of the first earphone 10' and the second earphone 10" is higher.

In some embodiments, working states of charging circuits 2g' of the first earphone 10' and the second earphone 10" may be controlled, to ensure that when the first earphone 10' and the second earphone 10" are correctly connected to the charging case 20, normal communication and charging can be performed, and when the first earphone 10' and the second earphone 10" are reversely connected to the charging case 20, the next circuits are not damaged, so as to improve reliability of the earphone assembly 100.

For example, in the first earphone 10', the first earphone 10' may include the processor 2a', the charging circuit 2g', and the in-case presence detection component. The processor 2a' is electrically connected to the charging circuit 2g' and the in-case presence detection component, the charging circuit 2g' is electrically connected to the first contact 71' and the second contact 72', the in-case presence detection component is configured to detect whether the first earphone 10' is accommodated in the first earphone slot 20a, and the processor 2a' is configured to control the charging circuit 2g' to work when the first earphone 10' is accommodated in the first earphone slot 20a. Herein, "the first earphone 10' is accommodated in the first earphone slot 20a" means that the first earphone 10' is placed in the first earphone slot 20a in a correct posture, and the first earphone 10' is correctly connected to the charging case 20.

The in-case presence detection component may include a Hall sensor. The first earphone 10' may determine, by determining a relationship between a detected value of the Hall sensor and a specified range, whether the earphone is placed in the case in a correct posture. For example, when the first earphone 10' is placed in the case in a correct posture, the detected value of the Hall sensor falls within the specified range; or when the first earphone 10' is placed in the case in an incorrect posture (for example, is rotated or is not completely placed in place), the detected value of the Hall sensor falls outside the specified range. In some other embodiments, specific composition and a detection manner of the in-case presence detection component and a determining manner of the processor 2a' may alternatively have other implementations. This is not strictly limited in this embodiment of this application.

Similarly, in the second earphone 10", the second earphone 10" may include a processor 2a", a charging circuit 2g", and an in-case presence detection component. The processor 2a" is electrically connected to the charging circuit 2g" and the in-case presence detection component, the charging circuit 2g" is electrically connected to the first contact 71" and the second contact 72", the in-case presence detection component is configured to detect whether the second earphone 10" is accommodated in the second earphone slot 20b, and the processor 2a" is configured to control the charging circuit 2g" to work when the second earphone 10" is accommodated in the second earphone slot 20b.

In some embodiments, as shown in FIG. 62, the charging case 20 includes a processor 2081b and the charging circuit 2063, the processor 2081b is electrically connected to the charging circuit 2063, and the charging circuit 2063 is electrically connected to the first electrode 2091 and the second electrode 2092. The processor 2081b of the charging case 20 may be integrated into the main control chip 2081a. For example, the processor 2081b may be configured to: when the first earphone 10' is accommodated in the first earphone slot 20a, obtain the battery level of the first earphone 10' through the charging circuit 2063, the first electrode 2091, and the second electrode 2092, and when the battery level of the first earphone 10' is less than or equal to a threshold, control the charging circuit 2063 to charge the first earphone 10'.

A working mode of the charging circuit includes a communication mode and a charging mode, and the two modes are time-division multiplexed. In some use scenarios, after the charging case 20 is opened, the charging circuit 2063 is in the communication mode, and the processor 2081b continuously performs polling through the charging circuit 2063, to detect whether the first earphone 10' is placed in the case. After detecting that the first earphone 10' is placed in the case, the processor 2081b obtains the battery level of the first earphone 10' through the charging circuit 2063, and determines whether the first earphone 10' needs to be charged. When the battery level of the first earphone is less than or equal to the threshold, the processor 2081b determines that the first earphone 10' needs to be charged, and controls the charging circuit 2063 to switch to the charging mode and charge the first earphone 10'. After charging is performed for a specific time, the processor 2081b controls the charging circuit 2063 to switch to the communication mode, reads the battery level of the first earphone 10' again, and determines whether to continue charging the first earphone 10'. This is repeated for one or more times. When the processor 2081b determines that the first earphone 10' is fully charged, charging is stopped. When determining that the battery level of the first earphone 10' is sufficient (for example, greater than 90%), or a voltage of the first earphone 10' is sufficient, the processor 2081b may control the charging circuit 2063 to reduce a charging current.

In this embodiment, a dual-contact solution is used for the first earphone 10', and a dual-electrode solution is correspondingly used for the charging case 20. Therefore, in a working process of the assembly 100 of the first earphone 10', the two contacts of the first earphone 10' and the two electrodes of the charging case 20 are switched between the communication mode and the charging mode. In some other embodiments, the first earphone 10' may alternatively have three contacts, where one contact is used as a shared ground, another contact is used for communication, and the last contact is used for charging, and the electrodes of the charging case 20 are correspondingly disposed. In this case, the communication mode and the charging mode may be simultaneously run in the assembly 100 of the first earphone 10', and charging efficiency is high.

The foregoing descriptions correspond to a communication and charging process between the charging case 20 and the first earphone 10'. A communication and charging process between the charging case 20 and the second earphone 10" is the same as or similar to the communication and charging process between the charging case 20 and the second earphone 10". Details are not described herein. There may be two charging circuits 2063, one is connected to the first electrode 2091 and the second electrode 2092, and the other is connected to the third electrode 2093 and the fourth electrode 2094. In some other embodiments, there may alternatively be one charging circuit 2063, and the charging circuit 2063 is connected to the first electrode 2091, the second electrode 2092, the third electrode 2093, and the fourth electrode 2094.

The foregoing embodiments are merely used to describe some technical solutions of this application, but are not intended to limit the technical solutions. Although this application is described in detail with reference to the foregoing embodiments, persons of ordinary skill in the art should understand that provided that no conflict occurs, they may still make modifications to the technical solutions described in the foregoing embodiments, make equivalent replacements to some technical features thereof, or combine the technical solutions described in different embodiments, without departing from the scope of the technical solutions of embodiments of this application.

**Claims**

1. An earphone, comprising a housing, a speaker, a main circuit board, and a battery, wherein all of the speaker, the main circuit board, and the battery are mounted in the housing, the main circuit board is located between the speaker and the battery, and the main circuit board is disposed in an inclined manner relative to the speaker.

2. The earphone according to claim 1, wherein an included angle between a component arrangement plane of the main circuit board and a diaphragm plane of the speaker ranges from 10° to 60°.

3. The earphone according to claim 1, wherein the battery is disposed in an inclined manner relative to the main circuit board.

4. The earphone according to any one of claims 1 to 3, wherein the battery is a button battery.

5. The earphone according to any one of claims 1 to 4, wherein the housing comprises a main housing and a front housing, the front housing is fastened on a front side of the main housing, internal space of the front housing communicates with internal space of the main housing, and when the earphone is being worn, the front housing faces a user ear; and
the main housing comprises a first end that is in contact with the front housing and a second end that is far away from the front housing, and in a direction from the first end to the second end of the main housing, an outer contour of the main housing first shrinks and then expands.

6. The earphone according to claim 5, wherein the internal space of the main housing comprises top space, middle space, and bottom space, the top space of the main housing is close to the first end of the main housing, and the bottom space of the main housing is close to the second end of the main housing; and
the speaker is mounted in the internal space of the front housing and/or the top space of the main housing, the battery is mounted in the bottom space of the main housing, the main circuit board is mounted in the middle space of the main housing, and two ends of the main circuit board respectively extend to the top space of the main housing and the bottom space of the main housing.

7. The earphone according to claim 6, wherein the included angle between the component arrangement plane of the main circuit board and the diaphragm plane of the speaker ranges from 20° to 50°.

8. The earphone according to claim 6 or 7, wherein a cross-sectional area of the top space of the main housing is greater than a cross-sectional area of the middle space of the main housing, and a cross-sectional area of the bottom space of the main housing is greater than the cross-sectional area of the middle space of the main housing.

9. The earphone according to any one of claims 6 to 8, wherein the main housing comprises a main housing member and a sealing cover member, the main housing member has a first opening and a second opening that are disposed at an interval, and when the earphone is being worn, both the first opening and the second opening face the user ear; and the front housing is mounted at the first opening, the sealing cover member is mounted at the second opening, and the sealing cover member and a part of the main housing member jointly enclose the bottom space of the main housing.

10. The earphone according to any one of claims 6 to 8, wherein the main housing further comprises a main housing member, a sealing cover member, and a back cover member, the main housing member has a first opening, a second opening, and a third opening that are disposed at an interval, when the earphone is being worn, both the first opening and the second opening face the user ear, and the third opening faces away from the user ear, and the third opening is located between the first opening and the second opening; and the front housing is mounted at the first opening, the sealing cover member is mounted at the second opening, the sealing cover member and a part of the main housing member jointly enclose the bottom space of the main housing, the back cover member is mounted at the third opening, and the back cover member and a part of the main housing member jointly enclose the middle space of the main housing.

11. The earphone according to claim 9 or 10, wherein the main housing member is an integrally formed structural member.

12. The earphone according to any one of claims 9 to 11, wherein the main housing comprises an abutting end face, the abutting end face is located on the main housing member and is disposed around the first opening, and the abutting end face is in contact with the front housing; and the main housing member has a first projection on a plane on which the abutting end face is located, the sealing cover member has a second projection on the plane on which the abutting end face is located, and the first projection covers the second projection.

13. The earphone according to any one of claims 6 to 12, wherein the earphone further comprises a separation assembly, and the separation assembly is mounted in the top space of the main housing and is located between the speaker and the main circuit board; and internal space of the housing comprises a front cavity, a rear cavity, and a main board cavity, the front cavity is located between the front housing and the speaker, the rear cavity is located between the speaker and the separation assembly, and the main board cavity is located on a side that is of the separation assembly and that faces away from the speaker.

14. The earphone according to claim 13, wherein the separation assembly comprises one or more magnetic isolation members.

15. The earphone according to any one of claims 1 to 14, wherein between a bottom surface center point of the speaker and a center point of the battery, a spacing in a first direction ranges from 12 mm to 20 mm, and a spacing in a second direction ranges from 6 mm to 15 mm, the first direction is parallel to the diaphragm plane of the speaker, and the second direction is perpendicular to the first direction; or a spacing between a bottom surface center point of the speaker and a center point of the battery ranges from 10 mm to 30 mm.

16. The earphone according to any one of claims 1 to 15, wherein the main circuit board comprises a first end adjacent to the speaker and a second end adjacent to the battery; and the earphone further comprises a first flexible circuit board and a second flexible circuit board, the first flexible circuit board and the speaker are located on a same side of the main circuit board, the first flexible circuit board is electrically connected to the speaker and the first end of the main circuit board, the second flexible circuit board and the battery are located on a same side of the main circuit board, and the second flexible circuit board is electrically connected to the battery and the second end of the main circuit board.

17. The earphone according to claim 16, wherein the main circuit board is fixedly connected to the first flexible circuit board by using a BOF process, and the main circuit board is fixedly connected to the second flexible circuit board by using the BOF process.

18. An earphone assembly, comprising a charging case and the earphone according to any one of claims 1 to 17, wherein the charging case is configured to accommodate the earphone.

FIG. 1A

FIG. 1B

Cavum
conchae

10a
}10
10b

Antitragus

Tragus

Incisura
intertragica

10b

FIG. 2

FIG. 3

FIG. 4

10

Antenna — 64

Radio frequency front end — 2e

Radio frequency circuit — 2d

Speaker — 31
Third microphone — 34
Second microphone — 33
First microphone — 32

Audio processing circuit — 2c

Processor — 2a

Memory — 2b

Power management circuit — 2f

Main control chip — 211

Gravity sensor — 55
Hall sensor — 53
Proximity sensor — 51
Wearing detection sensor — 52
Touch sensor — 54

Charging circuit — 2g

Battery — 73

First contact — 71
Second contact — 72

FIG. 5

FIG. 6

EP 4 521 774 A1

FIG. 7

75

FIG. 8A

FIG. 8B

FIG. 9A

FIG. 9B

1

12

113

114

Top

Left ↔ Right

Bottom

11 { 113
114

FIG. 10A

1

12

1131

113a

113b

113c

1132

114

Top

Front ← → Rear

Bottom

11 { 113
114

113 { 113a
113b
113c

FIG. 10B

FIG. 11A

FIG. 11B

1

12

115

113

FIG. 11C

1

1131

12

113

1134

116

11 { 113
116

FIG. 11D

FIG. 12A

FIG. 12B

FIG. 13

FIG. 14

FIG. 15

FIG. 16

FIG. 17

FIG. 18

FIG. 19

411 { 4112 4113 4114   412 { 4121 4122   413 { 4131 4132

FIG. 20

42

4232  423  4231  424  4241  4262  422  4261  4212  421  4211  4213  425

4264  4263  4242  4215  4214  4213  4265  4266

FIG. 21

421

4213

4214

4215

FIG. 22

FIG. 23

FIG. 24

45

FIG. 25

FIG. 26

FIG. 27

FIG. 28

EP 4 521 774 A1

FIG. 29A

FIG. 29B

FIG. 30A

453
33
4513
222
4586
456
4512
451

FIG. 30B

31
E
315
E
313
316
319

FIG. 31A

FIG. 31B

EP 4 521 774 A1

31

315

317

316

3142

313

3182
3181
3183
318
3184
3185
3186

3146

3149

3184

3183

3148

3145
3143
314
3142
3146
3144

3147

319

3186

3185

FIG. 31C

FIG. 31D

FIG. 32A

FIG. 32B

FIG. 33A

FIG. 33B

FIG. 34A

FIG. 34B

FIG. 35

EP 4 521 774 A1

EP 4 521 774 A1

561

54

541    541    541

5612
5611

FIG. 36

54

541    541    541

561

5611
5612
5613

6

FIG. 37

56

564

561

563

565

FIG. 38

114

FIG. 39

FIG. 40

FIG. 41

FIG. 42

FIG. 43

FIG. 44

FIG. 45

EP 4 521 774 A1

100

10'

20a

20

10"

20b

FIG. 46

100

10'
12'
10a'
10b'
1' { 11'
      12' }

10"
12"
10a"
11"
12" } 1"
10b"

2053
202b
20
20c { 2021a
       2011a }
2023
201a
2013
2011a
2012a
2014
201b
2021
2022 } 202
2024
202a
2015
2011
2012 } 201
2016
2054
20a { 2013
       2014
       2023 }
20b { 2015
       2016
       2024 }

Height
direction

Width
direction

Thickness
direction

FIG. 47

FIG. 48A

20

202

202a

201a

20c

202b

201b

Height
direction

Thickness
direction

201

FIG. 48B

20

204

203

2051

2052

205 {
2051
2052
2053
2054
}

2011
2012 } 201

2053

2023     2025

2022

2026

2024

2054

2021
2022 } 202

FIG. 49

20

20a { 2013
     2014
     2023

2023

2013

201a

2051

2011

2073

2062

2071

2012

2092

201b

2014

2082

2072

2081

FIG. 50

20

204

203 { 20321
       20322

2061

2050

2062

102

2073

2071

2021

2022

2053

2012

2010

2020

2082a

2072

2082

2040

FIG. 51

FIG. 52

20

2021

202

2023

2023b

2023a

2043 204

2042

2033

2031

2041

2032c 2032a 2032

20321

20322

2032b

2032e

2032d

FIG. 53

2023

2032c

2032b

2031

2032e

2033    2032a

2032 { 2032a
       2032b
       2032c

FIG. 54

2042

2032c

2042

2032b

2031

FIG. 55

FIG. 56

FIG. 57

EP 4 521 774 A1

FIG. 58

FIG. 59A

FIG. 59B

FIG. 60A

10'

2091

72'

71'

2092

FIG. 60B

2015

10a'
10b' } 10'

2015
2016 } 20b

10b'

FIG. 61A

FIG. 61B

EP 4 521 774 A1

Earphone case
20

First earphone 10'

First
electrode
2091

First
contact 71'

First port

Processor
2081b

Charging
circuit
2063

Processor 2a'

Second
contact 72'

Second port

Charging
circuit 2g'

Anti-reverse
connection circuit 24'

Second
electrode
2092

G

NMOS
transistor
247'

D

S

FIG. 62

FIG. 63

FIG. 64

FIG. 65

# INTERNATIONAL SEARCH REPORT

| International application No. |
| --- |
| **PCT/CN2023/101199** |

| A. | CLASSIFICATION OF SUBJECT MATTER |
| --- | --- |
| | H04R1/10(2006.01)i |

According to International Patent Classification (IPC) or to both national classification and IPC

| B. | FIELDS SEARCHED |
| --- | --- |

Minimum documentation searched (classification system followed by classification symbols)

    IPC:H04R

Documentation searched other than minimum documentation to the extent that such documents are included in the fields searched

Electronic data base consulted during the international search (name of data base and, where practicable, search terms used)

    CNTXT; CNTXTC; ENTXT; DWPI; CNKI; IEEE: 扬声器, 喇叭, 电路, 电池, 倾斜, 平行, 耳机, 前壳, 主壳, 壳体, 分隔, 隔离, 振膜, Speaker, Horn, Circuit, Battery, Inclinat+, Parallel, Earphone, Front, Shell, Cas+, Hous+, Separat+, Isolat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 213368112 U (GUANGDONG OPPO MOBILE COMMUNICATIONS CO., LTD.) 04 June 2021 (2021-06-04)<br>description, pages 3-8, and figures 3 and 6 | 1-4, 15-18 |
| Y | CN 213368112 U (GUANGDONG OPPO MOBILE COMMUNICATIONS CO., LTD.) 04 June 2021 (2021-06-04)<br>description, pages 3-8, and figures 3 and 6 | 5-14 |
| Y | CN 210469710 U (AESONIC ELECTRONICS CO., LTD.) 05 May 2020 (2020-05-05)<br>description, page 2, and figures 1-2 | 5-14 |
| A | CN 114640915 A (GUANGZHOU HAIGE COMMUNICATION GROUP CO., LTD.) 17 June 2022 (2022-06-17)<br>entire document | 1-18 |
| A | CN 215734773 U (LUXSHARE ELECTRONIC TECHNOLOGY (KUNSHAN) LTD.) 01 February 2022 (2022-02-01)<br>entire document | 1-18 |
| A | US 2019098388 A1 (APPLE INC.) 28 March 2019 (2019-03-28)<br>entire document | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 September 2023** | **12 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/101199**

| Patent document cited in search report | | | Publication date (day/month/year) | Patent family member(s) | | | Publication date (day/month/year) |
|---|---|---|---|---|---|---|---|
| CN | 213368112 | U | 04 June 2021 | None | | | |
| CN | 210469710 | U | 05 May 2020 | None | | | |
| CN | 114640915 | A | 17 June 2022 | None | | | |
| CN | 215734773 | U | 01 February 2022 | TW | M624432 | U | 11 March 2022 |
| US | 2019098388 | A1 | 28 March 2019 | CN | 109561365 | A | 02 April 2019 |
| | | | | CN | 208849981 | U | 10 May 2019 |

Form PCT/ISA/210 (patent family annex) (July 2022)

**EP 4 521 774 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210705712

- CN 202211000419